(19) Europäisches Patentamt
European Patent Office
Office européen des brevets

(11) EP 3 560 967 A1

(12) **EUROPEAN PATENT APPLICATION**
published in accordance with Art. 153(4) EPC

(43) Date of publication:
**30.10.2019 Bulletin 2019/44**

(21) Application number: **17885701.7**

(22) Date of filing: **14.12.2017**

(51) Int Cl.:
***C08F 220/26*** *(2006.01)* ***C08F 220/38*** *(2006.01)*
***G02B 5/30*** *(2006.01)* ***G02F 1/1335*** *(2006.01)*

(86) International application number:
**PCT/JP2017/044935**

(87) International publication number:
**WO 2018/123622 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **26.12.2016 JP 2016252098**

(71) Applicant: **Zeon Corporation**
**Tokyo 100-8246 (JP)**

(72) Inventors:
- **SAKAMOTO Kei**
  **Tokyo 100-8246 (JP)**
- **OKUYAMA Kumi**
  **Tokyo 100-8246 (JP)**

(74) Representative: **Beckmann, Claus**
**Kraus & Weisert**
**Patentanwälte PartGmbB**
**Thomas-Wimmer-Ring 15**
**80539 München (DE)**

(54) **MIXTURE, POLYMER, OPTICAL FILM, OPTICALLY ANISOTROPIC BODY, POLARIZING SHEET, DISPLAY DEVICE, ANTIREFLECTIVE FILM, AND MANUFACTURING METHOD FOR MIXTURE**

(57) Provided is a means for efficiently producing a polymer usable in the preparation of an optical film, etc. having favorable reverse wavelength dispersibility. In a mixture, a content of a polymerizable compound (I) represented by the following Formula (I) is more than 0.2 times a content of a polymerizable compound (II) represented by the following Formula (II), where $Ar^1$ and $Ar^2$ are a predetermined ring group, $A^1$ to $A^4$ and $B^1$ to $B^4$ are a cyclic aliphatic group or an aromatic group that may have a substituent, $Z^1$ to $Z^4$, $Y^1$ to $Y^4$, and $L^1$ to $L^4$ are a predetermined group such as -O-, -C(=O)-O-, or -O-C(=O)-, $R^1$ to $R^6$ are a hydrogen atom, a methyl group, or a chlorine atom, one of e and f is an integer of 1 to 3 and the other one of e and f is an integer of 0 to 3, c, d, i, and j are an integer of 1 to 20, and a, b, g, and h are 0 or 1,

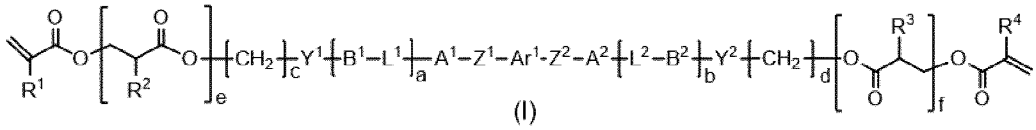

(I)

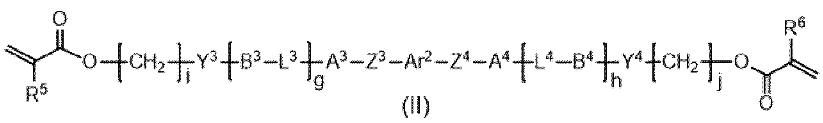

(II)

EP 3 560 967 A1

## Description

TECHNICAL FIELD

The present disclosure relates to an optical film and an optically anisotropic product capable of uniform polarized light conversion over a wide wavelength range, and a polarizing plate, a display device, and an antireflection film using the optically anisotropic product.

The present disclosure also relates to a polymer usable in the preparation of the optical film and the optically anisotropic product, and a mixture usable in the preparation of the polymer.

BACKGROUND

Retardation plates used in various devices such as flat panel display devices include quarter wavelength plates for converting linearly polarized light into circularly polarized light and half wavelength plates for converting the plane of vibration of linearly polarized light by 90 degrees. These retardation plates are capable of accurately providing a phase difference of $\lambda/4$ or $\lambda/2$ of the light wavelength for specific monochromatic light.

However, conventional retardation plates have a problem in that polarized light output through a retardation plate is converted into colored polarized light. A material forming the retardation plate has wavelength dispersibility for phase differences, and a distribution occurs in the polarization state of each wavelength for white light which is a composite wave in which light rays in the visible light range are mixed. This makes it impossible to adjust input light to polarized light of an accurate $\lambda/4$ or $\lambda/2$ phase difference in all wavelength regions.

To solve this problem, various wide band retardation plates capable of providing a uniform phase difference to light over a wide wavelength range, that is, retardation plates having reverse wavelength dispersibility, have been studied.

Meanwhile, with the functionality enhancement and widespread use of mobile information terminals such as mobile PCs and mobile phones, the need to reduce the thicknesses of flat panel display devices as much as possible has been growing. This has led to the demand for thinner retardation plates as their constituent members.

The most effective method for reducing the thicknesses of retardation plates in recent years is a method of producing a retardation plate by applying a polymerizable composition containing a low-molecular polymerizable compound to a film substrate to form an optical film. Hence, many polymerizable compounds capable of forming optical films having excellent reverse wavelength dispersibility or polymerizable compositions using such polymerizable compounds have been developed.

For example, PTL 1 and PTL 2 each propose a polymerizable compound and a polymerizable composition that are capable of forming an optical film having excellent reverse wavelength dispersibility, have a low melting point suitable for processing and are easy to be applied to a substrate, have a wide temperature range in which liquid crystallinity is exhibited, and can be synthesized at low cost.

CITATION LIST

Patent Literatures

PTL 1: WO 2014/010325 A1
PTL 2: JP 2015-200877 A

SUMMARY

(Technical Problem)

In the production of an optical film or an optically anisotropic product (hereafter also collectively referred to as "optical film, etc.") using a polymerizable compound, it is desirable to not only obtain an optical film, etc. having excellent reverse wavelength dispersibility but also improve productivity.

It could therefore be helpful to provide a means for efficiently producing a polymer usable in the preparation of an optical film, etc. capable of uniform polarized light conversion over a wide wavelength range.

(Solution to Problem)

As a result of extensive studies made to achieve the object stated above, the following fact has been discovered:

A polymer capable of forming an optical film, etc. having excellent reverse wavelength dispersibility can be produced efficiently by using a mixture containing a high proportion of a predetermined polymerizable compound represented by the following Formula (I), in particular, a mixture containing the predetermined polymerizable compound represented by the following Formula (I) and a predetermined polymerizable compound represented by the following Formula (II) at a predetermined ratio or a mixture containing two or more types of the predetermined polymerizable compound represented by the following Formula (I) and substantially not containing the predetermined polymerizable compound represented by the following Formula (II). The present disclosure is based on these discoveries.

The below-described mixture, polymer, optical film, optically anisotropic product, polarizing plate, display device, and antireflection film are thus provided.

[1] A mixture of two or more types of polymerizable compounds, wherein the mixture:

contains a polymerizable compound (I) represented by the following Formula (I) and a polymerizable compound (II) represented by the following Formula (II), a content of the polymerizable compound (I) being more than 0.2 times a content of the polymerizable compound (II) by mass; or

contains two or more types of the polymerizable compound (I) represented by the following Formula (I) and does not substantially contain the polymerizable compound (II) represented by the following Formula (II),

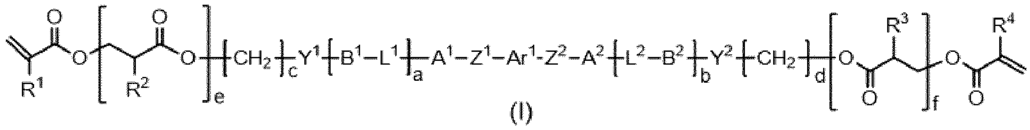

(I)

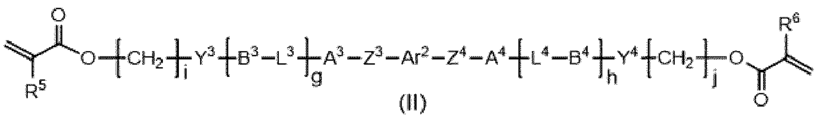

(II)

where $Ar^1$ and $Ar^2$ each independently represent a divalent aromatic hydrocarbon ring group having at least $D^1$ as a substituent or a divalent aromatic heterocyclic group having at least $D^1$ as a substituent,

$D^1$ represents an organic group with a carbon number of 1 to 67 having at least one aromatic ring selected from the group consisting of an aromatic hydrocarbon ring and an aromatic heterocyclic ring,

$Z^1$ to $Z^4$ each independently represent a single bond, -O-, $-O-CH_2-$, $-CH_2-O-$, -C(=O)-O-, -O-C(=O)-, -C(=O)-S-, -S-C(=O)-, $-NR^{21}-C(=O)-$, $-C(=O)-NR^{21}-$, $-CF_2-O-$, $-O-CF_2-$, $-CH_2-CH_2-$, $-CF_2-CF_2-$, $-O-CH_2-CH_2-O-$, -CH=CH-C(=O)-O-, -O-C(=O)-CH=CH-, $-CH_2-CH_2-C(=O)-O-$, $-O-C(=O)-CH_2-CH_2-$, $-CH_2-CH_2-O-C(=O)-$, $-C(=O)-O-CH_2-CH_2-$, -CH=CH-, -N=CH-, -CH=N-, $-N=C(CH_3)-$, $-C(CH_3)=N-$, -N=N-, or -C≡C-, and $R^{21}$ each independently represent a hydrogen atom or an alkyl group with a carbon number of 1 to 6,

$A^1$ to $A^4$ and $B^1$ to $B^4$ each independently represent a cyclic aliphatic group that may have a substituent or an aromatic group that may have a substituent,

$Y^1$ to $Y^4$ and $L^1$ to $L^4$ each independently represent a single bond, -O-, -C(=O)-, -C(=O)-O-, -O-C(=O)-, $-NR^{22}-C(=O)-$, $-C(=O)-NR^{22}-$, -O-C(=O)-O-, $-NR^{22}-C(=O)-O-$, $-O-C(=O)-NR^{22}-$, or $-NR^{22}-C(=O)-NR^{23}-$, and $R^{22}$ and $R^{23}$ each independently represent a hydrogen atom or an alkyl group with a carbon number of 1 to 6,

$R^1$ to $R^6$ each independently represent a hydrogen atom, a methyl group, or a chlorine atom,

a, b, g, and h each independently represent 0 or 1,

c, d, i, and j each independently represent an integer of 1 to 20,

one of e and f represents an integer of 1 to 3, and an other one of e and f represents an integer of 0 to 3, and in the case where a plurality of $R^2$ and $R^3$ are present, the plurality of $R^2$ and $R^3$ may be same or different.

[2] The mixture according to [1], wherein $Ar^1$ and $Ar^2$ are each independently a group represented by any of the following Formulas (III-1) to (III-3):

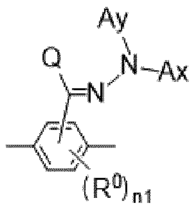

(III-1)

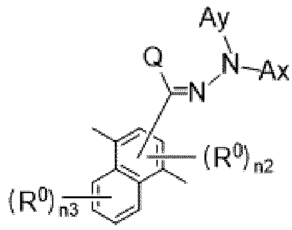

(III-2)

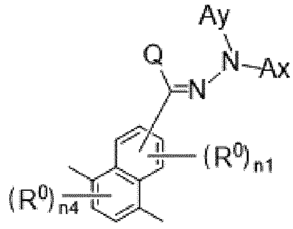

(III-3)

where Ax represents an organic group having at least one aromatic ring selected from the group consisting of an aromatic hydrocarbon ring with a carbon number of 6 to 30 and an aromatic heterocyclic ring with a carbon number of 2 to 30, and the aromatic ring of Ax may have a substituent,

Ay represents a hydrogen atom or an organic group with a carbon number of 1 to 30 that may have a substituent,

Q represents a hydrogen atom or an alkyl group with a carbon number of 1 to 6,

$R^0$ represents a halogen atom, a cyano group, an alkyl group with a carbon number of 1 to 6, an alkenyl group with a carbon number of 2 to 6, an alkyl halide group with a carbon number of 1 to 6, an N,N-dialkylamino group with a carbon number of 2 to 12, an alkoxy group with a carbon number of 1 to 6, a nitro group, -C(=O)-$R^a$, -C(=O)-O-$R^a$, or $SO_2R^a$, and $R^a$ represents an alkyl group with a carbon number of 1 to 6, or an aromatic hydrocarbon ring group with a carbon number of 6 to 20 that may have an alkyl group with a carbon number of 1 to 6 or an alkoxy group with a carbon number of 1 to 6 as a substituent,

n1 represents an integer of 0 to 3, n2 represents 0 or 1, n3 represents an integer of 0 to 4, and n4 represents an integer of 0 to 2, and

in the case where a plurality of $R^0$ are present, the plurality of $R^0$ may be same or different.

[3] The mixture according to [2], wherein $Ar^1$ and $Ar^2$ are each independently a group represented by any of the following Formulas (IV-1) to (IV-3) :

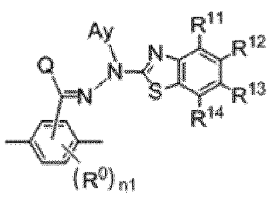

(IV-1)

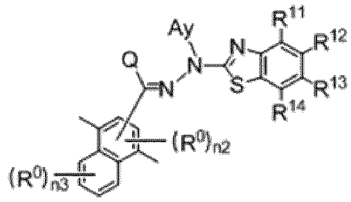

(IV-2)

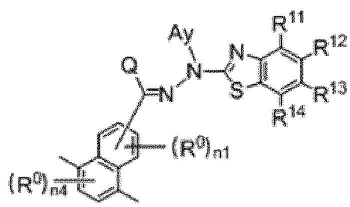

(IV-3)

where Ay, Q, $R^0$, n1, n2, n3, and n4 are as defined above, and

$R^{11}$ to $R^{14}$ each independently represent a hydrogen atom, a halogen atom, an alkyl group with a carbon number of 1 to 6, a cyano group, a nitro group, a fluoroalkyl group with a carbon number of 1 to 6, an alkoxy group with a carbon number of 1 to 6, or -C(=O)-O-$R^b$, $R^b$ represents an alkyl group with a carbon number of 1 to 20 that may have a substituent, an alkenyl group with a carbon number of 2 to 20 that may have a substituent, a cycloalkyl group with a carbon number of 3 to 12 that may have a substituent, or an aromatic hydrocarbon ring group with a carbon number of 5 to 12 that may have a substituent, and at least one of C-$R^{11}$ to C-$R^{14}$ forming a ring may be substituted by a nitrogen atom.

[4] The mixture according to [1], wherein $Ar^1$ and $Ar^2$ are each independently a group represented by any of the following Formulas (V-1) to (V-4):

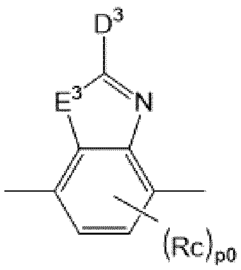 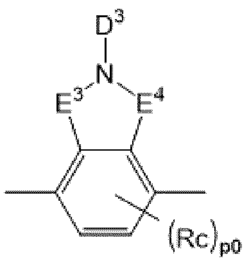 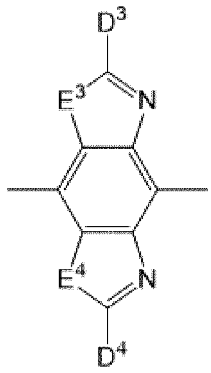 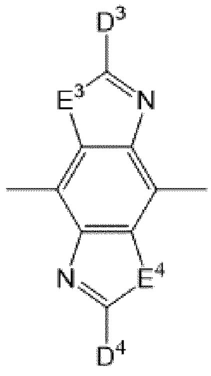

(V-1) (V-2) (V-3) (V-4)

where $E^3$ and $E^4$ each independently represent $-CR^{24}R^{25}-$, -S-, $-NR^{24}-$, -C(=O)-, or -O-, and $R^{24}$ and $R^{25}$ each independently represent a hydrogen atom or an alkyl group with a carbon number of 1 to 4,
Rc represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p0 represents an integer of 0 to 2,
$D^3$ and $D^4$ each independently represent an aromatic hydrocarbon ring group that may have a substituent or an aromatic heterocyclic group that may have a substituent, and
in the case where a plurality of Rc are present, the plurality of Rc may be same or different.

[5] The mixture according to [4], wherein $D^3$ and $D^4$ are each independently a group represented by any of the following Formulas (v-1) to (v-8):

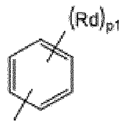 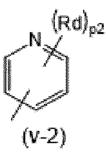 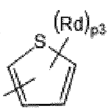 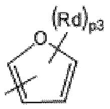 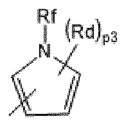 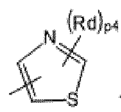 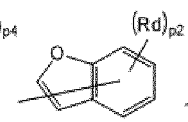 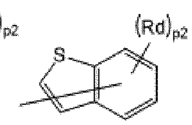

(v-1) (v-2) (v-3) (v-4) (v-5) (v-6) (v-7) (v-8)

where Rd represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p1 represents an integer of 0 to 5, p2 represents an integer of 0 to 4, p3 represents an integer of 0 to 3, and p4 represents an integer of 0 to 2,
Rf represents a hydrogen atom or a methyl group, and
in the case where a plurality of Rd are present, the plurality of Rd may be same or different.

[6] The mixture according to [4] or [5], wherein $Ar^1$ and $Ar^2$ are each independently a group represented by any of the following Formulas (VI-1) to (VI-5):

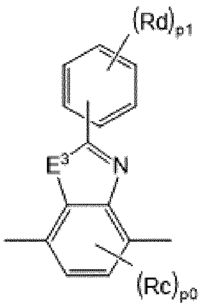 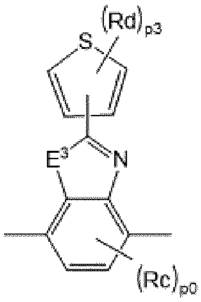 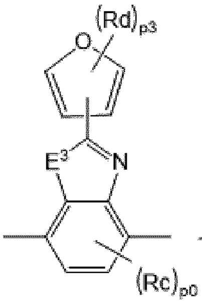 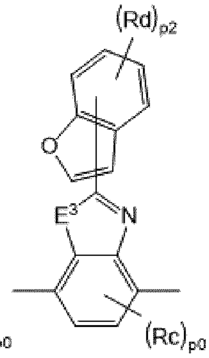 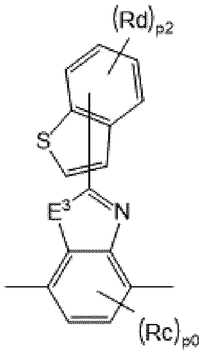

(VI-1) (VI-2) (VI-3) (VI-4) (VI-5)

where $E^3$, Rc, and p0 are as defined above,
Rd represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p1 represents an integer of 0 to 5, p2 represents an integer of 0 to 4, and p3 represents an integer of 0 to 3, and in the case where a plurality of Rc and Rd are present, the plurality of Rc and Rd may be same or different.

[7] A mixture containing a compound (Ia) represented by the following Formula (Ia) and a compound (IIa) represented by the following Formula (IIa),
wherein a content of the compound (Ia) is more than 0.2 times a content of the compound (IIa) by mass,

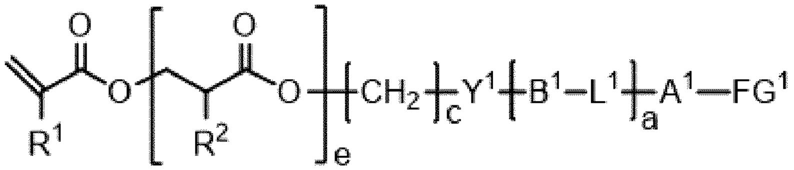

(I a)

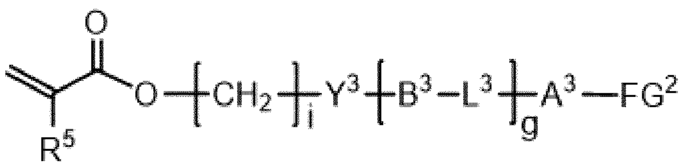

(I I a)

where $A^1$, $A^3$, $B^1$, and $B^3$ each independently represent a cyclic aliphatic group that may have a substituent or an aromatic group that may have a substituent,
$Y^1$, $Y^3$, $L^1$, and $L^3$ each independently represent a single bond, -O-, -C(=O)-, -C(=O)-O-, -O-C(=O)-, $-NR^{22}$-C(=O)-, -C(=O)-$NR^{22}$-, -O-C(=O)-O-, $-NR^{22}$-C(=O)-O-, -O-C(=O)-$NR^{22}$-, or $-NR^{22}$-C(=O)-$NR^{23}$-, and $R^{22}$ and $R^{23}$ each independently represent a hydrogen atom or an alkyl group with a carbon number of 1 to 6,
$R^1$, $R^2$, and $R^5$ each independently represent a hydrogen atom, a methyl group, or a chlorine atom,
$FG^1$ and $FG^2$ each independently represent a hydroxyl group, a carboxyl group, or an amino group,
a and g each independently represent 0 or 1,
c and i each independently represent an integer of 1 to 20,
e represents an integer of 1 to 3, and
in the case where a plurality of $R^2$ are present, the plurality of $R^2$ may be same or different.

[8] The mixture according to [7], wherein $FG^1$ and $FG^2$ are a hydroxyl group, and a and g are 0.
[9] The mixture according to [7], wherein $FG^1$ and $FG^2$ are a carboxyl group, and a and g are 1.

[10] A polymer obtainable by polymerization of the mixture according to any of [1] to [6].
[11] An optical film comprising the polymer according to [10] as a constituent material.
[12] An optically anisotropic product comprising a layer having the polymer according to [10] as a constituent material.
[13] A polarizing plate comprising: the optically anisotropic product according to [12]; and a polarizing film.
[14] A display device comprising the polarizing plate according to [13].
[15] An antireflection film comprising the polarizing plate according to [13].
[16] A production method for a mixture, the production method comprising a step of causing esterification reaction or amidation reaction between the mixture according to any of [7] to [9] and a compound represented by the following Formula (VII),

$$FG^a\text{-}Ar\text{-}FG^b \qquad (VII)$$

where Ar represents a divalent aromatic hydrocarbon ring group having at least D as a substituent or a divalent aromatic heterocyclic group having at least D as a substituent,
D represents an organic group with a carbon number of 1 to 67 having at least one aromatic ring selected from the group consisting of an aromatic hydrocarbon ring and an aromatic heterocyclic ring, or -C(=O)-$R^{26}$ , and $R^{26}$ represents a hydrogen atom or an alkyl group with a carbon number of 1 to 6, and
$FG^a$ and $FG^b$ each independently represent a hydroxyl group or a carboxyl group.

[17] A production method for a mixture, the production method comprising:

a step (A) of causing esterification reaction or amidation reaction between a compound represented by the following Formula (VII) and less than 2.0 equivalents of a compound (Ia) represented by the following Formula (Ia), a compound (IIa) represented by the following Formula (IIa), or the mixture according to any of [7] to [9]; and a step (B) of, after the step (A) and without aftertreatment, causing esterification reaction or amidation reaction between a reaction product of the step (A) and a different one of the compound (Ia) represented by the following Formula (Ia), the compound (IIa) represented by the following Formula (IIa), and the mixture according to any of [7] to [9] from the step (A),
wherein a total usage of the compound (Ia), the compound (IIa), and the mixture with respect to the compound represented by the following Formula (VII) is 2.0 equivalents or more and 3.0 equivalents or less,

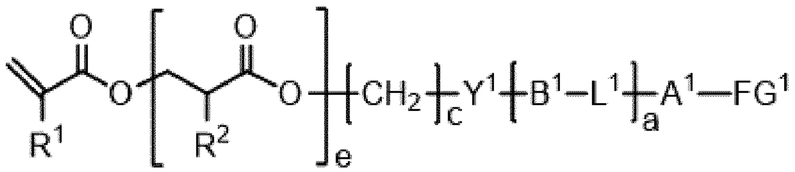
(Ia)

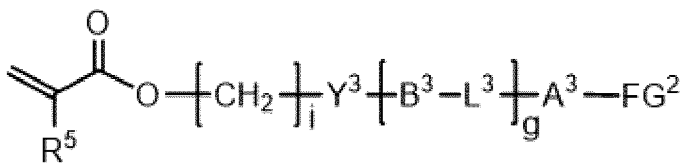
(IIa)

$$FG^a\text{-}Ar\text{-}FG^b \qquad (VII)$$

where $A^1$, $A^3$, $B^1$, and $B^3$ each independently represent a cyclic aliphatic group that may have a substituent or an aromatic group that may have a substituent,
$Y^1$, $Y^3$, $L^1$, and $L^3$ each independently represent a single bond, -O-, -C(=O)-, -C(=O)-O-, -O-C(=O)-, -$NR^{22}$-C(=O)-, -C(=O)-$NR^{22}$-, -O-C(=O)-O-, -$NR^{22}$-C(=O)-O-, -O-C(=O)-$NR^{22}$-, or -$NR^{22}$-C(=O)-$NR^{23}$-, and $R^{22}$ and $R^{23}$ each independently represent a hydrogen atom or an alkyl group with a carbon number of 1 to 6,
$R^1$, $R^2$, and $R^5$ each independently represent a hydrogen atom, a methyl group, or a chlorine atom,
$FG^1$ and $FG^2$ each independently represent a hydroxyl group, a carboxyl group, or an amino group,
a and g each independently represent 0 or 1,

c and i each independently represent an integer of 1 to 20,
e represents an integer of 1 to 3,
in the case where a plurality of $R^2$ are present, the plurality of $R^2$ may be same or different,
Ar represents a divalent aromatic hydrocarbon ring group having at least D as a substituent or a divalent aromatic heterocyclic group having at least D as a substituent,
D represents an organic group with a carbon number of 1 to 67 having at least one aromatic ring selected from the group consisting of an aromatic hydrocarbon ring and an aromatic heterocyclic ring, or -C(=O)-$R^{26}$, and $R^{26}$ represents a hydrogen atom or an alkyl group with a carbon number of 1 to 6, and
$FG^a$ and $FG^b$ each independently represent a hydroxyl group or a carboxyl group.

[18] The production method for a mixture according to [16] or [17], wherein two or more types of compounds that differ in structure from each other are used as the compound represented by the Formula (VII).

(Advantageous Effect)

It is therefore possible to provide a polymer usable in the preparation of an optical film, etc. capable of uniform polarized light conversion over a wide wavelength range, and a mixture that enables efficient production of the polymer.
It is also possible to provide an optical film and an optically anisotropic product capable of uniform polarized light conversion over a wide wavelength range, and a polarizing plate, a display device, and an antireflection film using the same.

DETAILED DESCRIPTION

The presently disclosed techniques will be described in detail below. In the present disclosure, "may have a substituent" denotes "being unsubstituted or having a substituent". In the case where an organic group such as an alkyl group or an aromatic hydrocarbon ring group in a general formula has a substituent, the carbon number of the organic group having the substituent does not include the carbon number of the substituent. For example, in the case where an aromatic hydrocarbon ring group with a carbon number of 6 to 20 has a substituent, the carbon number of the aromatic hydrocarbon ring group with a carbon number of 6 to 20 does not include the carbon number of the substituent. In the present disclosure, the term "alkyl group" denotes a chain (linear or branched) saturated hydrocarbon group, and the term "alkyl group" does not include "cycloalkyl group" which is a cyclic saturated hydrocarbon group.
A presently disclosed mixture containing a predetermined polymerizable compound can be, for example, mixed with a polymerization initiator to prepare a polymerizable liquid crystal composition, without being limited thereto.
The presently disclosed mixture and polymerizable liquid crystal composition can be used, for example, in the preparation of a presently disclosed polymer, without being limited thereto.
The presently disclosed polymer can be used, for example, as a constituent material of a presently disclosed optical film and a constituent material of a layer of a presently disclosed optically anisotropic product, without being limited thereto. The presently disclosed optically anisotropic product can be used, for example, in a presently disclosed polarizing plate, without being limited thereto. The presently disclosed polarizing plate can be used, for example, in a display device such as a flat panel display device or an organic electroluminescent display device and an antireflection film, without being limited thereto.

(1) Mixture containing polymerizable compound

A mixture according to an embodiment of the present disclosure is a mixture containing a polymerizable compound (I) represented by the following Formula (I) and a polymerizable compound (II) represented by the following Formula (II), and can be used, for example, in the production of the below-described polymerizable liquid crystal composition and polymer. The mixture containing the polymerizable compounds (I) and (II) may contain two or more types of the polymerizable compound (I), and may contain two or more types of the polymerizable compound (II).
A mixture according to another embodiment of the present disclosure is a mixture containing two or more types of the polymerizable compound (I) represented by the following Formula (I), and can be used, for example, in the production of the below-described polymerizable liquid crystal composition and polymer.

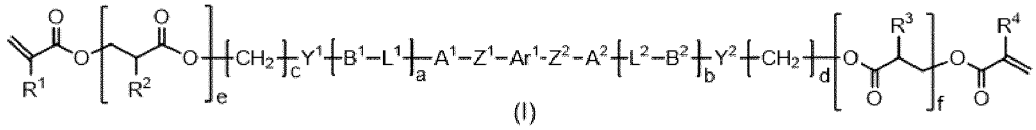

(I)

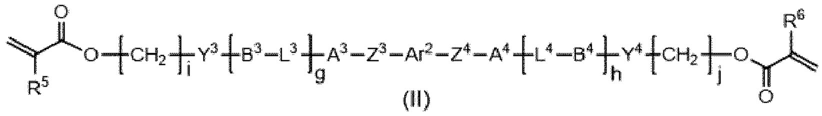

(II)

In terms of enhancing productivity when forming an optical film, etc. by synthesizing a polymer using the mixture or a polymerizable liquid crystal composition prepared using the mixture, it is necessary that the presently disclosed mixture contains the polymerizable compounds (I) and (II) and the content (A) of the polymerizable compound (I) is more than 0.2 times the content (B) of the polymerizable compound (II) by mass (A/B > 0.2), or that the presently disclosed mixture contains two or more types of the polymerizable compound (I) and does not substantially contain the polymerizable compound (II).

In the case where the mixture contains the polymerizable compounds (I) and (II), in terms of further enhancing productivity when forming an optical film, etc. by synthesizing a polymer, the content (A) of the polymerizable compound (I) is preferably 0.3 times or more the content (B) of the polymerizable compound (II). In terms of enhancing the reverse wavelength dispersibility of the obtained optical film, etc., the content (A) of the polymerizable compound (I) is preferably 100 times or less the content (B) of the polymerizable compound (II), and more preferably 50 times or less the content (B) of the polymerizable compound (II).

In the present disclosure, "not substantially contain the polymerizable compound (II)" denotes that the content of the polymerizable compound (II) is not greater than a lower detection limit, and is preferably 0.

(1-1) Polymerizable compound (I)

In Formula (I), a and b are each independently 0 or 1, and preferably 1. c and d are each independently an integer of 1 to 20, preferably an integer of 2 to 12, and more preferably an integer of 4 to 8. One of e and f is an integer of 1 to 3, and the other one of e and f is an integer of 0 to 3.

$Ar^1$ is a divalent aromatic hydrocarbon ring group having at least $D^1$ as a substituent or a divalent aromatic heterocyclic group having at least $D^1$ as a substituent. $D^1$ is an organic group with a carbon number of 1 to 67 having at least one aromatic ring selected from the group consisting of an aromatic hydrocarbon ring and an aromatic heterocyclic ring.

Herein, the divalent aromatic hydrocarbon ring group having at least $D^1$ as a substituent or the divalent aromatic heterocyclic group having at least $D^1$ as a substituent is a group obtained by removing, from a ring fragment of the aromatic hydrocarbon ring to which $D^1$ is bound or the aromatic heterocyclic ring to which $D^1$ is bound, two hydrogen atoms bound to carbon atoms other than the carbon atom to which $D^1$ is bound. The divalent aromatic hydrocarbon ring group and the divalent aromatic heterocyclic group for $Ar^1$ may have one or more substituents other than $D^1$. In the case where the divalent aromatic hydrocarbon ring group and the divalent aromatic heterocyclic group for $Ar^1$ have a plurality of substituents, the plurality of substituents may be the same or different.

Examples of the divalent aromatic hydrocarbon ring group for $Ar^1$ include, but are not limited to, 1,4-phenylene group, 1,3-phenylene group, 1,4-naphthylene group, 2,6-naphthylene group, 1,5-naphthylene group, anthracenyl-9,10-diyl group, anthracenyl-1,4-diyl group, and anthracenyl-2,6-diyl group.

Examples of the divalent aromatic heterocyclic group for $Ar^1$ include, but are not limited to, benzothiazole-4,7-diyl group, 1,2-benzisothiazole-4,7-diyl group, benzoxazole-4,7-diyl group, indole-4,7-diyl group, benzimidazole-4,7-diyl group, benzopyrazole-4,7-diyl group, 1-benzofuran-4,7-diyl group, 2-benzofuran-4,7-diyl group, benzo[1,2-d:4,5-d']dithiazolyl-4,8-diyl group, benzo[1,2-d:5,4-d']dithiazolyl-4,8-diyl group, benzothiophenyl-4,7-diyl group, 1H-isoindole-1,3(2H)-dione-4,7-diyl group, benzo[1,2-b:5,4-b']dithiophenyl-4,8-diyl group, benzo[1,2-b:4,5-b']dithiophenyl-4,8-diyl group, benzo[1,2-b:5,4-b']difuranyl-4,8-diyl group, benzo[1,2-b:4,5-b']difuranyl-4,8-diyl group, benzo[2,1-b:4,5-b']dipyrrole-4,8-diyl group, benzo[1,2-b:5,4-b']dipyrrole-4,8-diyl group, and benzo[1,2-d:4,5-d']diimidazole-4,8-diyl group.

Examples of the substituent(s) other than $D^1$ of the divalent aromatic hydrocarbon ring group and the divalent aromatic heterocyclic group for $Ar^1$ include, but are not limited to, a halogen atom, a cyano group, a nitro group, an alkyl group with a carbon number of 1 to 6, an alkenyl group with a carbon number of 2 to 6, an alkyl halide group with a carbon number of 1 to 6, an N-alkylamino group with a carbon number of 1 to 6, an N,N-dialkylamino group with a carbon number of 2 to 12, an alkoxy group with a carbon number of 1 to 6, an alkylsulfinyl group with a carbon number of 1 to 6, a carboxyl group, a thioalkyl group with a carbon number of 1 to 6, an N-alkylsulfamoyl group with a carbon number of 1 to 6, an N,N-dialkylsulfamoyl group with a carbon number of 2 to 12, $-C(=O)-R^a$, $-C(=O)-O-R^a$, and $SO_2R^a$. $R^a$ is an alkyl group with a carbon number of 1 to 6, or an aromatic hydrocarbon ring group with a carbon number of 6 to 20 that may have an alkyl group with a carbon number of 1 to 6 or an alkoxy group with a carbon number of 1 to 6 as a substituent. Examples of the substituent(s) other than $D^1$ include an organic group with a carbon number of 1 to 67 having at least one aromatic ring selected from the group consisting of an aromatic hydrocarbon ring and an aromatic heterocyclic ring.

Examples of the halogen atom for the substituent(s) other than $D^1$ include fluorine atom, chlorine atom, bromine atom, and iodine atom.

Examples of the alkyl group with a carbon number of 1 to 6 for the substituent(s) other than $D^1$ include methyl group, ethyl group, n-propyl group, isopropyl group, n-butyl group, isobutyl group, sec-butyl group, tert-butyl group, pentyl group, and hexyl group.

Examples of the alkenyl group with a carbon number of 2 to 6 for the substituent(s) other than $D^1$ include vinyl group, propenyl group, isopropenyl group, butenyl group, isobutenyl group, pentenyl group, and hexenyl group.

Examples of the alkyl halide group with a carbon number of 1 to 6 for the substituent(s) other than $D^1$ include fluoroalkyl group with a carbon number of 1 to 6 such as fluoromethyl group, trifluoromethyl group, fluoroethyl group, pentafluoroethyl group, heptafluoropropyl group, and nonafluorobutyl group.

Examples of the N-alkylamino group with a carbon number of 1 to 6 for the substituent(s) other than $D^1$ include N-methylamino group, N-ethylamino group, N-propylamino group, N-isopropylamino group, N-butylamino group, N-isobutylamino group, N-sec-butylamino group, N-tert-butylamino group, N-pentylamino group, and N-hexylamino group.

Examples of the N,N-dialkylamino group with a carbon number of 2 to 12 for the substituent(s) other than $D^1$ include N,N-dimethylamino group, N-methyl-N-ethylamino group, N,N-diethylamino group, N,N-dipropylamino group, N,N-diisopropylamino group, N,N-dibutylamino group, N,N-diisobutylamino group, N,N-dipentylamino group, and N,N-dihexylamino group.

Examples of the alkoxy group with a carbon number of 1 to 6 for the substituent(s) other than $D^1$ include methoxy group, ethoxy group, propoxy group, isopropoxy group, butoxy group, isobutoxy group, sec-butoxy group, tert-butoxy group, pentyloxy group, and hexyloxy group.

Examples of the alkylsulfinyl group with a carbon number of 1 to 6 for the substituent(s) other than $D^1$ include methylsulfinyl group, ethylsulfinyl group, propylsulfinyl group, isopropylsulfinyl group, butylsulfinyl group, isobutylsulfinyl group, sec-butylsulfinyl group, tert-butylsulfinyl group, pentylsulfinyl group, and hexylsulfinyl group.

Examples of the thioalkyl group with a carbon number of 1 to 6 for the substituent(s) other than $D^1$ include methylthio group, ethylthio group, propylthio group, isopropylthio group, butylthio group, isobutylthio group, sec-butylthio group, tert-butylthio group, pentylthio group, and hexylthio group.

Examples of the N-alkylsulfamoyl group with a carbon number of 1 to 6 for the substituent(s) other than $D^1$ include N-methylsulfamoyl group, N-ethylsulfamoyl group, N-propylsulfamoyl group, N-isopropylsulfamoyl group, N-butylsulfamoyl group, N-isobutylsulfamoyl group, N-sec-butylsulfamoyl group, N-tert-butylsulfamoyl group, N-pentylsulfamoyl group, and N-hexylsulfamoyl group.

Examples of the N,N-dialkylsulfamoyl group with a carbon number of 2 to 12 for the substituent(s) other than $D^1$ include N,N-dimethylsulfamoyl group, N-methyl-N-ethylsulfamoyl group, N,N-diethylsulfamoyl group, N,N-dipropylsulfamoyl group, N,N-diisopropylsulfamoyl group, N,N-dibutylsulfamoyl group, N,N-diisobutylsulfamoyl group, N,N-dipentylsulfamoyl group, and N,N-dihexylsulfamoyl group.

Examples of the alkyl group with a carbon number of 1 to 6 for $R^a$ include methyl group, ethyl group, n-propyl group, isopropyl group, n-butyl group, isobutyl group, sec-butyl group, tert-butyl group, pentyl group, and hexyl group.

Examples of the aromatic hydrocarbon ring group with a carbon number of 6 to 20 that may have alkyl group with a carbon number of 1 to 6 or alkoxy group with a carbon number of 1 to 6 as a substituent for $R^a$ include phenyl group and naphthyl group that may have alkyl group with a carbon number of 1 to 6 such as methyl group, ethyl group, n-propyl group, isopropyl group, n-butyl group, isobutyl group, sec-butyl group, tert-butyl group, pentyl group, and hexyl group or alkoxy group with a carbon number of 1 to 6 such as methoxy group and ethoxy group as a substituent.

Examples of the organic group with a carbon number of 1 to 67 having at least one aromatic ring selected from the group consisting of an aromatic hydrocarbon ring and an aromatic heterocyclic ring for the substituent(s) other than $D^1$ include, but are not limited to, the same organic groups as those described in detail below as $D^1$.

In the present disclosure, "aromatic ring" denotes a cyclic structure having aromaticity in a broad sense according to Huckel's rule, i.e. a cyclic conjugated structure having $(4n + 2)$ $\pi$ electrons, and a cyclic structure exhibiting aromaticity due to involvement of a lone electron pair of a heteroatom such as sulfur, oxygen, or nitrogen in $\pi$ electron system, such as thiophene, furan, or benzothiazole.

Examples of the aromatic hydrocarbon ring for $D^1$ include, but are not limited to, benzene ring, naphthalene ring, anthracene ring, phenanthrene ring, pyrene ring, and fluorene ring.

Examples of the aromatic heterocyclic ring for $D^1$ include, but are not limited to, 1H-isoindole-1,3(2H)-dione ring, 1-benzofuran ring, 2-benzofuran ring, acridine ring, isoquinoline ring, imidazole ring, indole ring, oxadiazole ring, oxazole ring, oxazolopyrazine ring, oxazolopyridine ring, oxazolopyridazine ring, oxazolopyrimidine ring, quinazoline ring, quinoxaline ring, quinoline ring, cinnoline ring, thiadiazole ring, thiazole ring, thiazolopyrazine ring, thiazolopyridine ring, thiazolopyridazine ring, thiazolopyrimidine ring, thiophene ring, triazine ring, triazole ring, naphthyridine ring, pyrazine ring, pyrazole ring, pyranone ring, pyran ring, pyridine ring, pyridazine ring, pyrimidine ring, pyrrole ring, phenanthridine ring, phthalazine ring, furan ring, benzo[c]thiophene ring, benzoisooxazole ring, benzoisothiazole ring, benzimidazole ring, benzooxadiazole ring, benzoxazole ring, benzothiadiazole ring, benzothiazole ring, benzothiophene ring, benzotriazine ring, benzotriazole ring, benzopyrazole ring, benzopyranone ring, dihydropyran ring, tetrahydropyran ring, dihydrofuran ring, and tetrahydrofuran ring.

The aromatic hydrocarbon ring and the aromatic heterocyclic ring for $D^1$ may be substituted by a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, an N,N-dialkylsulfamoyl group with a carbon number of 2 to 12, or -C(=O)-O-$R^b$. Here, $R^b$ is an alkyl group with a carbon number of 1 to 20 that may have a substituent, an alkenyl group with a carbon number of 2 to 20 that may have a substituent, a cycloalkyl group with a carbon number of 3 to 12 that may have a substituent, or an aromatic hydrocarbon ring group with a carbon number of 5 to 12 that may have a substituent.

The aromatic hydrocarbon ring and the aromatic heterocyclic ring may have one or more substituents selected from the foregoing substituents. In the case where the aromatic hydrocarbon ring and the aromatic heterocyclic ring have a plurality of substituents, the plurality of substituents may be the same or different.

Examples of the halogen atom, the alkyl group with a carbon number of 1 to 6, the alkylsulfinyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 which the aromatic hydrocarbon ring and the aromatic heterocyclic ring for $D^1$ may have are the same as those listed above as the substituent(s) other than $D^1$.

Examples of the alkylsulfonyl group with a carbon number of 1 to 6 which the aromatic hydrocarbon ring and the aromatic heterocyclic ring for $D^1$ may have include methylsulfonyl group, ethylsulfonyl group, propylsulfonyl group, isopropylsulfonyl group, butylsulfonyl group, isobutylsulfonyl group, sec-butylsulfonyl group, tert-butylsulfonyl group, pentylsulfonyl group, and hexylsulfonyl group.

Examples of the fluoroalkyl group with a carbon number of 1 to 6 which the aromatic hydrocarbon ring and the aromatic heterocyclic ring for $D^1$ may have include fluoromethyl group, trifluoromethyl group, fluoroethyl group, pentafluoroethyl group, heptafluoropropyl group, and nonafluorobutyl group.

Examples of the alkyl group with a carbon number of 1 to 20 for $R^b$ include methyl group, ethyl group, n-propyl group, isopropyl group, n-butyl group, isobutyl group, 1-methylpentyl group, 1-ethylpentyl group, sec-butyl group, t-butyl group, n-pentyl group, isopentyl group, neopentyl group, n-hexyl group, isohexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, and n-icosyl group.

Examples of the alkenyl group with a carbon number of 2 to 20 for $R^b$ include vinyl group, propenyl group, isopropenyl group, butenyl group, isobutenyl group, pentenyl group, hexenyl group, heptenyl group, octenyl group, decenyl group, undecenyl group, dodecenyl group, tridecenyl group, tetradecenyl group, pentadecenyl group, hexadecenyl group, heptadecenyl group, octadecenyl group, nonadecenyl group, and icosenyl group.

Examples of the cycloalkyl group with a carbon number of 3 to 12 for $R^b$ include cyclopropyl group, cyclobutyl group, cyclopentyl group, cyclohexyl group, and cyclooctyl group.

Examples of the aromatic hydrocarbon ring group with a carbon number of 5 to 12 for $R^b$ include phenyl group, 1-naphthyl group, and 2-naphthyl group.

Examples of the substituent of the alkyl group with a carbon number of 1 to 20 that may have a substituent, the alkenyl group with a carbon number of 2 to 20 that may have a substituent, and the aromatic hydrocarbon ring group with a carbon number of 5 to 12 that may have a substituent for $R^b$ include a halogen atom such as fluorine atom and chlorine atom; a cyano group; an alkoxy group with a carbon number of 1 to 20 such as methoxy group, ethoxy group, isopropoxy group, and butoxy group; a nitro group; an aromatic hydrocarbon ring group with a carbon number of 6 to 20 such as phenyl group and naphthyl group; an aromatic heterocyclic group with a carbon number of 2 to 20 such as furanyl group and thiophenyl group; a cycloalkyl group with a carbon number of 3 to 8 such as cyclopropyl group, cyclopentyl group, and cyclohexyl group; and a fluoroalkyl group with a carbon number of 1 to 12 at least one hydrogen atom of which is substituted by a fluorine atom, such as trifluoromethyl group, pentafluoroethyl group, and $-CH_2CF_3$. The alkyl group with a carbon number of 1 to 20, the alkenyl group with a carbon number of 2 to 20, and the aromatic hydrocarbon ring group with a carbon number of 5 to 12 for $R^b$ may have one or more substituents selected from the foregoing substituents. In the case where the alkyl group with a carbon number of 1 to 20, the alkenyl group with a carbon number of 2 to 20, and the aromatic hydrocarbon ring group with a carbon number of 5 to 12 have a plurality of substituents, the plurality of substituents may be the same or different.

Examples of the substituent of the cycloalkyl group with a carbon number of 3 to 12 for $R^b$ include a halogen atom such as fluorine atom and chlorine atom; a cyano group; an alkyl group with a carbon number of 1 to 6 such as methyl group, ethyl group, and propyl group; an alkoxy group with a carbon number of 1 to 6 such as methoxy group, ethoxy group, and isopropoxy group; a nitro group; and an aromatic hydrocarbon group with a carbon number of 6 to

20 such as phenyl group and naphthyl group. The cycloalkyl group with a carbon number of 3 to 12 for $R^b$ may have one or more substituents selected from the foregoing substituents. In the case where the cycloalkyl group with a carbon number of 3 to 12 has a plurality of substituents, the plurality of substituents may be the same or different.

Examples of $Ar^1$ (divalent aromatic hydrocarbon ring group having at least $D^1$ as a substituent or divalent aromatic heterocyclic group having at least $D^1$ as a substituent) include phenylene group substituted by a group represented by formula: $-C(R^f)=N-N(R^g)R^h$ or formula: $-C(R^f)=N-N=C(R^{g1})R^h$, benzothiazole-4,7-diyl group substituted by 1-benzofuran-2-yl group, benzothiazole-4,7-diyl group substituted by 5-(2-butyl)-1-benzofuran-2-yl group, benzothiazole-4,7-diyl group substituted by 4,6-dimethyl-1-benzofuran-2-yl group, benzothiazole-4,7-diyl group substituted by 6-methyl-1-benzofuran-2-yl group, benzothiazole-4,7-diyl group substituted by 4,6,7-trimethyl-1-benzofuran-2-yl group, benzothiazole-4,7-diyl group substituted by 4,5,6-trimethyl-1-benzofuran-2-yl group, benzothiazole-4,7-diyl group substituted by 5-methyl-1-benzofuran-2-yl group, benzothiazole-4,7-diyl group substituted by 5-propyl-1-benzofuran-2-yl group, benzothiazole-4,7-diyl group substituted by 7-propyl-1-benzofuran-2-yl group, benzothiazole-4,7-diyl group substituted by 5-fluorol-benzofuran-2-yl group, benzothiazole-4,7-diyl group substituted by phenyl group, benzothiazole-4,7-diyl group substituted by 4-fluorophenyl group, benzothiazole-4,7-diyl group substituted by 4-nitrophenyl group, benzothiazole-4,7-diyl group substituted by 4-trifluoromethylphenyl group, benzothiazole-4,7-diyl group substituted by 4-cyanophenyl group, benzothiazole-4,7-diyl group substituted by 4-methanesulfonylphenyl group, benzothiazole-4,7-diyl group substituted by thiophene-2-yl group, benzothiazole-4,7-diyl group substituted by thiophene-3-yl group, benzothiazole-4,7-diyl group substituted by 5-methylthiophene-2-yl group, benzothiazole-4,7-diyl group substituted by 5-chlorothiophene-2-yl group, benzothiazole-4,7-diyl group substituted by thieno[3,2-b]thiophene-2-yl group, benzothiazole-4,7-diyl group substituted by 2-benzothiazolyl group, benzothiazole-4,7-diyl group substituted by 4-biphenyl group, benzothiazole-4,7-diyl group substituted by 4-propylbiphenyl group, benzothiazole-4,7-diyl group substituted by 4-thiazolyl group, benzothiazole-4,7-diyl group substituted by 1-phenylethylene-2-yl group, benzothiazole-4,7-diyl group substituted by 4-pyridiyl group, benzothiazole-4,7-diyl group substituted by 2-furyl group, benzothiazole-4,7-diyl group substituted by naphth[1,2-b]furan-2-yl group, 1H-isoindole-1,3(2H)-dione-4,7-diyl group substituted by 5-methoxy-2-benzothiazolyl group, 1H-isoindole-1,3(2H)-dione-4,7-diyl group substituted by phenyl group, 1H-isoindole-1,3(2H)-dione-4,7-diyl group substituted by 4-nitrophenyl group, and 1H-isoindole-1,3(2H)-dione-4,7-diyl group substituted by 2-thiazolyl group. In the foregoing formulas, $R^f$ each independently represent a hydrogen atom, or an alkyl group with a carbon number of 1 to 6 such as methyl group, ethyl group, propyl group, and isopropyl group. In the foregoing formulas, $R^g$ and $R^{g1}$ represent a hydrogen atom, or an organic group with a carbon number of 1 to 30 that may have a substituent. Examples of the organic group with a carbon number of 1 to 30 and its substituent are the same as those listed as specific examples of the organic group with a carbon number of 1 to 30 and its substituent for Ay described later. In the foregoing formulas, $R^h$ represents an organic group having at least one aromatic ring selected from the group consisting of an aromatic hydrocarbon ring with a carbon number of 6 to 30 and an aromatic heterocyclic ring with a carbon number of 2 to 30. Specific examples of the organic group having at least one aromatic ring selected from the group consisting of an aromatic hydrocarbon ring with a carbon number of 6 to 30 and an aromatic heterocyclic ring with a carbon number of 2 to 30 are the same as those listed as specific examples of the organic group having at least one aromatic ring selected from the group consisting of an aromatic hydrocarbon ring with a carbon number of 6 to 30 and an aromatic heterocyclic ring with a carbon number of 2 to 30 for Ax described later.

$Ar^1$ (divalent aromatic hydrocarbon ring having at least $D^1$ as a substituent or divalent aromatic heterocyclic group having at least $D^1$ as a substituent) is preferably a divalent aromatic hydrocarbon ring group or a divalent aromatic heterocyclic group that may have a substituent and that has a group represented by formula: -C(Q)=N-N(Ax)Ay as $D^1$, more preferably a divalent aromatic hydrocarbon ring group that may have a substituent and that has a group represented by formula: -C(Q)=N-N(Ax)Ay as $D^1$, and further preferably a group represented by any of the following Formulas (III-1) to (III-3).

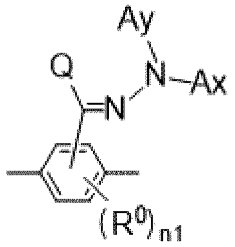

(III-1)

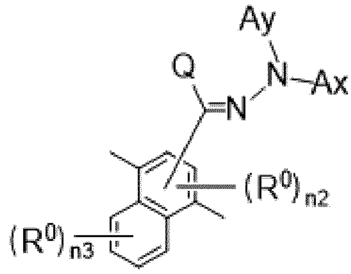

(III-2)

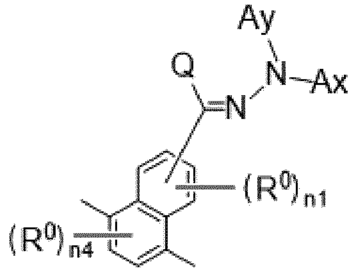

(III-3)

Here, Ax is an organic group having at least one aromatic ring selected from the group consisting of an aromatic hydrocarbon ring with a carbon number of 6 to 30 and an aromatic heterocyclic ring with a carbon number of 2 to 30. The aromatic ring of Ax may have a substituent. Ax may have a plurality of aromatic rings.

Examples of the aromatic hydrocarbon ring with a carbon number of 6 to 30 for Ax are the same as those listed as the aromatic hydrocarbon ring for $D^1$. Of these, the aromatic hydrocarbon ring with a carbon number of 6 to 30 for Ax is preferably benzene ring, naphthalene ring, or anthracene ring.

Examples of the aromatic heterocyclic ring with a carbon number of 2 to 30 for Ax are the same as those listed as the aromatic heterocyclic ring for $D^1$. Of these, the aromatic heterocyclic ring with a carbon number of 2 to 30 for Ax is preferably: a monocyclic aromatic heterocyclic ring such as furan ring, thiophene ring, oxazole ring, and thiazole ring; or a condensed cyclic aromatic heterocyclic ring such as benzothiazole ring, benzoxazole ring, quinoline ring, 1-benzofuran ring, 2-benzofuran ring, benzothiophene ring, thiazolopyridine ring, and thiazolopyrazine ring.

The aromatic ring of Ax may have a substituent. Examples of the substituent include a halogen atom, an alkyl group with a carbon number of 1 to 6, a cyano group, a nitro group, a fluoroalkyl group with a carbon number of 1 to 6, an alkoxy group with a carbon number of 1 to 6, and -C(=O)-O-$R^b$. $R^b$ is an alkyl group with a carbon number of 1 to 20 that may have a substituent, an alkenyl group with a carbon number of 2 to 20 that may have a substituent, a cycloalkyl group with a carbon number of 3 to 12 that may have a substituent, or an aromatic hydrocarbon ring group with a carbon number of 5 to 12 that may have a substituent.

Ax may have a plurality of substituents selected from the foregoing substituents. In the case where Ax has a plurality of substituents, the substituents may be the same or different.

Examples of the halogen atom, the alkyl group with a carbon number of 1 to 6, the fluoroalkyl group with a carbon number of 1 to 6, the alkoxy group with a carbon number of 1 to 6, and -C(=O)-O-$R^b$ of the substituent of the aromatic ring of Ax are the same as those listed as the substituent which the aromatic hydrocarbon ring and the aromatic heterocyclic ring for $D^1$ may have.

Of these, the substituent of the aromatic ring of Ax is preferably a halogen atom, a cyano group, an alkyl group with a carbon number of 1 to 6, or an alkoxy group with a carbon number of 1 to 6.

The carbon number of the alkyl group with a carbon number of 1 to 20 that may have a substituent for $R^b$ is preferably 1 to 12, and further preferably 4 to 10.

The carbon number of the alkenyl group with a carbon number of 2 to 20 that may have a substituent for $R^b$ is preferably 2 to 12.

The cycloalkyl group of the cycloalkyl group with a carbon number of 3 to 12 that may have a substituent for $R^b$ is preferably cyclopentyl group or cyclohexyl group.

The aromatic hydrocarbon ring group of the aromatic hydrocarbon ring group with a carbon number of 5 to 12 that may have a substituent for $R^b$ is preferably phenyl group.

The substituent of the alkyl group with a carbon number of 1 to 20, the substituent of the alkenyl group with a carbon number of 2 to 20, and the substituent of the aromatic hydrocarbon ring group with a carbon number of 5 to 12 for $R^b$ are preferably: a halogen atom such as fluorine atom and chlorine atom; a cyano group; an alkoxy group with a carbon number of 1 to 20 such as methoxy group, ethoxy group, isopropoxy group, and butoxy group; a nitro group; an aromatic hydrocarbon ring group with a carbon number of 6 to 20 such as phenyl group and naphthyl group; an aromatic heterocyclic group with a carbon number of 2 to 20 such as furanyl group and thiophenyl group; a cycloalkyl group with a carbon number of 3 to 8 such as cyclopropyl group, cyclopentyl group, and cyclohexyl group; and a fluoroalkyl group with a carbon number of 1 to 12 at least one hydrogen atom of which is substituted by a fluorine atom, such as trifluoromethyl group, pentafluoroethyl group, and $-CH_2CF_3$.

The alkyl group with a carbon number of 1 to 20, the alkenyl group with a carbon number of 2 to 20, and the aromatic hydrocarbon ring group with a carbon number of 5 to 12 for $R^b$ may have a plurality of substituents selected from the foregoing substituents. In the case where the alkyl group with a carbon number of 1 to 20, the alkenyl group with a carbon number of 2 to 20, and the aromatic hydrocarbon ring group with a carbon number of 5 to 12 for $R^b$ have a plurality of substituents, the plurality of substituents may be the same or different.

The substituent of the cycloalkyl group with a carbon number of 3 to 12 for $R^b$ is preferably: a halogen atom such as fluorine atom and chlorine atom; a cyano group; an alkyl group with a carbon number of 1 to 6 such as methyl group, ethyl group, and propyl group; an alkoxy group with a carbon number of 1 to 6 such as methoxy group, ethoxy group, and isopropoxy group; a nitro group; and an aromatic hydrocarbon group with a carbon number of 6 to 20 such as phenyl group and naphthyl group.

The cycloalkyl group with a carbon number of 3 to 12 for $R^b$ may have a plurality of substituents selected from the foregoing substituents. In the case where the cycloalkyl group with a carbon number of 3 to 12 for $R^b$ has a plurality of substituents, the plurality of substituents may be the same or different.

The aromatic ring of Ax may have a plurality of substituents that may be the same or different, and two adjacent substituents may be joined together to form a ring which may be a monocyclic, condensed polycyclic, unsaturated, or saturated ring.

The "carbon number" of the organic group with a carbon number of 2 to 20 for Ax denotes the total carbon number of the whole organic group excluding the carbon atom of the substituent.

Examples of the organic group having at least one aromatic ring selected from the group consisting of an aromatic hydrocarbon ring with a carbon number of 6 to 30 and an aromatic heterocyclic ring with a carbon number of 2 to 30 for Ax include the following 1) to 5):

1) hydrocarbon ring group with a carbon number of 6 to 40 having at least one aromatic hydrocarbon ring with a carbon number of 6 to 30;
2) heterocyclic group with a carbon number of 2 to 40 having at least one aromatic ring selected from the group consisting of an aromatic hydrocarbon ring with a carbon number of 6 to 30 and an aromatic heterocyclic ring with a carbon number of 2 to 30;
3) alkyl group with a carbon number of 1 to 12 substituted by at least one of an aromatic hydrocarbon ring group with a carbon number of 6 to 30 and an aromatic heterocyclic group with a carbon number of 2 to 30;
4) alkenyl group with a carbon number of 2 to 12 substituted by at least one of an aromatic hydrocarbon ring group with a carbon number of 6 to 30 and an aromatic heterocyclic group with a carbon number of 2 to 30; and
5) alkynyl group with a carbon number of 2 to 12 substituted by at least one of an aromatic hydrocarbon ring group with a carbon number of 6 to 30 and an aromatic heterocyclic group with a carbon number of 2 to 30.

Specific examples of the aromatic hydrocarbon ring in 1) "hydrocarbon ring group with a carbon number of 6 to 40 having at least one aromatic hydrocarbon ring with a carbon number of 6 to 30" are the same as those listed as specific examples of the aromatic hydrocarbon ring of Ax. Examples of the hydrocarbon ring group in 1) include aromatic hydrocarbon ring group with a carbon number of 6 to 30 (e.g. phenyl group, naphthyl group, anthracenyl group, phenanthrenyl group, pyrenyl group, and fluorenyl group), indanyl group, 1,2,3,4-tetrahydronaphthyl group, and 1,4-dihydronaphthyl group.

Specific examples of the aromatic hydrocarbon ring and the aromatic heterocyclic ring in 2) "heterocyclic group with a carbon number of 2 to 40 having at least one aromatic ring selected from the group consisting of an aromatic hydrocarbon ring with a carbon number of 6 to 30 and an aromatic heterocyclic ring with a carbon number of 2 to 30" are the same as those listed as specific examples of the aromatic hydrocarbon ring and the aromatic heterocyclic ring of Ax. Examples of the heterocyclic group in 2) include aromatic heterocyclic group with a carbon number of 2 to 30 (e.g. phthalimide group, 1-benzofuranyl group, 2-benzofuranyl group, acrydinyl group, isoquinolinyl group, imidazolyl group, indolinyl group, furazanyl group, oxazolyl group, oxazolopyrazinyl group, oxazolopyridinyl group, oxazolopyridazinyl group, oxazolopyrimidinyl group, quinazolinyl group, quinoxalinyl group, quinolyl group, cinnolinyl group, thiadiazolyl group, thiazolyl group, thiazolopyrazinyl group, thiazolopyridinyl group, thiazolopyridazinyl group, thiazolopyrimidinyl group, 2-thienyl group, 3-thienyl group, triazinyl group, triazolyl group, naphthyridinyl group, pyrazinyl group, pyrazolyl group, pyranonyl group, pyranyl group, pyridyl group, pyridazinyl group, pyrimidinyl group, pyrrolyl group, phenanthridinyl group, phthalazinyl group, furanyl group, benzo[c]thienyl group, benzoisoxazolyl group, benzoisothiazolyl group, benzoimidazolyl group, benzoxazolyl group, benzothiadiazolyl group, benzothiazolyl group, benzothiophenyl group, benzotriadinyl group, benzotriazolyl group, benzopyrazolyl group, benzopyranonyl group, dihydropyranyl group, tetrahydropyranyl group, dihydrofuranyl group, and tetrahydrofuranyl group), 2,3-dihydroindolyl group, 9,10-dihydroacridinyl group, and 1,2,3,4-tetrahydroquinolyl group.

Specific examples of the alkyl group with a carbon number of 1 to 12 in 3) "alkyl group with a carbon number of 1 to 12 substituted by at least one of an aromatic hydrocarbon ring group with a carbon number of 6 to 30 and an aromatic heterocyclic group with a carbon number of 2 to 30" include methyl group, ethyl group, propyl group, and isopropyl group. Specific examples of the aromatic hydrocarbon ring group with a carbon number of 6 to 30 and the aromatic heterocyclic group with a carbon number of 2 to 30 in 3) are the same as those listed as specific examples of the aromatic hydrocarbon ring group with a carbon number of 6 to 30 and the aromatic heterocyclic group with a carbon number of 2 to 30 in 1) and 2).

Specific examples of the alkenyl group with a carbon number of 2 to 12 in 4) "alkenyl group with a carbon number of 2 to 12 substituted by at least one of an aromatic hydrocarbon ring group with a carbon number of 6 to 30 and an aromatic heterocyclic group with a carbon number of 2 to 30" include vinyl group and allyl group. Specific examples of the aromatic hydrocarbon ring group with a carbon number of 6 to 30 and the aromatic heterocyclic group with a carbon number of 2 to 30 in 4) are the same as those listed as specific examples of the aromatic hydrocarbon ring group with a carbon number of 6 to 30 and the aromatic heterocyclic group with a carbon number of 2 to 30 in 1) and 2).

Specific examples of the alkynyl group with a carbon number of 2 to 12 in 5) "alkynyl group with a carbon number of 2 to 12 substituted by at least one of an aromatic hydrocarbon ring group with a carbon number of 6 to 30 and an aromatic heterocyclic group with a carbon number of 2 to 30" include ethynyl group and propynyl group. Specific examples of the aromatic hydrocarbon ring group with a carbon number of 6 to 30 and the aromatic heterocyclic group with a carbon number of 2 to 30 in 5) are the same as those listed as specific examples of the aromatic hydrocarbon

ring group with a carbon number of 6 to 30 and the aromatic heterocyclic group with a carbon number of 2 to 30 in 1) and 2).

Each of the organic groups listed in 1) to 5) may have one or more substituents. In the case where the organic group has a plurality of substituents, the plurality of substituents may be the same or different.

Examples of the substituent(s) include: a halogen atom such as fluorine atom and chlorine atom; a cyano group; an alkyl group with a carbon number of 1 to 6 such as methyl group, ethyl group, and propyl group; an alkenyl group with a carbon number of 2 to 6 such as vinyl group and allyl group; an alkyl halide group with a carbon number of 1 to 6 such as trifluoromethyl group; an N,N-dialkylamino group with a carbon number of 2 to 12 such as dimethylamino group; an alkoxy group with a carbon number of 1 to 6 such as methoxy group, ethoxy group, and isopropoxy group; a nitro group; an aromatic hydrocarbon ring group with a carbon number of 6 to 20 such as phenyl group and naphthyl group; $-OCF_3$; $-C(=O)-R^b$; $-O-C(=O)-R^b$; $-C(=O)-O-R^b$; and $-SO_2R^a$. Here, $R^b$ and $R^a$ are as defined above.

Of these, the substituent of each of the organic groups listed in 1) to 5) is preferably at least one substituent selected from a halogen atom, a cyano group, an alkyl group with a carbon number of 1 to 6, and an alkoxy group with a carbon number of 1 to 6.

Preferable specific examples of the organic group having at least one aromatic ring selected from the group consisting of an aromatic hydrocarbon ring with a carbon number of 6 to 30 and an aromatic heterocyclic ring with a carbon number of 2 to 30 for Ax are given below. The present disclosure is, however, not limited to such. In the following formulas, "-" represents atomic bonding with an N atom (i.e. N atom that bonds with Ax) extending from any position in the ring.

1) Specific examples of the hydrocarbon ring group with a carbon number of 6 to 40 having at least one aromatic hydrocarbon ring with a carbon number of 6 to 30 include the structures represented by the following Formulas (1-1) to (1-21). An aromatic hydrocarbon ring group with a carbon number of 6 to 30 represented by, for example, any of Formulas (1-9) to (1-21) is preferable.

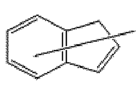
(1-1)
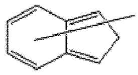
(1-2)
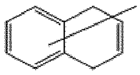
(1-3)
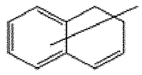
(1-4)
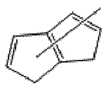
(1-5)
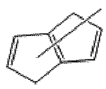
(1-6)

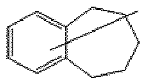
(1-7)
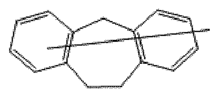
(1-8)

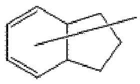
(1-9)
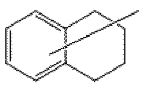
(1-10)
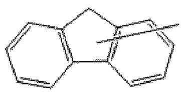
(1-11)
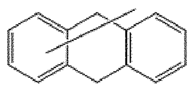
(1-12)

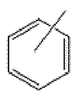
(1-13)
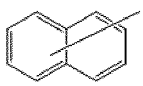
(1-14)
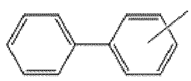
(1-15)
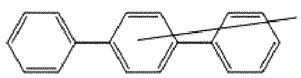
(1-16)

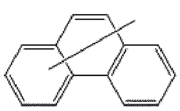
(1-17)
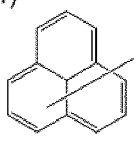
(1-18)
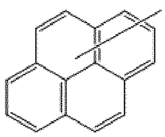
(1-19)
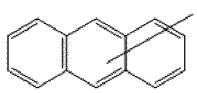
(1-20)
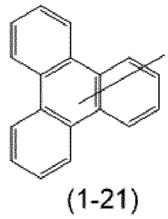
(1-21)

2) Specific examples of the heterocyclic group with a carbon number of 2 to 40 having at least one aromatic ring selected from the group consisting of an aromatic hydrocarbon ring with a carbon number of 6 to 30 and an aromatic heterocyclic ring with a carbon number of 2 to 30 include the structures represented by the following Formulas (2-1) to (2-51). An aromatic heterocyclic group with a carbon number of 2 to 30 represented by, for example, any of Formulas (2-12) to (2-51) is preferable.

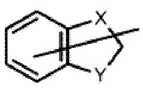
(2-1)
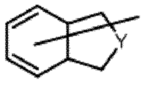
(2-2)
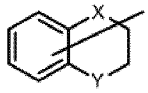
(2-3)
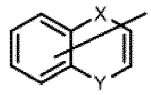
(2-4)
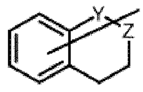
(2-5)
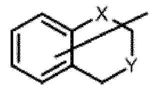
(2-6)

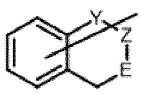
(2-7)
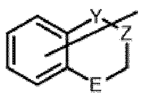
(2-8)
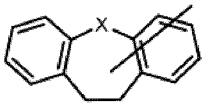
(2-9)
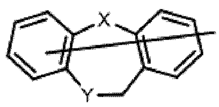
(2-10)
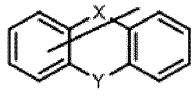
(2-11)

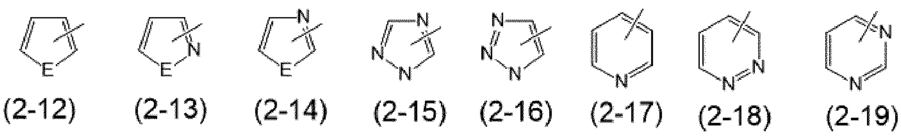
(2-12) (2-13) (2-14) (2-15) (2-16) (2-17) (2-18) (2-19)

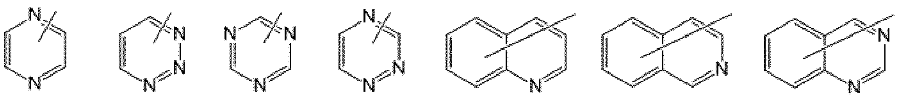
(2-20) (2-21) (2-22) (2-23) (2-24) (2-25) (2-26)

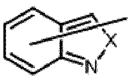
(2-27)
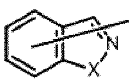
(2-28)
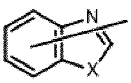
(2-29)
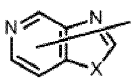
(2-30)
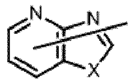
(2-31)
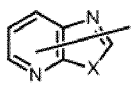
(2-32)
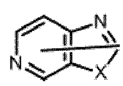
(2-33)

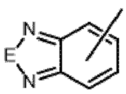
(2-34)
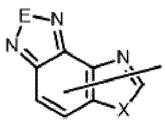
(2-35)
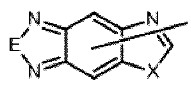
(2-36)
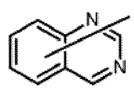
(2-37)
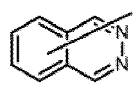
(2-38)
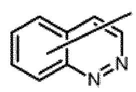
(2-39)

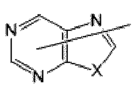
(2-40)
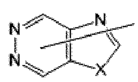
(2-41)
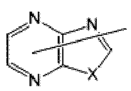
(2-42)
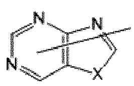
(2-43)
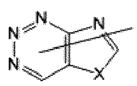
(2-44)
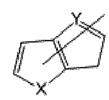
(2-45)
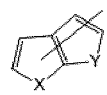
(2-46)

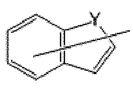
(2-47)
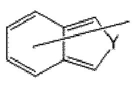
(2-48)
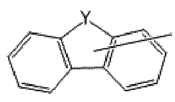
(2-49)
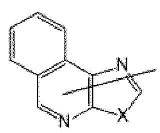
(2-50)
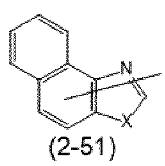
(2-51)

[where X represents $-CH_2-$, $-NR^c-$, an oxygen atom, a sulfur atom, -SO-, or $-SO_2-$, Y and Z each independently represent $-NR^c-$, an oxygen atom, a sulfur atom, -SO-, or $-SO_2-$, and E represents $-NR^c-$, an oxygen atom, or a sulfur atom. $R^c$ represents a hydrogen atom, or an alkyl group with a carbon number of 1 to 6 such as methyl group, ethyl group, and propyl group (in each formula, oxygen atom, sulfur atom, -SO-, and $-SO_2-$ are not adjacent to each other).]

3) Specific examples of the alkyl group with a carbon number of 1 to 12 substituted by at least one of an aromatic hydrocarbon ring group with a carbon number of 6 to 30 and an aromatic heterocyclic group with a carbon number of 2 to 30 include the structures represented by the following Formulas (3-1) to (3-8).

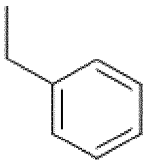 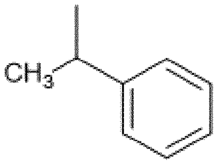 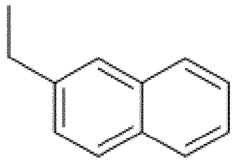 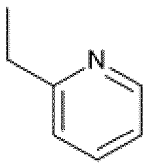 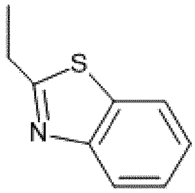

(3-1) (3-2) (3-3) (3-4) (3-5)

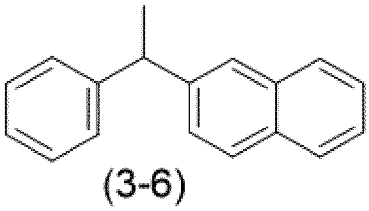 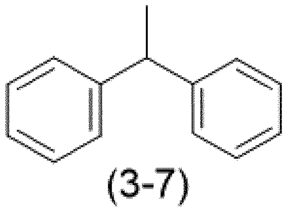 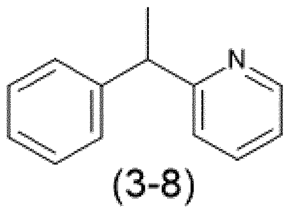

(3-6) (3-7) (3-8)

4) Specific examples of the alkenyl group with a carbon number of 2 to 12 substituted by at least one of an aromatic hydrocarbon ring group with a carbon number of 6 to 30 and an aromatic heterocyclic group with a carbon number of 2 to 30 include the structures represented by the following Formulas (4-1) to (4-5).

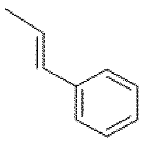 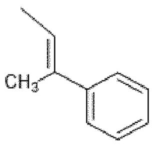 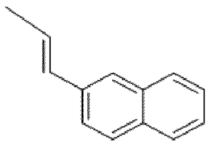 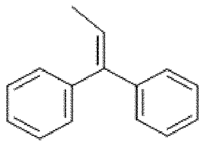 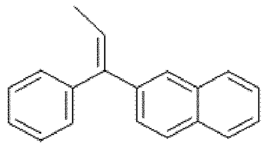

(4-1) (4-2) (4-3) (4-4) (4-5)

5) Specific examples of the alkynyl group with a carbon number of 2 to 12 substituted by at least one selected from the group consisting of an aromatic hydrocarbon ring and an aromatic heterocyclic ring include the structures represented by the following Formulas (5-1) to (5-2).

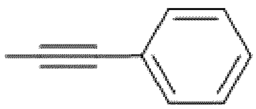 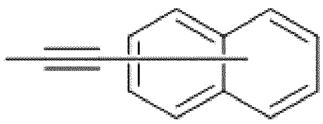

(5-1) (5-2)

The ring of each preferable specific example of Ax described above may have one or more substituents. In the case where the ring has a plurality of substituents, the plurality of substituents may be the same or different. Examples of the substituent(s) include: a halogen atom such as fluorine atom and chlorine atom; a cyano group; an alkyl group with a carbon number of 1 to 6 such as methyl group, ethyl group, and propyl group; an alkenyl group with a carbon number of 2 to 6 such as vinyl group and allyl group; an alkyl halide group with a carbon number of 1 to 6 such as trifluoromethyl group; an N,N-dialkylamino group with a carbon number of 1 to 12 such as dimethylamino group; an alkoxy group with a carbon number of 1 to 6 such as methoxy group, ethoxy group, and isopropoxy group; a nitro group; an aromatic hydrocarbon ring group with a carbon number of 6 to 20 such as phenyl group and naphthyl group; $-OCF_3$; $-C(=O)-R^b$; $-O-C(=O)-R^b$; $-C(=O)-O-R^b$; and $-SO_2R^a$.

Here, $R^b$ and $R^a$ are as defined above. Of these, the substituent of the foregoing ring of Ax is preferably a halogen atom, a cyano group, an alkyl group with a carbon number of 1 to 6, or an alkoxy group with a carbon number of 1 to 6.

Of these, Ax is preferably an aromatic hydrocarbon ring group with a carbon number of 6 to 30, an aromatic heterocyclic group with a carbon number of 2 to 30, or a group represented by the foregoing Formula (1-9).

Ax is more preferably an aromatic hydrocarbon ring group with a carbon number of 6 to 20 or an aromatic heterocyclic group with a carbon number of 4 to 20, and further preferably any of the groups represented by the foregoing

Formulas (1-14), (1-20), (2-27) to (2-33), (2-35) to (2-43), and (2-51).

Each of the foregoing rings may have one or more substituents, as mentioned above. In the case where the ring has a plurality of substituents, the plurality of substituents may be the same or different. Examples of the substituent(s) include: a halogen atom such as fluorine atom and chlorine atom; a cyano group; an alkyl group with a carbon number of 1 to 6 such as methyl group, ethyl group, and propyl group; an alkenyl group with a carbon number of 2 to 6 such as vinyl group and allyl group; an alkyl halide group with a carbon number of 1 to 6 such as trifluoromethyl group and pentafluoroethyl group; an N,N-dialkylamino group with a carbon number of 1 to 12 such as dimethylamino group; an alkoxy group with a carbon number of 1 to 6 such as methoxy group, ethoxy group, and isopropoxy group; a nitro group; an aromatic hydrocarbon ring group with a carbon number of 6 to 20 such as phenyl group and naphthyl group; $-C(=O)-R^b$; $-O-C(=O)-R^b$; $-C(=O)-O-R^b$; and $-SO_2R^a$.

Here, $R^b$ and $R^a$ are as defined above.

Of these, the substituent of the foregoing ring is preferably a halogen atom, a cyano group, an alkyl group with a carbon number of 1 to 6, or an alkoxy group with a carbon number of 1 to 6.

As Ax, a group represented by the following Formula (iv) is further preferable.

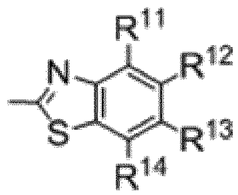

( i v )

That is, $Ar^1$ is preferably a group represented by any of the following Formulas (IV-1) to (IV-3). In Formulas (IV-1) to (IV-3), Ay, Q, $R^0$, n1, n2, n3, and n4 are as defined in the foregoing Formulas (III-1) to (III-3).

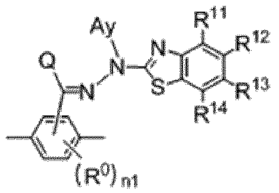

(IV-1)

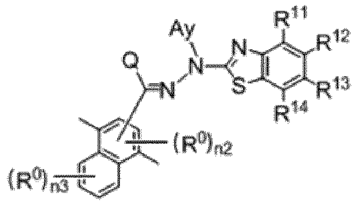

(IV-2)

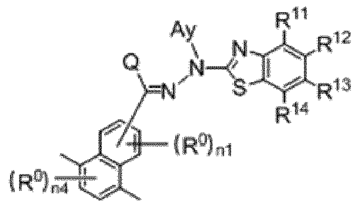

(IV-3)

In Formulas (iv) and (IV-1) to (IV-3), $R^{11}$ to $R^{14}$ are each independently a hydrogen atom, a halogen atom, an alkyl group with a carbon number of 1 to 6, a cyano group, a nitro group, a fluoroalkyl group with a carbon number of 1 to 6, an alkoxy group with a carbon number of 1 to 6, or $-C(=O)-O-R^b$, where $R^b$ is as defined above.

It is preferable that $R^{11}$ to $R^{14}$ are all a hydrogen atom, or at least one of $R^{11}$ to $R^{14}$ is an alkoxy group with a carbon number of 1 to 6 that may have a substituent and the rest is a hydrogen atom.

$C-R^{11}$ to $C-R^{14}$ may all be the same or different, and at least one of $C-R^{11}$ to $C-R^{14}$ forming the ring may be substituted by a nitrogen atom.

Specific examples of the group obtained by substituting at least one of $C-R^{11}$ to $C-R^{14}$ of the group represented by the foregoing Formula (iv) by a nitrogen atom are given below. The group obtained by substituting at least one of $C-R^{11}$ to $C-R^{14}$ by a nitrogen atom is, however, not limited to such.

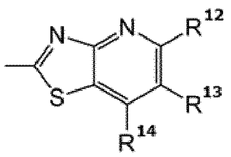 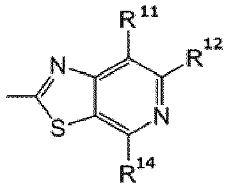 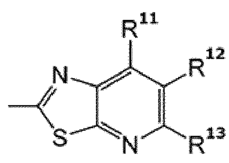 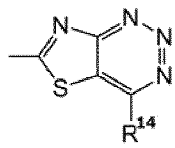

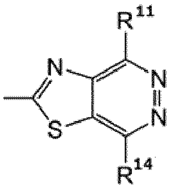 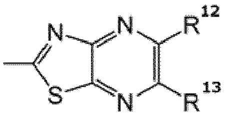 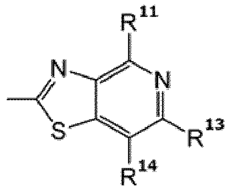 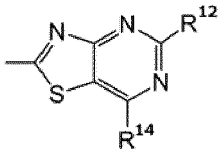

[where $R^{11}$ to $R^{14}$ are as defined above.]

Ay is a hydrogen atom or an organic group with a carbon number of 1 to 30 that may have a substituent.

Examples of the organic group with a carbon number of 1 to 30 that may have a substituent for Ay include, but are not limited to, an alkyl group with a carbon number of 1 to 20 that may have a substituent, an alkenyl group with a carbon number of 2 to 20 that may have a substituent, an alkynyl group with a carbon number of 2 to 20 that may have a substituent, a cycloalkyl group with a carbon number of 3 to 12 that may have a substituent, $-SO_2R^a$, $-C(=O)-R^b$, $-CS-NH-R^b$, an aromatic hydrocarbon ring group with a carbon number of 6 to 30 that may have a substituent, and an aromatic heterocyclic group with a carbon number of 2 to 30 that may have a substituent.

Here, $R^a$ and $R^b$ are as defined above.

Examples of the alkyl group with a carbon number of 1 to 20 of the alkyl group with a carbon number of 1 to 20 that may have a substituent, the alkenyl group with a carbon number of 2 to 20 of the alkenyl group with a carbon number of 2 to 20 that may have a substituent, and the cycloalkyl group with a carbon number of 3 to 12 of the cycloalkyl group with a carbon number of 3 to 12 that may have a substituent for Ay are the same as those listed above as specific examples of the alkyl group with a carbon number of 1 to 20 of the alkyl group with a carbon number of 1 to 20 that may have a substituent, the alkenyl group with a carbon number of 2 to 20 of the alkenyl group with a carbon number of 2 to 20 that may have a substituent, and the cycloalkyl group with a carbon number of 3 to 12 of the cycloalkyl group with a carbon number of 3 to 12 that may have a substituent for $R^b$. The carbon number of the alkyl group with a carbon number of 1 to 20 that may have a substituent is preferably 1 to 10. The carbon number of the alkenyl group with a carbon number of 2 to 20 that may have a substituent is preferably 2 to 10. The carbon number of the cycloalkyl group with a carbon number of 3 to 12 that may have a substituent is preferably 3 to 10.

Examples of the alkynyl group with a carbon number of 2 to 20 of the alkynyl group with a carbon number of 2 to 20 that may have a substituent for Ay include ethynyl group, propynyl group, 2-propynyl group (propargyl group), butynyl group, 2-butynyl group, 3-butynyl group, pentynyl group, 2-pentynyl group, hexynyl group, 5-hexynyl group, heptynyl group, octynyl group, 2-octynyl group, nonanyl group, decanyl group, and 7-decanyl group.

Examples of the substituent of the alkyl group with a carbon number of 1 to 20 that may have a substituent, the alkenyl group with a carbon number of 2 to 20 that may have a substituent, the cycloalkyl group with a carbon number of 3 to 12 that may have a substituent, and the alkynyl group with a carbon number of 2 to 20 that may have a substituent for Ay include: a halogen atom such as fluorine atom and chlorine atom; a cyano group; an N,N-dialkylamino group with a carbon number of 2 to 12 such as dimethylamino group; an alkoxy group with a carbon number of 1 to 20 such as methoxy group, ethoxy group, isopropoxy group, and butoxy group; an alkoxy group with a carbon number of 1 to 12 substituted by an alkoxy group with a carbon number of 1 to 12, such as methoxymethoxy group and methoxyethoxy group; a nitro group; an aromatic hydrocarbon ring group with a carbon number of 6 to 20 such as phenyl group and naphthyl group; an aromatic heterocyclic group with a carbon number of 2 to 20 such as triazolyl group, pyrrolyl group, furanyl group, and thiophenyl group; a cycloalkyl group with a carbon number of 3 to 8 such as cyclopropyl group, cyclopentyl group, and cyclohexyl group; a cycloalkyloxy group with a carbon number of 3 to 8 such as cyclopentyloxy group and cyclohexyloxy group; a cyclic ether group with a carbon number of 2 to 12 such as tetrahydrofuranyl group, tetrahydropyranyl group, dioxolanyl group, and dioxanyl group; an aryloxy group with a carbon number of 6 to 14 such as phenoxy group and naphthoxy group; a fluoroalkyl group with a carbon number of 1 to 12 at least one hydrogen atom of which is substituted by a fluorine atom, such as trifluoromethyl group, pentafluoroethyl group, and $-CH_2CF_3$; a benzofuryl group; a benzopyranyl group; a benzodioxolyl group; a benzodioxanyl group; $-O-C(=O)-R^b$; $-C(=O)-R^b$; $-C(=O)-O-R^b$; $-SO_2R^a$; $-SR^b$; an alkoxy group with a carbon number of 1 to 12 substituted by $-SR^b$; and a hydroxy group. Here, $R^a$ and $R^b$ are as defined above.

The alkyl group with a carbon number of 1 to 20, the alkenyl group with a carbon number of 2 to 20, the cycloalkyl group with a carbon number of 3 to 12, and the alkynyl group with a carbon number of 2 to 20 for Ay may have a plurality of substituents described above. In the case where the group has a plurality of substituents, the plurality of substituents

may be the same or different.

Examples of the aromatic hydrocarbon ring group with a carbon number of 6 to 30 and the aromatic heterocyclic group with a carbon number of 2 to 30 and their substituents for Ay are the same as those listed above as the aromatic hydrocarbon ring group and the aromatic heterocyclic group and their substituents for Ax. The aromatic hydrocarbon ring group with a carbon number of 6 to 30 and the aromatic heterocyclic group with a carbon number of 2 to 30 for Ay may each have a plurality of substituents selected from the foregoing substituents. In the case where the aromatic hydrocarbon ring group and the aromatic heterocyclic group for Ay each have a plurality of substituents, the plurality of substituents may be the same or different. The carbon number of the aromatic hydrocarbon ring group for Ay is preferably 6 to 20, more preferably 6 to 18, and further preferably 6 to 12. The carbon number of the aromatic heterocyclic group for Ay is preferably 2 to 20, and more preferably 2 to 18.

Of these, Ay is preferably a hydrogen atom, an alkyl group with a carbon number of 1 to 20 that may have a substituent, an alkenyl group with a carbon number of 2 to 20 that may have a substituent, an alkynyl group with a carbon number of 2 to 20 that may have a substituent, a cycloalkyl group with a carbon number of 3 to 12 that may have a substituent, an aromatic hydrocarbon ring group with a carbon number of 6 to 18 that may have a substituent, or an aromatic heterocyclic group with a carbon number of 2 to 18 that may have a substituent. Ay is more preferably a hydrogen atom, an alkyl group with a carbon number of 1 to 18 that may have a substituent, an alkenyl group with a carbon number of 2 to 18 that may have a substituent, an alkynyl group with a carbon number of 2 to 18 that may have a substituent, a cycloalkyl group with a carbon number of 3 to 10 that may have a substituent, an aromatic hydrocarbon ring group with a carbon number of 6 to 12 that may have a substituent, or an aromatic heterocyclic group with a carbon number of 2 to 18 that may have a substituent. Of these, Ay is particularly preferably an alkyl group with a carbon number of 1 to 18 that may have a substituent, and further preferably an alkyl group with a carbon number of 2 to 12 that may have a substituent.

Moreover, Q is a hydrogen atom or an alkyl group with a carbon number of 1 to 6. Examples of the alkyl group with a carbon number of 1 to 6 for Q include methyl group, ethyl group, n-propyl group, and isopropyl.

$R^0$ in the foregoing Formulas (III-1) to (III-3) is: a halogen atom; a cyano group; an alkyl group with a carbon number of 1 to 6 such as methyl group, ethyl group, propyl group, isopropyl group, butyl group, sec-butyl group, and tertiary butyl group; an alkenyl group with a carbon number of 2 to 6; an alkyl halide group with a carbon number of 1 to 6; an N,N-dialkylamino group with a carbon number of 2 to 12; an alkoxy group with a carbon number of 1 to 6; a nitro group; $-C(=O)-R^a$; $-C(=O)-O-R^a$; or $SO_2R^a$. $R^a$ is an alkyl group with a carbon number of 1 to 6 such as methyl group and ethyl group, or an aromatic hydrocarbon ring group with a carbon number of 6 to 20 that may have an alkyl group with a carbon number of 1 to 6 or an alkoxy group with a carbon number of 1 to 6 as a substituent such as phenyl group, 4-methylphenyl group, and 4-methoxyphenyl group. In the case where $R^a$ has a plurality of substituents, the plurality of substituents may be the same or different.

$R^0$ is preferably a halogen atom, a cyano group, an alkyl group with a carbon number of 1 to 6, an alkyl halide group with a carbon number of 1 to 6, an alkoxy group with a carbon number of 1 to 6, or a nitro group.

In each of Formulas (III-1) to (III-3), in the case where there are a plurality of $R^0$, they may be the same or different.

In Formula (III-1) to (III-3), n1 is an integer of 0 to 3, n2 is 0 or 1, n3 is an integer of 0 to 4, and n4 is an integer of 0 to 2. n1 to n4 are preferably 0.

$Ar^1$ (divalent aromatic hydrocarbon ring group having at least $D^1$ as a substituent or divalent aromatic heterocyclic group having at least $D^1$ as a substituent) is also preferably a group represented by any of the following Formulas (V-1) to (V-4). In $Ar^1$ represented by any of the following Formulas (V-1) to (V-4), $D^3$ is a substituent corresponding to $D^1$. In Formulas (V-3) and (V-4), $D^4$ corresponds to a substituent other than $D^1$.

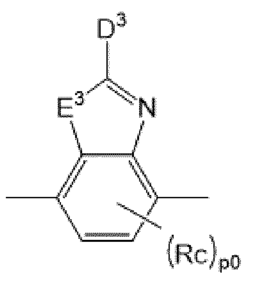
(V-1)

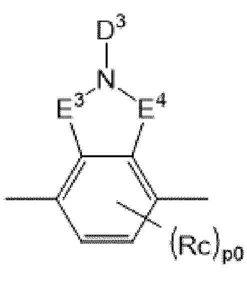
(V-2)

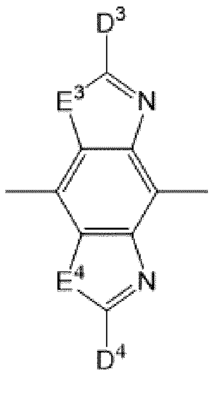
(V-3)

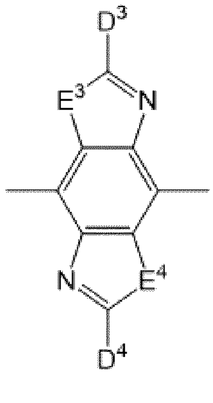
(V-4)

In Formulas (V-1) to (V-4), p0 is an integer of 0 to 2, and is preferably 0 or 1.

Rc is a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12.

In each of Formulas (V-1) to (V-2), in the case where there are a plurality of Rc, the plurality of Rc may be the same or different.

Examples of the halogen atom, the alkyl group with a carbon number of 1 to 6, the alkylsulfinyl group with a carbon number of 1 to 6, the fluoroalkyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 for Rc are the same as those listed as specific examples of the substituent other than $D^1$.

Examples of the alkylsulfonyl group with a carbon number of 1 to 6 for Rc include methylsulfonyl group, ethylsulfonyl group, propylsulfonyl group, isopropylsulfonyl group, butylsulfonyl group, isobutylsulfonyl group, sec-butylsulfonyl group, tert-butylsulfonyl group, pentylsulfonyl group, and hexylsulfonyl group.

The halogen atom for Rc is preferably fluorine atom, chlorine atom, or bromine atom.

The alkyl group with a carbon number of 1 to 6 for Rc is preferably alkyl group with a carbon number of 1 to 4, and particularly preferably tert-butyl group or methyl group.

The alkylsulfinyl group with a carbon number of 1 to 6 for Rc is preferably alkylsulfinyl group with a carbon number of 1 to 4, more preferably alkylsulfinyl group with a carbon number of 1 to 2, and particularly preferably methylsulfinyl group.

The alkylsulfonyl group with a carbon number of 1 to 6 for Rc is preferably alkylsulfonyl group with a carbon number of 1 to 4, more preferably alkylsulfonyl group with a carbon number of 1 to 2, and particularly preferably methylsulfonyl group.

The fluoroalkyl group with a carbon number of 1 to 6 for Rc is preferably fluoroalkyl group with a carbon number of 1 to 4, more preferably fluoroalkyl group with a carbon number of 1 to 2, and particularly preferably trifluoromethyl group.

The alkoxy group with a carbon number of 1 to 6 for Rc is preferably alkoxy group with a carbon number of 1 to 4, more preferably alkoxy group with a carbon number of 1 to 2, and particularly preferably methoxy group.

The thioalkyl group with a carbon number of 1 to 6 for Rc is preferably thioalkyl group with a carbon number of 1 to 4, more preferably thioalkyl group with a carbon number of 1 to 2, and particularly preferably methylthio group.

The N-alkylamino group with a carbon number of 1 to 6 for Rc is preferably N-alkylamino group with a carbon number of 1 to 4, more preferably N-alkylamino group with a carbon number of 1 to 2, and particularly preferably N-methylamino group.

The N,N-dialkylamino group with a carbon number of 2 to 12 for Rc is preferably N,N-dialkylamino group with a carbon number of 2 to 8, N,N-dialkylamino group with a carbon number of 2 to 4, and particularly preferably N,N-dimethylamino group.

The N-alkylsulfamoyl group with a carbon number of 1 to 6 for Rc is preferably N-alkylsulfamoyl group with a carbon number of 1 to 4, more preferably N-alkylsulfamoyl group with a carbon number of 1 to 2, and particularly preferably N-methylsulfamoyl group.

The N,N-dialkylsulfamoyl group with a carbon number of 2 to 12 for Rc is preferably N,N-dialkylsulfamoyl group with a carbon number of 2 to 8, more preferably N,N-dialkylsulfamoyl group with a carbon number of 2 to 4, and particularly preferably N,N-dimethylsulfamoyl group.

Of these, Rc is preferably halogen atom, tert-butyl group, methyl group, cyano group, nitro group, carboxyl group, methylsulfonyl group, trifluoromethyl group, methoxy group, methylthio group, N-methylamino group, N,N-dimethylamino group, N-methylsulfamoyl group, N,N-dimethylsulfamoyl group, or methylsulfinyl group.

In Formulas (V-1) to (V-4), $E^3$ and $E^4$ each independently represent $-CR^{24}R^{25}-$, -S-, $-NR^{24}-$, -C(=O)-, or -O-, and $R^{24}$ and $R^{25}$ each independently represent a hydrogen atom or an alkyl group with a carbon number of 1 to 4. Examples of the alkyl group with a carbon number of 1 to 4 in $R^{24}$ and $R^{25}$ include methyl group, ethyl group, n-propyl group, isopropyl group, butyl group, isobutyl group, sec-butyl group, and tert-butyl group. Alkyl group with a carbon number of 1 to 2 is preferable, and methyl group is more preferable.

$E^3$ and $E^4$ are preferably each independently -S-, -C(=O)-, -NH-, or $-N(CH_3)-$.

In Formulas (V-1) to (V-4), $D^3$ and $D^4$ each independently represent an aromatic hydrocarbon ring group that may have a substituent or an aromatic heterocyclic group that may have a substituent.

Specifically, examples of the aromatic hydrocarbon ring group for $D^3$ and $D^4$ include phenyl group, naphthyl group, anthracenyl group, phenanthrenyl group, pyrenyl group, and fluorenyl group.

Of these, the aromatic hydrocarbon ring group is preferably phenyl group or naphthyl group.

Examples of the aromatic heterocyclic group for $D^3$ and $D^4$ include phthalimide group, 1-benzofuranyl group, 2-benzofuranyl group, acrydinyl group, isoquinolinyl group, imidazolyl group, indolinyl group, furazanyl group, oxazolyl group, oxazolopyrazinyl group, oxazolopyridinyl group, oxazolopyridazinyl group, oxazolopyrimidinyl group, quinazolinyl group, quinoxalinyl group, quinolyl group, cinnolinyl group, thiadiazolyl group, thiazolyl group, thiazolopyrazinyl group, thiazolopyridyl group, thiazolopyridazinyl group, thiazolopyrimidinyl group, 2-thienyl group, 3-thienyl group, triazinyl group, triazolyl group, naphthyridinyl group, pyrazinyl group, pyrazolyl group, pyranonyl group, pyranyl group, pyridyl group, pyridazinyl group, pyrimidinyl group, pyrrolyl group, phenanthridinyl group, phthalazinyl group, furanyl group, benzo[c]thienyl group, benzoisoxazolyl group, benzoisothiazolyl group, benzoimidazolyl group, benzoxazolyl group, benzothiadiazolyl group, benzothiazolyl group, benzothienyl group, benzotriadinyl group, benzotriazolyl group, benzopyrazolyl group, benzopyranonyl group, dihydropyranyl group, tetrahydropyranyl group, dihydrofuranyl group, and tetrahydrofuranyl group.

Of these, the aromatic heterocyclic group is preferably furanyl group, 2-thienyl group, 3-thienyl group, oxazolyl group, thiazolyl group, benzothiazolyl group, benzoxazolyl group, 1-benzofuranyl group, 2-benzofuranyl group, benzothienyl group, or thiazolopyridiyl group.

The aromatic hydrocarbon ring group and the aromatic heterocyclic group for $D^3$ and $D^4$ may be substituted by a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12.

The aromatic hydrocarbon ring group and the aromatic heterocyclic group may have one or more substituents selected from the foregoing substituents. In the case where the group has a plurality of substituents, the plurality of substituents may be the same or different.

Specific examples and preferred examples of the halogen atom, the alkyl group with a carbon number of 1 to 6, the alkylsulfinyl group with a carbon number of 1 to 6, the alkylsulfonyl group with a carbon number of 1 to 6, the fluoroalkyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 of the substituent of $D^3$ and $D^4$ are the same as those listed as specific examples and preferred examples of the halogen atom, the alkyl group with a carbon number of 1 to 6, the alkylsulfinyl group with a carbon number of 1 to 6, the alkylsulfonyl group with a carbon number of 1 to 6, the fluoroalkyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 for Rc.

$D^3$ and $D^4$ are preferably each independently a group represented by any of the following Formulas (v-1) to (v-8).

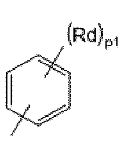 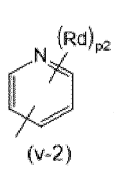 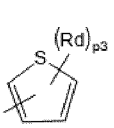 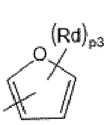 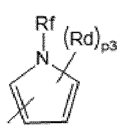 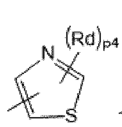 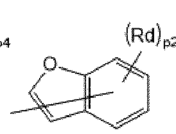 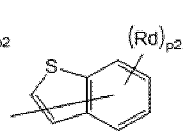

(v-1) (v-2) (v-3) (v-4) (v-5) (v-6) (v-7) (v-8)

In Formulas (v-1) to (v-8), Rd represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12. p1 represents an integer of 0 to 5, p2 represents an integer of 0 to 4, p3 represents an integer of 0 to 3, and p4 represents an integer of 0 to 2. p1, p3, and p4 are preferably 0 or 1, and p2 is preferably an integer of 0 to 3. Rf represents a hydrogen atom or a methyl group.

In each of Formulas (v-1) to (v-8), in the case where there are a plurality of Rd, the plurality of Rd may be the same or different.

Specific examples and preferred examples of the halogen atom, the alkyl group with a carbon number of 1 to 6, the alkylsulfinyl group with a carbon number of 1 to 6, the alkylsulfonyl group with a carbon number of 1 to 6, the

fluoroalkyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 for Rd are the same as those listed as specific examples and preferred examples of the halogen atom, the alkyl group with a carbon number of 1 to 6, the alkylsulfinyl group with a carbon number of 1 to 6, the alkylsulfonyl group with a carbon number of 1 to 6, the fluoroalkyl group with a carbon number of 1 to 6, the alkoxy group with a carbon number of 1 to 6, the thioalkyl group with a carbon number of 1 to 6, the N-alkylamino group with a carbon number of 1 to 6, the N,N-dialkylamino group with a carbon number of 2 to 12, the N-alkylsulfamoyl group with a carbon number of 1 to 6, and the N,N-dialkylsulfamoyl group with a carbon number of 2 to 12 for Rc.

Rd is preferably a halogen atom, a methyl group, a cyano group, a nitro group, a carboxyl group, a trifluoromethyl group, a methoxy group, a methylthio group, an N,N-dimethylamino group, or an N-methylamino group.

$D^3$ and $D^4$ are particularly preferably each independently a group represented by Formula (v-1), (v-3), or (v-7), in terms of the optical properties of the polymerizable compound (I) and the costs.

$Ar^1$ formed by a group represented by any of the foregoing Formulas (V-1) to (V-4) is more preferably a group represented by any of the following Formulas (VI-1) to (VI-5).

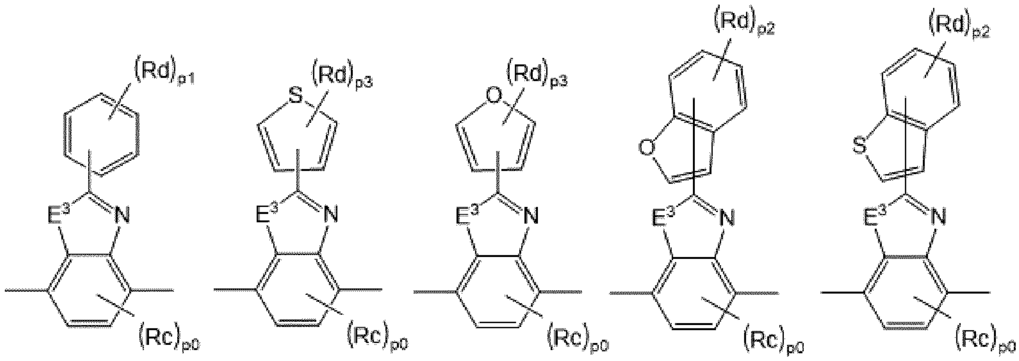

(VI-1) (VI-2) (VI-3) (VI-4) (VI-5)

In Formulas (VI-1) to (VI-5), $E^3$, Rc, Rd, and p0 to p3 are as defined above, and their preferred examples are the same as above.

The following Formulas (ar-1) to (ar-94) represent specific examples of $Ar^2$ formed by a group represented by any of the foregoing Formulas (V-1) to (V-4).

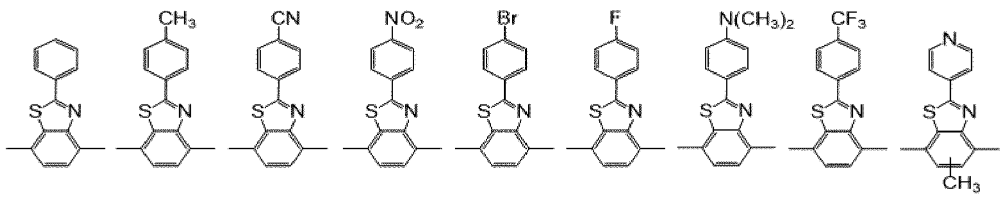

(ar-1) (ar-2) (ar-3) (ar-4) (ar-5) (ar-6) (ar-7) (ar-8) (ar-9)

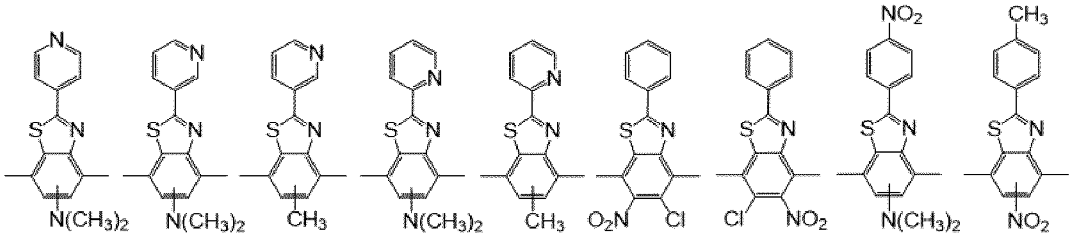

(ar-10) (ar-11) (ar-12) (ar-13) (ar-14) (ar-15) (ar-16) (ar-17) (ar-18)

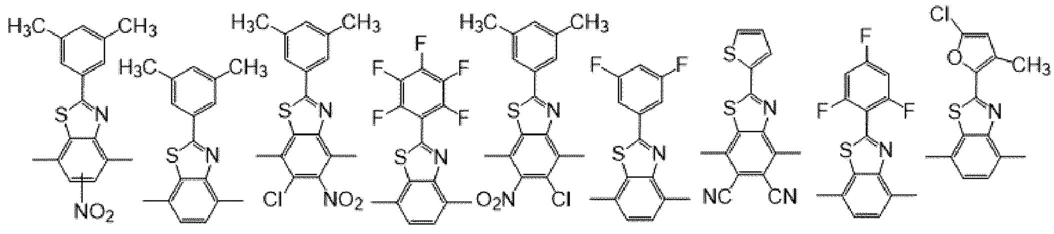

(ar-19) (ar-20) (ar-21) (ar-22) (ar-23) (ar-24) (ar-25) (ar-26) (ar-27)

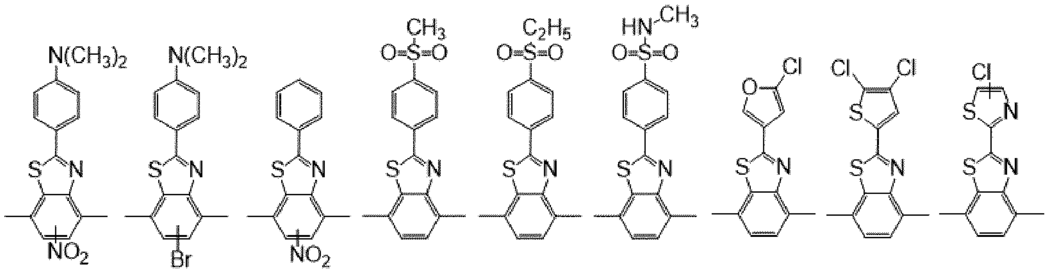

(ar-28) (ar-29) (ar-30) (ar-31) (ar-32) (ar-33) (ar-34) (ar-35) (ar-36)

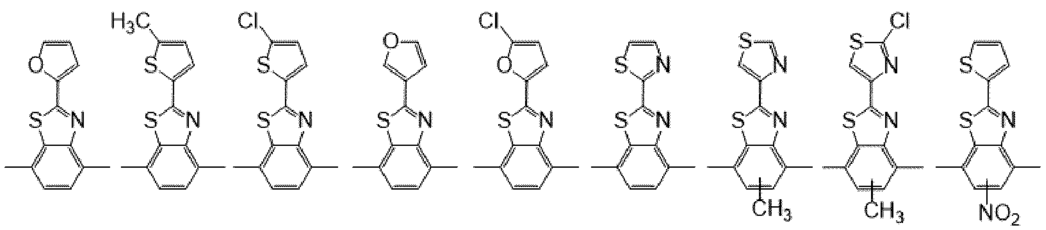

(ar-37) (ar-38) (ar-39) (ar-40) (ar-41) (ar-42) (ar-43) (ar-44) (ar-45)

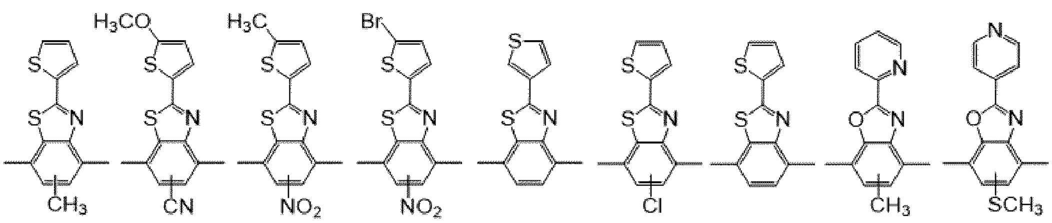

(ar-46) (ar-47) (ar-48) (ar-49) (ar-50) (ar-51) (ar-52) (ar-53) (ar-54)

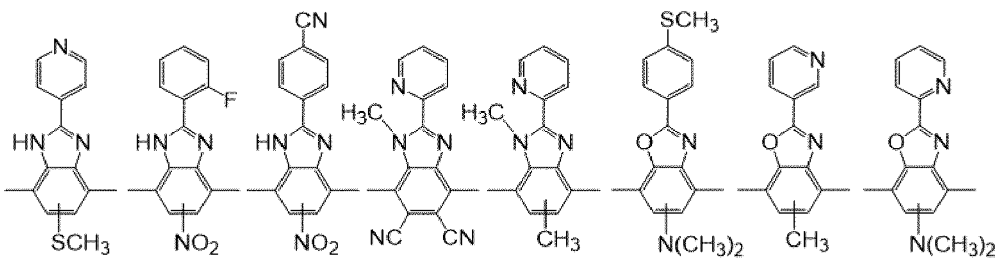

(ar-55) (ar-56) (ar-57) (ar-58) (ar-59) (ar-60) (ar-61) (ar-62)

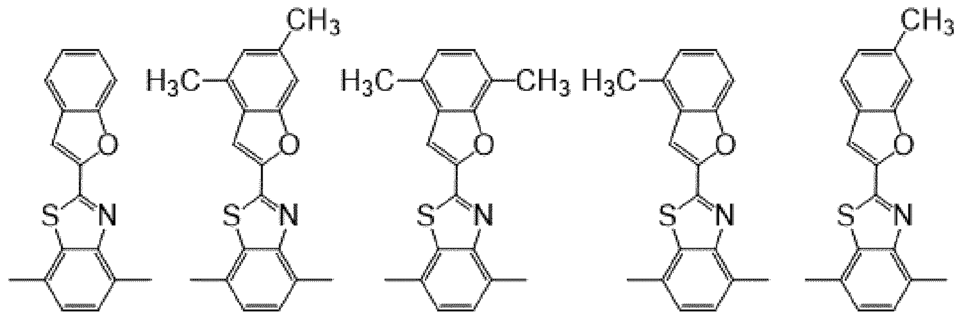

(ar-63) (ar-64) (ar-65) (ar-66) (ar-67)

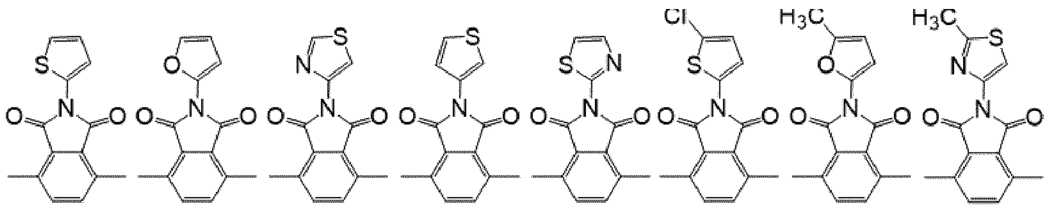

(ar-68) (ar-69) (ar-70) (ar-71) (ar-72) (ar-73) (ar-74) (ar-75)

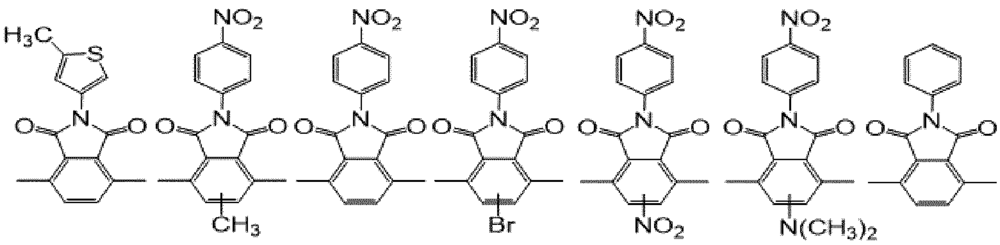

(ar-76) (ar-77) (ar-78) (ar-79) (ar-80) (ar-81) (ar-82)

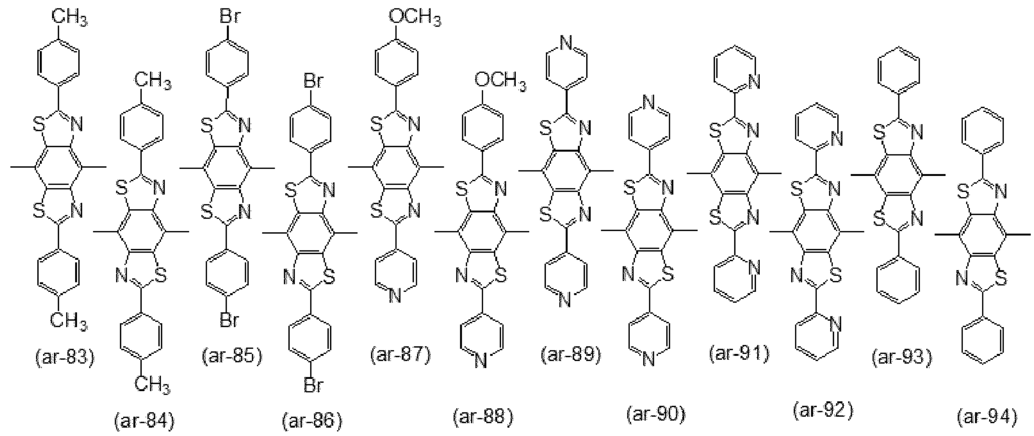

(ar-83) (ar-84) (ar-85) (ar-86) (ar-87) (ar-88) (ar-89) (ar-90) (ar-91) (ar-92) (ar-93) (ar-94)

In the foregoing Formula (I), $Z^1$ and $Z^2$ are each independently a single bond, -O-, $-O-CH_2-$, $-CH_2-O-$, -C(=O)-O-, -O-C(=O)-, -C(=O)-S-, -S-C(=O)-, $-NR^{21}-C(=O)-$, $-C(=O)-NR^{21}-$, $-CF_2-O-$, $-O-CF_2-$, $-CH_2-CH_2-$, $-CF_2-CF_2-$, $-O-CH_2-CH_2-O-$, -CH=CH-C(=O)-O-, -O-C(=O)-CH=CH-, $-CH_2-CH_2-C(=O)-O-$, $-O-C(=O)-CH_2-CH_2-$, $-CH_2-CH_2-O-C(=O)-$, $-C(=O)-O-CH_2-CH_2-$, -CH=CH-, -N=CH-, -CH=N-, $-N=C(CH_3)-$, $-C(CH_3)=N-$, -N=N-, or -C≡C-. $R^{21}$ is a hydrogen atom or an alkyl group with a carbon number of 1 to 6. Examples of the alkyl group with a carbon number of 1 to 6 for $R^{21}$ include methyl group, ethyl group, propyl group, and isopropyl group.

Of these, $Z^1$ is preferably -C(=O)-O-, and $Z^2$ is preferably -O-C(=O)-.

$A^1$ and $A^2$ are each independently a cyclic aliphatic group that may have a substituent or an aromatic group that may have a substituent. Of these, $A^1$ and $A^2$ are each preferably a cyclic aliphatic group that may have a substituent.

The cyclic aliphatic group that may have a substituent is an unsubstituted divalent cyclic aliphatic group or a divalent cyclic aliphatic group having a substituent. The divalent cyclic aliphatic group is a divalent aliphatic group having a cyclic structure and typically with a carbon number of 5 to 20.

Specific examples of the divalent cyclic aliphatic group for $A^1$ and $A^2$ include: a cycloalkanediyl group with a carbon number of 5 to 20 such as cyclopentane-1,3-diyl, cyclohexane-1,4-diyl, cycloheptane-1,4-diyl, and cycloctane-1,5-diyl; and a bicycloalkanediyl group with a carbon number of 5 to 20 such as decahydronaphthalene-1,5-diyl and decahydronaphthalene-2,6-diyl.

The aromatic group that may have a substituent is an unsubstituted divalent aromatic group or a divalent aromatic group having a substituent. The divalent aromatic group is a divalent aromatic group having an aromatic ring structure and typically with a carbon number of 2 to 20.

Specific examples of the divalent aromatic group for $A^1$ and $A^2$ include: a divalent aromatic hydrocarbon ring group with a carbon number of 6 to 20 such as 1,4-phenylene group, 1,4-naphthylene group, 1,5-naphthylene group, 2,6-naphthylene group, and 4,4'-biphenylene group; and a divalent aromatic heterocyclic group with a carbon number of 2 to 20 such as furan-2,5-diyl, thiophene-2,5-diyl, pyridine-2,5-diyl, and pyrazine-2,5-diyl.

Examples of the substituent of the divalent cyclic aliphatic group and the divalent aromatic group for $A^1$ and $A^2$ include: a halogen atom such as fluorine atom, chlorine atom, and bromine atom; an alkyl group with a carbon number of 1 to 6 such as methyl group and ethyl group; an alkoxy group with a carbon number of 1 to 5 such as methoxy group and isopropoxy group; a nitro group; and a cyano group. The cyclic aliphatic group and the aromatic group may each have at least one substituent selected from the foregoing substituents. In the case where the group has a plurality of substituents, the substituents may be the same or different.

In the case where a and/or b is 1, $L^1$ and $L^2$ are each independently a single bond, -O-, -C(=O)-, -C(=O)-O-, -O-C(=O)-, $-NR^{22}-C(=O)-$, $-C(=O)-NR^{22}-$, -O-C(=O)-O-, $-NR^{22}-C(=O)-O-$, $-O-C(=O)-NR^{22}-$, or $-NR^{22}-C(=O)-NR^{23}-$. $R^{22}$ and $R^{23}$ are each independently a hydrogen atom or an alkyl group with a carbon number of 1 to 6. Of these, $L^1$ and $L^2$ are preferably each independently -O-, -C(=O)-O-, or -O-C(=O)-.

Examples of the alkyl group with a carbon number of 1 to 6 for $R^{22}$ and $R^{23}$ include methyl group, ethyl group, propyl group, and isopropyl group.

In the case where a and/or b is 1, $B^1$ and $B^2$ are each independently a cyclic aliphatic group that may have a substituent or an aromatic group that may have a substituent. Of these, $B^1$ and $B^2$ are preferably an aromatic group that may have a substituent.

The cyclic aliphatic group that may have a substituent is an unsubstituted divalent cyclic aliphatic group or a divalent cyclic aliphatic group having a substituent. The divalent cyclic aliphatic group is a divalent aliphatic group having a cyclic structure and typically with a carbon number of 5 to 20.

Specific examples of the divalent cyclic aliphatic group for $B^1$ and $B^2$ are the same as those listed above as the divalent cyclic aliphatic group for $A^1$.

The aromatic group that may have a substituent is an unsubstituted divalent aromatic group or a divalent aromatic group having a substituent. The divalent aromatic group is a divalent aromatic group having an aromatic ring structure and typically with a carbon number of 2 to 20.

Specific examples of the divalent aromatic group for $B^1$ and $B^2$ are the same as those listed above as the divalent aromatic group for $A^1$.

Specific examples of the substituent of the divalent cyclic aliphatic group and the divalent aromatic group for $B^1$ and $B^2$ are the same as those listed above as the substituent of the divalent cyclic aliphatic group and the divalent aromatic group for $A^1$.

$Y^1$ and $Y^2$ are each independently a single bond, -O-, -C(=O)-, -C(=O)-O-, -O-C(=O)-, $-NR^{22}-C(=O)-$, $-C(=O)-NR^{22}-$, -O-C(=O)-O-, $-NR^{22}-C(=O)-O-$, $-O-C(=O)-NR^{22}-$, or $-NR^{22}-C(=O)-NR^{23}-$, $R^{22}$ and $R^{23}$ are each independently a hydrogen atom or an alkyl group with a carbon number of 1 to 6. Of these, $Y^1$ and $Y^2$ are preferably each independently -O-, -C(=O)-O-, or -O-C(=O)-.

Examples of the alkyl group with a carbon number of 1 to 6 for $R^{22}$ and $R^{23}$ include methyl group, ethyl group, propyl group, and isopropyl group.

$R^1$ to $R^4$ are each independently a hydrogen atom, a methyl group, or a chlorine atom, and preferably a hydrogen atom or a methyl group. More preferably, all of $R^1$ to $R^4$ are the same. Further preferably, all of $R^1$ to $R^4$ are a hydrogen atom.

In terms of obtaining an optical film, etc. having excellent reverse wavelength dispersibility, the polymerizable compound (I) preferably has a structure that is approximately bilaterally symmetric with respect to $Ar^1$. Specifically, it is preferable that, in the polymerizable compound (I), $R^1$, a, and c are respectively the same as $R^4$, b, and d and $-Y^1-[B^1-L^1]_a-A^1-Z^1-(*)$ and $(*)-Z^2-A^2-[L^2-B^2]_b-Y^2-$ have a symmetric structure with respect to the side (*) on which $-Y^1-[B^1-L^1]_a-A^1-Z^1-(*)$ and $(*)-Z^2-A^2-[L^2-B^2]_b-Y^2-$ bond with $Ar^1$.

The expression "having a symmetric structure with respect to (*)" means, for example, to have a structure of -C(=O)-O-(*) and (*)-O-C(=O)-, a structure of -O-(*) and (*)-O-, or a structure of -O-C(=O)-(*) and (*)-C(=O)-O-.

The polymerizable compound (I) can be synthesized by combining synthesis reactions known in the art. Specifically, the polymerizable compound (I) can be synthesized with reference to methods described in various literatures (e.g. March's Advanced Organic Chemistry (Wiley), S.R. Sandler and W. Karo "Organic Functional Group Preparations", jointly translated by Naoki Inamoto (Hirokawa Shoten)) and JP 2010-031223 A.

(1-2) Polymerizable compound (II)

In Formula (II), g and h are each independently 0 or 1, and preferably 1. i and j are each independently an integer of 1 to 20, preferably an integer of 2 to 12, and more preferably an integer of 4 to 8.

Specific examples and preferred examples of $Ar^2$ in Formula (II) are the same as those listed as specific examples and preferred examples of $Ar^1$.

Specific examples and preferred examples of $Z^3$ and $Z^4$ are the same as those listed as specific examples and preferred examples of $Z^1$ and $Z^2$.

Specific examples and preferred examples of $A^3$ and $A^4$ are the same as those listed as specific examples and preferred examples of $A^1$ and $A^2$.

In the case where g and/or h is 1, specific examples and preferred examples of $L^3$ and $L^4$ are the same as those listed as specific examples and preferred examples of $L^1$ and $L^2$.

In the case where g and/or h is 1, specific examples and preferred examples of $B^3$ and $B^4$ are the same as those listed as specific examples and preferred examples of $B^1$ and $B^2$.

Specific examples and preferred examples of $Y^3$ and $Y^4$ are the same as those listed as specific examples and preferred examples of $Y^1$ and $Y^2$.

Specific examples and preferred examples of $R^5$ and $R^6$ are the same as those listed as specific examples and preferred examples of $R^1$ and $R^4$.

In terms of obtaining an optical film, etc. having excellent reverse wavelength dispersibility, the polymerizable compound (II) preferably has a structure that is bilaterally symmetric with respect to $Ar^2$. Specifically, it is preferable that, in the polymerizable compound (II), $R^5$, g, and i are respectively the same as $R^6$, h, and j and $-Y^3-[B^3-L^3]_g-A^3-Z^3-(*)$ and $(*)-Z^4-A^4-[L^4-B^4]_h-Y^4-$ have a symmetric structure with respect to the side (*) on which $-Y^3-[B^3-L^3]_g-A^3-Z^3-(*)$ and $(*)-Z^4-A^4-[L^4-B^4{}_h-Y^4-$ bond with $Ar^2$.

The expression "having a symmetric structure with respect to (*)" means, for example, to have a structure of -C(=O)-O-(*) and (*)-O-C(=O)-, a structure of -O-(*) and (*)-O-, or a structure of -O-C(=O)-(*) and (*)-C(=O)-O-.

The polymerizable compound (II) can be produced by combining synthesis reactions known in the art. Specifically, the polymerizable compound (I) can be synthesized with reference to methods described in various literatures (e.g. March's Advanced Organic Chemistry (Wiley), S.R. Sandler and W. Karo "Organic Functional Group Preparations", jointly translated by Naoki Inamoto (Hirokawa Shoten)) and JP 2010-031223 A.

In terms of enhancing the reverse wavelength dispersibility of an optical film, etc., it is preferable that $Ar^1$, $Z^1$, $Z^2$, $A^1$, $A^2$, $B^1$, $B^2$, $Y^1$, $Y^2$, $L^1$, $L^2$, $R^1$, $R^4$, and a to d of the polymerizable compound (I) are respectively the same as $Ar^2$, $Z^3$, $Z^4$, $A^3$, $A^4$, $B^3$, $B^4$, $Y^3$, $Y^4$, $L^3$, $L^4$, $R^5$, $R^6$, and g to j of the polymerizable compound (II) in the presently disclosed mixture, without being limited thereto.

That is, the polymerizable compound (II) preferably has the same structure as the polymerizable compound (I), except that it does not have "$-(CH_2CHR^2C(=O)O)_e-$" between "$CH_2CR^1C(=O)O-$" and "$-(CH_2)_c-$" and does not have "$-(OC(=O)CHR^3CH_2)_f-$" between "$-OC(=O)CR^4CH_2$" and "$-(CH_2)_d-$".

(2) Preparation of mixture containing polymerizable compounds

The mixture containing polymerizable compounds can be, for example, prepared by mixing, at a desired proportion, one or more types of the polymerizable compound (I) and one or more types of the polymerizable compound (II) prepared separately, or by mixing, at a desired proportion, only a plurality of types of the polymerizable compound (I) without using the polymerizable compound (II), without being limited thereto.

The mixture containing polymerizable compounds including the polymerizable compounds (I) and (II) can also be prepared using a mixture of compounds (Ia) and (IIa) described below, without being limited thereto.

(2-1) Compound mixture

The presently disclosed compound mixture is a mixture containing the compound (Ia) represented by the following Formula (Ia) and the compound (IIa) represented by the following Formula (IIa). The presently disclosed compound mixture can be, for example, prepared by mixing, at a desired proportion, the compounds (Ia) and (IIa) prepared separately, without being limited thereto.

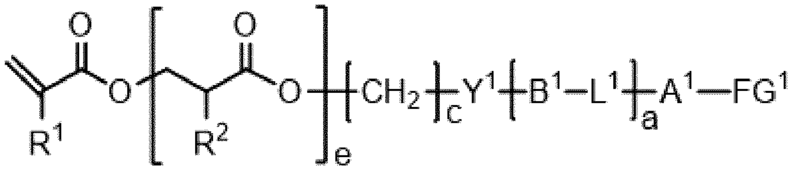

(I a)

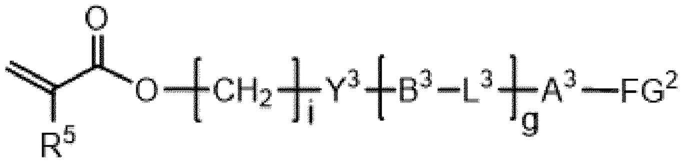

(I I a)

In terms of easily preparing the mixture containing the polymerizable compounds, it is necessary that the content of the compound (Ia) is more than 0.2 times the content of the compound (IIa) by mass in the presently disclosed mixture.

The content of the compound (Ia) is preferably 0.3 times or more the content of the compound (IIa), and preferably 100 times or less and more preferably 50 times or less the content of the compound (IIa).

(2-1-1) Compound (Ia)

In Formula (Ia), $A^1$, $L^1$, $B^1$, $Y^1$, $R^1$, $R^2$, a, c, and e are as defined above, and their preferred examples are the same as above. $A^1$ is preferably an aromatic group that may have a substituent in the case where a is 0, and preferably a cyclic aliphatic group that may have a substituent in the case where a is 1.

$FG^1$ is a hydroxyl group, a carboxyl group, or an amino group. $FG^1$ is preferably a hydroxyl group in the case where a is 0, and preferably a carboxyl group in the case where a is 1.

The compound (Ia) can be synthesized by combining synthesis reactions known in the art. Specifically, the polymerizable compound (I) can be synthesized with reference to methods described in various literatures (e.g. March's Advanced Organic Chemistry (Wiley), S.R. Sandler and W. Karo "Organic Functional Group Preparations", jointly translated by Naoki Inamoto (Hirokawa Shoten)).

(2-1-2) Compound (IIa)

In Formula (IIa), $A^3$, $L^3$, $B^3$, $Y^3$, $R^5$, g, and i are as defined above, and their preferred examples are the same as above. $A^3$ is preferably an aromatic group that may have a substituent in the case where g is 0, and preferably a cyclic aliphatic group that may have a substituent in the case where g is 1.

$FG^2$ is a hydroxyl group, a carboxyl group, or an amino group. $FG^2$ is preferably a hydroxyl group in the case where g is 0, and preferably a carboxyl group in the case where g is 1.

The compound (IIa) can be synthesized by combining synthesis reactions known in the art. Specifically, the polymerizable compound (I) can be synthesized with reference to methods described in various literatures (e.g. March's Advanced Organic Chemistry (Wiley), S.R. Sandler and W. Karo "Organic Functional Group Preparations", jointly translated by Naoki Inamoto (Hirokawa Shoten)).

(2-2) Production method for mixture containing polymerizable compounds

A method of producing the mixture containing the polymerizable compounds (I) and (II) using the presently disclosed compound mixture is, for example, a production method including a step of causing esterification reaction or amidation reaction between the above-described compound mixture and a compound represented by the following Formula (VII), without being limited thereto.

As the compound represented by the following Formula (VII), one type may be used alone, or two or more types of compounds that differ in structure from each other (compounds that differ in at least one of $FG^a$, Ar, and $FG^b$) may be used.

$$FG^a\text{-}Ar\text{-}FG^b \qquad (VII)$$

In Formula (VII), Ar is a divalent aromatic hydrocarbon ring group having at least D as a substituent or a divalent aromatic heterocyclic group having at least D as a substituent.

Specific examples and preferred examples of the divalent aromatic hydrocarbon ring group and the divalent aromatic heterocyclic group for Ar are the same as those listed as specific examples and preferred examples of the divalent aromatic hydrocarbon ring group and the divalent aromatic heterocyclic group for $Ar^1$.

D is an organic group with a carbon number of 1 to 67 having at least one aromatic ring selected from the group consisting of an aromatic hydrocarbon ring and an aromatic heterocyclic ring, or -C(=O)-$R^{26}$. $R^{26}$ is a hydrogen atom, or an alkyl group with a carbon number of 1 to 6 such as methyl group, ethyl group, n-propyl group, isopropyl group, n-butyl group, isobutyl group, sec-butyl group, tert-butyl group, pentyl group, and hexyl group.

Specific examples and preferred examples of the organic group with a carbon number of 1 to 67 having at least one aromatic ring selected from the group consisting of an aromatic hydrocarbon ring and an aromatic heterocyclic ring for D are the same as those listed as specific examples and preferred examples of the $D^1$.

Specific examples and preferred examples of the substituent(s) other than D which Ar may have are the same as those listed as specific examples and preferred examples of the substituent(s) other than $D^1$.

In Formula (VII), $FG^a$ and $FG^b$ may form an ester bond or an amide bond with $FG^1$ in the compound (Ia) and $FG^2$ in the compound (IIa). For example, in the case of causing esterification reaction, $FG^a$ and $FG^b$ are each independently a hydroxyl group or a carboxyl group. In the case of causing amidation reaction, $FG^a$ and $FG^b$ are each independently an amino group or a carboxyl group.

Esterification reaction or amidation reaction between the compound mixture and the compound represented by Formula (VII) yields the following mixture of polymerizable compounds.

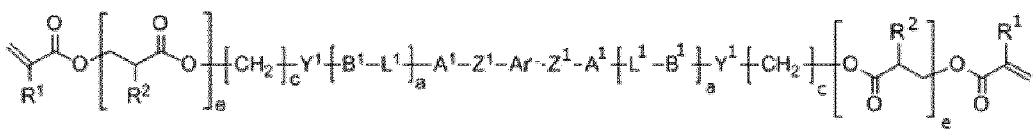

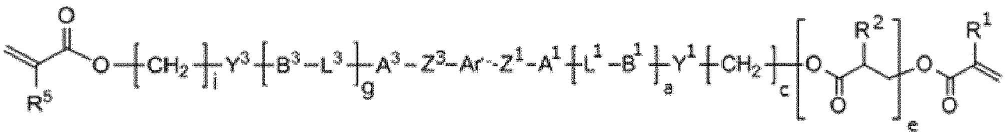

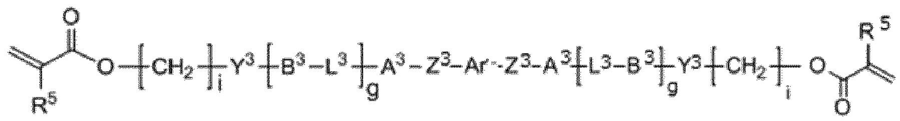

In the formula, Ar, $A^1$, $L^1$, $B^1$, $Y^1$, $R^1$, $R^2$, a, c, and e and $A^3$, $L^3$, $B^3$, $Y^3$, $R^5$, g, and i are as defined above, and their preferred examples are the same as above. $Z^1$ is an ester bond (-O-C(=O)- or -C(=O)-O-) or an amide bond (-$NR^{21}$-C(=O)-, -C(=O)-$NR^{21}$-, where $R^{21}$ is as defined above) formed between $FG^1$ in the compound (Ia) and $FG^a$ and/or $FG^b$ in the compound represented by Formula (VII), and $Z^3$ is an ester bond (-O-C(=O)- or -C(=O)-O-) or an amide bond (-$NR^{21}$-C(=O)-, -C(=O)-$NR^{21}$-, where $R^{21}$ is as defined above) formed between $FG^2$ in the compound (IIa) and $FG^a$ and/or $FG^b$ in the compound represented by Formula (VII).

In the case where D of Ar is -C(=O)-$R^{26}$, the mixture containing the polymerizable compounds (I) and (II) can be obtained by converting D into $D^1$ using a known technique.

The above-described esterification reaction or amidation reaction is not limited, and can be performed using a known method. As reaction mode, a mode employed in organic synthesis in general may be used, such as a condensation reaction using a dehydration condensation agent or a method of derivatizing the compound represented by Formula (Ia) and the compound represented by Formula (IIa) to acid halide or mixed acid anhydride to activate them and then causing reaction in the presence of a base.

A solvent used in the reaction is not limited as long as it is inert. Examples include: chlorine-based solvents such as chloroform and methylene chloride; amide-based solvents such as N-methylpyrrolidone, N,N-dimethylformamide, N,N-dimethylacetamide, and hexamethylphosphoric triamide; ether solvents such as 1,4-dioxane, cyclopentyl methyl ether, tetrahydrofuran, tetrahydropyran, and 1,3-dioxolane; sulfur-containing solvents such as dimethylsulfoxide and sulfolane; aromatic hydrocarbon-based solvents such as benzene, toluene, and xylene; aliphatic hydrocarbon-based solvents such as n-pentane, n-hexane, and n-octane; alicyclic hydrocarbon-based solvents such as cyclopentane and cyclohexane; and mixed solvents containing two or more thereof. Of these, chlorine-based solvents such as chloroform and methylene chloride, amide-based solvents such as N-methylpyrrolidone, N,N-dimethylformamide, N,N-dimethylacetamide, and hexamethylphosphoric triamide, and ether solvents such as 1,4-dioxane, cyclopentyl methyl ether, tetrahydrofuran, tetrahydropyran, and 1,3-dioxolane are preferable.

Examples of the dehydration condensation agent include, but are not limited to, N,N'-diisopropylcarbodiimide, 1-ethyl-3-(3-dimethyl aminopropyl)carbodiimide hydrochloride, and dicyclohexylcarbodiimide. Of these, N,N-diisopropylcarbodiimide and 1-ethyl-3-(3-dimethylaminopropyl)carbodiimide hydrochloride are preferable.

When using the dehydration condensation agent, an activator such as 4-(dimethylamino)pyridine may be used together.

The derivatization to acid halide can be performed using a halogenating agent such as phosphorus trichloride, phosphorus pentachloride, thionyl chloride, or oxalyl chloride, without being limited thereto. Of these, thionyl chloride and oxalyl chloride are preferable.

The derivatization to mixed acid anhydride can be performed in the presence of a sulfonyl halide such as methanesulfonyl chloride or p-toluenesulfonyl chloride and a base such as triethylamine, diisopropylethylamine, pyridine, or 4-(dimethylamino)pyridine, without being limited thereto.

Examples of the base used in the esterification reaction or amidation reaction include triethylamine, diisopropylethylamine, pyridine, 4-(dimethylamino)pyridine, sodium hydroxide, potassium hydroxide, sodium carbonate, potassium carbonate, and cesium carbonate. Of these, triethylamine and diisopropylethylamine are preferable.

The reaction conditions of the esterification reaction or amidation reaction can be adjusted as appropriate.

The esterification reaction or amidation reaction between the compound mixture and the compound represented by Formula (VII) may be performed so that $FG^a$ and $FG^b$ in the compound represented by Formula (VII) undergo esterification reaction or amidation reaction all at once.

In the case of causing esterification reaction or amidation reaction of $FG^a$ and $FG^b$ all at once, for example 2.0 to 3.0 equivalents, preferably 2.0 to 2.8 equivalents, and further preferably 2.1 to 2.6 equivalents of the compound mixture may be used with respect to the compound represented by Formula (VII).

As the method of producing the mixture containing the polymerizable compounds (I) and (II), for example, the following method by stepwise reaction may be used: Step (A) of causing esterification reaction or amidation reaction between the compound represented by Formula (VII) and the compound (Ia) represented by Formula (Ia), the compound (IIa) represented by Formula (IIa), or the compound mixture is followed by, without aftertreatment, step (B) of causing esterification reaction or amidation reaction between a reaction product of step (A) and a different one of the compound (Ia) represented by Formula (Ia), the compound (IIa) represented by Formula (IIa), and the compound mixture from step (A).

In the case of causing stepwise esterification reaction or amidation reaction of $FG^a$ and $FG^b$, in the first reaction (step (A)), for example less than 2.0 equivalents, preferably less than 1.5 equivalents, and further preferably 0.05 to 1.0 equivalents of the compound (Ia), the compound (IIa), or the mixture is used with respect to the compound represented by Formula (VII). In the second reaction (step (B)) which follows, the compound (Ia), the compound (IIa), or the mixture is used so that the total usage of the compound (Ia), the compound (IIa), and the mixture (the total of the usage in step (A) and the usage in step (B)) is for example 2.0 to 3.0 equivalents and preferably 2.0 to 2.6 equivalents with respect to the compound represented by Formula (VII). Specifically, in the second reaction, for example 0.5 equivalents or more and preferably 1.95 to 1.6 equivalents of the compound (Ia), the compound (IIa), or the mixture is used. Typically, the compound (Ia) or the mixture is used in at least one of steps (A) and (B).

(3) Polymerizable liquid crystal composition

A polymerizable liquid crystal composition using the presently disclosed mixture contains the foregoing mixture containing polymerizable compounds (the mixture containing the polymerizable compounds (I) and (II) or the mixture containing two or more types of the polymerizable compound (I) without substantially containing the polymerizable compound (II)) and a polymerization initiator.

As described later, the polymerizable liquid crystal composition using the presently disclosed mixture is useful as the raw material for the manufacture of the presently disclosed polymer, optical film, and optically anisotropic product. The use of the polymerizable liquid crystal composition using the presently disclosed mixture allows for efficient production of an optical film, etc. capable of uniform polarized light conversion over a wide wavelength range.

The polymerization initiator is blended for more efficient polymerization reaction of the polymerizable compounds contained in the polymerizable liquid crystal composition.

Examples of polymerization initiators used include radical polymerization initiators, anion polymerization initiators, and cation polymerization initiators.

For radical polymerization initiators, both of thermal radical generators (compounds that on heating generate active species that may initiate polymerization of polymerizable compounds) and photo-radical generators (compounds that on exposure to exposure light such as visible ray, ultraviolet ray (e.g. i line), far-ultraviolet ray, electron ray, or X ray generate active species that may initiate polymerization of polymerizable compounds) can be used, with photo-radical generators being suitable.

Examples of the photo-radical generators include acetophenone compounds, biimidazole compounds, triazine compounds, O-acyloxime compounds, onium salt compounds, benzoin compounds, benzophenone compounds, α-diketone compounds, polynuclear quinone compounds, xanthone compounds, diazo compounds, and imidesulfonate compounds. These compounds are components that on exposure to light generate one or both of active radicals and active acid. These photo-radical generators may be used alone or in combination.

Specific examples of the acetophenone compounds include 2-hydroxy-2-methyl-1-phenylpropane-1-one, 2-methyl-1-[4-(methylthio)phenyl]-2-morpholinopropane-1-one, 2-benzyl-2-dimethylamino-1-(4-morpholinophenyl)butane-1-one, 1-hydroxycyclohexyl phenyl ketone, 2,2-dimethoxy-1,2-diphenylethane-1-one, 1,2-octanedione, and 2-benzyl-2-dimethylamino-4'-morpholinobutyrophenone.

Specific examples of the biimidazole compounds include 2,2'-bis(2-chlorophenyl)-4,4',5,5'-tetrakis(4-ethoxycarbonylphenyl)-1,2'-bii midazole, 2,2'-bis(2-bromophenyl)-4,4',5,5'-tetrakis(4-ethoxycarbonylphenyl)-1,2'-bii midazole, 2,2'-bis(2-chlorophenyl)-4,4',5,5'-tetraphenyl-1,2'-biimidazole, 2,2'-bis(2,4-dichlorophenyl)-4,4',5,5'-tetraphenyl-1,2'-biimidazole, 2,2'-bis(2,4,6-trichlorophenyl)-4,4',5,5'-tetraphenyl-1,2'-biimidazole, 2,2'-bis(2-bromophenyl)-4,4',5,5'-tetraphenyl-1,2'-biimidazole, 2,2'-bis(2,4-dibromophenyl)-4,4',5,5'-tetraphenyl-1,2'-biimidazole, and 2,2'-bis(2,4,6-tribromophenyl)-4,4',5,5'-tetraphenyl-1,2'-biimidazole.

In the present disclosure, in the case where biimidazole compounds are used as photopolymerization initiators (photo-radical generators), it is preferable to use hydrogen donors in combination for further improvement in sensitivity.

By "hydrogen donor" is meant a compound that can donate hydrogen atom to a radical generated on exposure to light from a biimidazole compound. Preferred hydrogen donors are mercaptan compounds and amine compounds defined below.

Examples of the mercaptan compounds include 2-mercaptobenzothiazole, 2-mercaptobenzoxazole, 2-mercaptobenzimidazole, 2,5-dimercapto-1,3,4-thiadiazole, and 2-mercapto-2,5-dimethylaminopyridine. Examples of the amine compounds include 4,4'-bis(dimethylamino)benzophenone, 4,4'-bis(diethylamino)benzophenone, 4-diethylaminoacetophenone, 4-dimethylaminopropiophenone, ethyl-4-dimethylaminobenzoate, 4-dimethylamino benzoic acid, and 4-dimethylaminobenzonitrile.

Examples of the triazine compounds include triazine compounds having a halomethyl group, such as 2,4,6-tris(trichloromethyl)-s-triazine, 2-methyl-4,6-bis(trichloromethyl)-s-triazine, 2-[2-(5-methylfuran-2-yl)ethenyl]-4,6-bis(trichloromethyl)-s-triazine, 2-[2-(furan-2-yl)ethenyl]-4,6-bis(trichloromethyl)-s-triazine, 2-[2-(4-diethylamino-2-methylphenyl)ethenyl]-4,6-bis(trichloromethyl)-s-tria zine, 2-[2-(3,4-dimethoxyphenyl)ethenyl]-4,6-bis(trichloromethyl)-s-triazine, 2-(4-methoxyphenyl)-4,6-bis(trichloromethyl)-s-triazine, 2-(4-ethoxystyryl)-4,6-bis(trichloromethyl)-s-triazine, and 2-(4-n-butoxyphenyl)-4,6-bis(trichloromethyl)-s-triazine.

Specific examples of the O-acyloxime compounds include 1-[4-(phenylthio)phenyl]-heptane-1,2-dione2-(O-benzoyloxime), 1-[4-(phenylthio)phenyl]-octane-1,2-dione2-(O-benzoyloxime), 1-[4-(benzoyl)phenyl]-octane-1,2-dione2-(O-benzoyloxime), 1-[9-ethyl-6-(2-methylbenzoyl)-9H-carbozole-3-yl]-ethanone1-(O-acetyloxim e), 1-[9-ethyl-6-(3-methylbenzoyl)-9H-carbozole-3-yl]-ethanone1-(O-acetyloxim e), 1-(9-ethyl-6-benzoyl-9H-carbozole-3-yl)-ethanone1-(O-acetyloxime), ethanone-1-[9-ethyl-6-(2-methyl-4-tetrahydrofuranylbenzoyl)-9H-carbozole-3 -yl]-1-(O-acetyloxime), ethanone-1-[9-ethyl-6-(2-methyl-4-tetrahydropyranylbenzoyl)-9H-carbozole-3-yl]-1-(O-acetyloxime), ethanone-1-[9-ethyl-6-(2-methyl-5-tetrahydrofuranylbenzoyl)-9H-carbozole-3 -yl]-1-(O-acetyloxime), ethanone-1-[9-ethyl-6-(2-methyl-5-tetrahydropyranylbenzoyl)-9H-carbozole-3-yl]-1-(O-acetyloxime), ethanone-1-[9-ethyl-6-{2-methyl-4-(2,2-dimethyl-1,3-dioxolanyl)benzoyl}-9 H-carbozole-3-yl]-1-(O-acetyloxime), ethanone-1-[9-ethyl-6-(2-methyl-4-tetrahydrofuranylmethoxybenzoyl)-9H-car bozole-3-yl]-1-(O-acetyloxime), ethanone-1-[9-ethyl-6-(2-methyl-4-tetrahydropyranylmethoxybenzoyl)-9H-ca rbozole-3-yl]-1-(O-acetyloxime), ethanone-1-[9-ethyl-6-(2-methyl-5-tetrahydrofuranylmethoxybenzoyl)-9H-car bozole-3-yl]-1-(O-acetyloxime), ethanone-1-[9-ethyl-6-(2-methylbenzoyl)-9H-carbozole-3-yl]-1-(O-acetyloxi me), ethanone-1-[9-ethyl-6-(2-methyl-5-tetrahydropyranylmethoxybenzoyl)-9H-ca rbozole-3-yl]-1-(O-acetyloxime), and ethanone-1-[9-ethyl-6-{2-methyl-4-(2,2-dimethyl-1,3-dioxolanyl)methoxyben zoyl}-9H-carbozole-3-yl]-1-(O-acetyloxime).

Commercially available photo-radical generators can be used directly. Specific examples include Irgacure 907, Irgacure 184, Irgacure 369, Irgacure 651, Irgacure 819, Irgacure 907, and Irgacure OXE02 (produced by BASF), and ADEKAARKLS N1919T (produced by ADEKA Corporation).

Examples of the anion polymerization initiators include: alkyllithium compounds; monolithium or monosodium salts of biphenyl, naphthalene, pyrene, and the like; and polyfunctional initiators such as dilithium salts and trilithium salts.

Examples of the cation polymerization initiators include: protonic acids such as sulfuric acid, phosphoric acid, perchloric acid, and trifluoromethanesulfonic acid; Lewis acids like boron trifluoride, aluminum chloride, titanium tetrachloride, and tin tetrachloride; and aromatic onium salts or combinations of aromatic onium salts with reductants.

These polymerization initiators may be used alone or in combination.

In the polymerizable liquid crystal composition using the presently disclosed mixture, the polymerization initiator is blended at an amount of typically 0.1 to 30 parts by mass and preferably 0.5 to 10 parts by mass, per 100 parts by mass of the mixture containing the polymerizable compounds.

The polymerizable liquid crystal composition using the presently disclosed mixture is preferably blended with surfactants for adjustment of surface tension. Although the surfactants are not limited, nonionic surfactants are generally preferred. Commercially available nonionic surfactants will suffice, e.g. nonionic surfactants made of oligomers with a molecular weight on the order of several thousands, such as Ftergent 208 g (produced by NEOS).

In the polymerizable liquid crystal composition using the presently disclosed mixture, the surfactant is blended at an amount of typically 0.01 to 10 parts by mass and preferably 0.1 to 2 parts by mass, per 100 parts by mass of the total of the polymerizable compounds.

In addition to the mixture containing the polymerizable compounds, the polymerization initiator, and the surfactant, the polymerizable liquid crystal composition using the presently disclosed mixture may further contain other components at amounts that do not compromise the effects of the present disclosure. Examples of the other components include metals, metal complexes, dyes, pigments, fluorescent materials, phosphorescent materials, leveling agents, thixotropic agents, gelling agents, polysaccharides, ultraviolet absorbers, infrared absorbers, antioxidants, ion-exchange resins, and metal oxides such as titanium oxide.

Examples of the other components also include other copolymerizable monomers. Specific examples include, but are not limited to, 4'-methoxyphenyl 4-(2-methacryloyloxyethyloxy)benzoate, biphenyl 4-(6-methacryloyloxyhexyloxy)benzoate, 4' -cyanobiphenyl 4-(2-acryloyloxyethyloxy)benzoate, 4'-cyanobiphenyl 4-(2-methacryloyloxyethyloxy)benzoate, 3',4'-difluorophenyl 4-(2-methacryloyloxyethyloxy)benzoate, naphthyl 4-(2-methacryloyloxyethyloxy)benzoate, 4-acryloyloxy-4'-decylbiphenyl, 4-acryloyloxy-4'-cyanobiphenyl, 4-(2-acryloyloxyethyloxy)-4'-cyanobiphenyl, 4-(2-methacryloyloxyethyloxy)-4' -methoxybiphenyl, 4-(2-methacryloyloxyethyloxy)-4'-(4"-fluorobenzyloxy)-biphenyl, 4-acryloyloxy-4' -propylcyclohexylphenyl, 4-methacryloyl-4' -butylbicyclohexyl, 4-acryloyl-4' -amyltolane, 4-acryloyl-4'-(3,4-difluorophenyl)bicyclohexyl, (4-amylphenyl) 4-(2-acryloyloxyethyl)benzoate, (4-(4'-propylcyclohexyl)phenyl) 4-(2-acryloyloxyethyl)benzoate, a commercially available product "LC-242" (produced by BASF), trans-1,4-bis[4-[6-(acryloyloxy)hexyloxy]phenyl]cyclohexanedicarboxylate, and compounds disclosed in JP 2007-002208 A, JP 2009-173893 A, JP 2009-274984 A, JP 2010-030979 A, JP 2010-031223 A, JP 2011-006360 A, and JP 2010-24438 A.

These other components are blended at amounts of typically 0.1 to 20 parts by mass per 100 parts by mass of the total of the polymerizable compounds.

The polymerizable liquid crystal composition using the presently disclosed mixture can be typically prepared by mixing and dissolving the mixture containing polymerizable compounds, the polymerization initiator, and optional other components in predetermined amounts in a suitable organic solvent.

In this case, two or more types of polymerizable compounds as the mixture (specifically, the polymerizable compounds (I) and (II), or a plurality of types of the polymerizable compound (I)) may be added in the form of pre-mix or may be added separately.

Examples of organic solvents that can be used include: ketones such as cyclopentanone, cyclohexanone, and methyl ethyl ketone; acetic esters such as butyl acetate and amyl acetate; halogenated hydrocarbons such as chloroform, dichloromethane, and dichloroethane; and ethers such as 1,4-dioxane, cyclopentyl methyl ether, tetrahydrofuran, tetrahydropyran, and 1,3-dioxolane.

(4) Polymer

The presently disclosed polymer can be obtained by polymerizing the foregoing mixture containing polymerizable compounds (the mixture containing the polymerizable compounds (I) and (II) or the mixture containing two or more types of the polymerizable compound (I) without substantially containing the polymerizable compound (II)) or the foregoing polymerizable liquid crystal composition.

By the term "polymerization" herein is meant a chemical reaction in a broad sense including a crosslinking reaction as well as a normal polymerization reaction.

A polymer according to an embodiment of the present disclosure typically includes the following monomer unit derived from the polymerizable compound (I) (repeat unit (I)') and the following monomer unit derived from the polymerizable compound (II) (repeat unit (II)').

A polymer according to another embodiment of the present disclosure includes two or more types of the following monomer unit derived from the polymerizable compound (I) (repeat unit (I)').

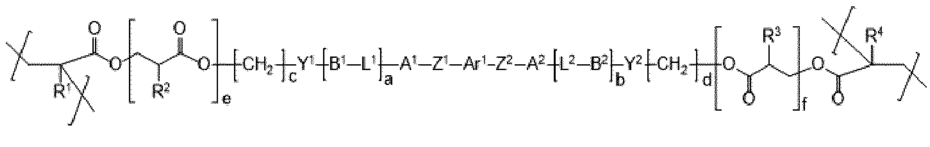

(I)'

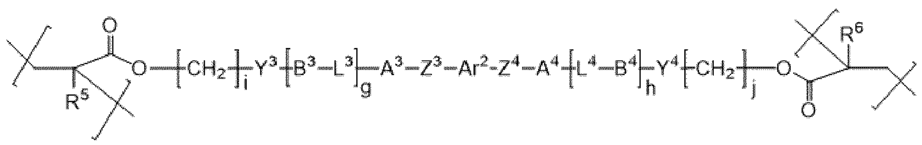

(II)'

[where $Ar^1$, $Ar^2$, $Z^1$ to $Z^4$, $A^1$ to $A^4$, $B^1$ to $B^4$, $Y^1$ to $Y^4$, $L^1$ to $L^4$, $R^1$ to $R^6$, and a to j are as defined above.]

Because the presently disclosed polymer is prepared using the mixture containing at least the polymerizable compound (I) and optionally further containing the polymerizable compound (II), it can be advantageously used as the constituent material for an optical film, etc. Moreover, because the presently disclosed polymer is prepared using the mixture having a high proportion of the polymerizable compound (I) in the polymerizable compounds, it can be synthesized efficiently in a short time. Specifically, for example in the case of polymerizing the polymerizable compounds by exposure to exposure light, the exposure time necessary for the polymerization can be shortened. In the case of polymerizing the polymerizable compounds by heating, the heating time necessary for the polymerization can be shortened.

The presently disclosed polymer can be used in any shape or form according to its intended use, including film, powder, or layer made of an aggregation of powder.

Specifically, films made of the polymer can be suitably used as the constituent material for the below-described optical film and optically anisotropic product; powders made of the polymer can be utilized for paints, anti-forgery items, security items and the like; and layers made of the polymer powder can be suitably used as the constituent material for the optically anisotropic product.

The presently disclosed polymer can be suitably produced for example by ($\alpha$) polymerizing the mixture containing the polymerizable compounds or the polymerizable liquid crystal composition in a suitable organic solvent, thereafter isolating the target polymer, dissolving the polymer in a suitable organic solvent to prepare a solution, applying the solution on a suitable substrate to form thereon a coating film, and drying the coating film followed by optional heating, or ($\beta$) dissolving the mixture containing the polymerizable compounds or the polymerizable liquid crystal composition in an organic solvent, applying the resulting solution on a substrate by a coating method known in the art and then removing the solvent, and thereafter effecting polymerization by heating or actinic radiation.

Any organic solvent can be used for the polymerization by the method ($\alpha$) as long as it is inert. Examples of the organic solvent include: aromatic hydrocarbons such as toluene, xylene, and mesitylene; ketones such as cyclohexanone, cyclopentanone, and methyl ethyl ketone; acetates such as butyl acetate and amyl acetate; halogenated hydrocarbons such as chloroform, dichloromethane, and dichloroethane; and ethers such as cyclopentyl methyl ether, tetrahydrofuran, and tetrahydropyran.

Of these organic solvents, preferred are those having a boiling point of 60 °C to 250 °C and more preferably those having a boiling point of 60 °C to 150 °C, from the viewpoint of handling capability.

Examples of organic solvents used to dissolve the isolated polymer in the method ($\alpha$) and organic solvents used in the method ($\beta$) include: ketone-based solvents such as acetone, methyl ethyl ketone, methyl isobutyl ketone, cyclopentanone, and cyclohexanone; ester-based solvents such as butyl acetate and amyl acetate; halogenated hydrocarbon-based solvents such as dichloromethane, chloroform, and dichloroethane; ether-based solvents such as tetrahydrofuran, tetrahydropyran, 1,2-dimethoxyethane, 1,4-dioxane, cyclopentyl methyl ether, and 1,3-dioxolane; and aprotic polar solvents such as N,N-dimethylformamide, N,N-dimethylacetamide, dimethyl sulfoxide, $\gamma$-butyrolactone, and N-methylpyrrolidone. Of these organic solvents, preferred are those having a boiling point of 60 °C to 200 °C from the viewpoint of handling capability. These solvents may be used alone or in combination of two or more.

Substrates made of any of organic or inorganic materials known in the art can be used in the methods ($\alpha$) and ($\beta$). Examples of the organic material include polycycloolefins (such as Zeonex® and Zeonor® (Zeonex and Zeonor are registered trademarks in Japan, other countries, or both) produced by Zeon Corporation), Arton® (Arton is a registered trademark in Japan, other countries, or both) produced by JSR Corporation, and Apel® (Apel is a registered trademark in Japan, other countries, or both) produced by Mitsui Chemicals Inc.), polyethylene terephthalates, polycarbonates, polyimides, polyamides, polymethyl methacrylates, polystyrenes, polyvinyl chlorides, polytetrafluoroethylene, celluloses, cellulose triacetate, and polyethersulfones. Examples of the inorganic material include silicon, glass, and calcite.

The substrate used may be single-layer or laminate.

The substrate is preferably made of organic material, and further preferably a resin film formed of organic material.

Additional examples of the substrate include those used for the production of the below-described optically anisotropic product.

Coating methods known in the art can be used for applying the polymer solution on the substrate in the method ($\alpha$) and for applying the solution for polymerization reaction on the substrate in the method ($\beta$). Specific examples of usable coating methods include curtain coating, extrusion coating, roll coating, spin coating, dip coating, bar coating, spray coating, slide coating, print coating, gravure coating, die coating, and cap coating.

Drying or solvent removal in the methods ($\alpha$) and ($\beta$) can be effected by natural drying, drying by heating, drying under reduced pressure, drying by heating under reduced pressure, or the like.

Polymerization of the mixture and the polymerizable liquid crystal composition can be effected for example by irradiation with actinic radiation or by thermal polymerization, with irradiation with actinic radiation being preferred as heating is unnecessary so that the reaction proceeds at room temperature. Irradiation with UV or other like light is particularly preferred because the operation is simple.

The temperature during irradiation is preferably set to 30 °C or less. The irradiation intensity is typically 1 W/$m^2$ to 10 kW/$m^2$, and preferably 5 W/$m^2$ to 2 kW/$m^2$.

The polymer obtained as described above can be transferred from the substrate for use, removed from the substrate for single use, or used as it is as the constituent material for an optical film etc. without being removed from the substrate.

The polymer removed from the substrate can also be made into powder form by a grinding method known in the art before use.

The number-average molecular weight of the presently disclosed polymer obtained as described above is preferably 500 to 500,000, and more preferably 5,000 to 300,000. If the number-average molecular weight is in such ranges, the resulting film advantageously exhibits high hardness as well as high handling capability. The number-average molecular weight of the polymer can be determined by gel permeation chromatography (GPC) using monodisperse polystyrene as a standard and tetrahydrofuran as an eluant.

The presently disclosed polymer allows for efficient manufacture of a high performance optical film etc. capable of uniform polarized light conversion over a wide wavelength range.

(5) Optical film

The presently disclosed optical film is formed using the presently disclosed polymer, and includes a layer having an optical function. By "optical function" as used herein is meant simple transmittance, reflection, refraction, birefringence, or the like.

The presently disclosed optical film may be used in any of the following arrangements: "alignment substrate/(alignment film)/optical film" where the optical film remains formed on an alignment substrate that may have an alignment film; "transparent substrate film/optical film" where the optical film has been transferred to a transparent substrate film or the like different from the alignment substrate; and single optical film form in the case where the optical film is self-supportive.

Usable alignment films and alignment substrates are the same as those exemplified for the below-described optically anisotropic product.

The presently disclosed optical film can be produced by (A) applying on an alignment substrate a solution of the mixture containing the polymerizable compounds or a solution of the polymerizable liquid crystal composition, drying the resulting coating film, subjecting the film to heat treatment (for alignment of liquid crystals), and irradiation and/or heating treatment (for polymerization); or (B) applying on an alignment substrate a solution of a liquid crystal polymer obtained by polymerization of the mixture containing the polymerizable compounds or the liquid crystal composition, and optionally drying the resulting coating film.

The presently disclosed optical film can be used for optically anisotropic products, alignment films for liquid crystal display devices, color filters, low-pass filters, polarization prisms, and various optical filters.

The presently disclosed optical film preferably has $\alpha$ and $\beta$ values that fall within predetermined ranges, which can be calculated as follows based on phase differences at 449.9 nm, 548.5 nm, and 650.2 nm in wavelength measured with an ellipsometer. Specifically, $\alpha$ value is preferably 0.70 to 0.99, and more preferably 0.75 to 0.90. $\beta$ value is preferably 1.00 to 1.25, and more preferably 1.01 to 1.20.

$$\alpha = (\text{phase difference at 449.9 nm})/(\text{phase difference at 548.5 nm}).$$

$$\beta = (\text{phase difference at 650.2 nm})/(\text{phase difference at 548.5 nm}).$$

(6) Optically anisotropic product

The presently disclosed optically anisotropic product has a layer having the presently disclosed polymer as the constituent material.

The presently disclosed optically anisotropic product can be obtained for example by forming an alignment film

on a substrate and forming a layer made of the presently disclosed polymer (liquid crystal layer) on the alignment film. The presently disclosed optically anisotropic product may be obtained by directly forming a layer made of the presently disclosed polymer (liquid crystal layer) on a substrate or may consist only of a layer made of the presently disclosed polymer (liquid crystal layer).

The layer made of the polymer may be formed of a polymer film or may be an aggregate of a powdery polymer.

The alignment film is formed on the surface of the substrate to regulate the polymerizable liquid crystal compounds to align in one direction in the plane.

The alignment film can be obtained for example by applying a solution containing a polymer such as polyimide, polyvinyl alcohol, polyester, polyarylate, polyamideimide, or polyetherimide (alignment film composition) on the substrate to form a film, drying the film, and rubbing the film in one direction.

The thickness of the alignment film is preferably 0.001 μm to 5 μm, and further preferably 0.001 μm to 1 μm.

Any method can be used for the rubbing treatment. For example, the alignment film may be rubbed in a given direction using a roll around which a cloth or felt formed of synthetic fiber (e.g. nylon) or natural fiber (e.g. cotton) is wound. It is preferable to wash the alignment film with isopropyl alcohol or the like after completion of the rubbing treatment, in order to remove fine powder (foreign substance) formed during the rubbing treatment to clean the surface of the alignment film.

Alternative to the rubbing treatment, the alignment film can be provided with a function of in-plane one-direction alignment by irradiation with polarized UV light on the surface of the alignment film.

Examples of the substrates on which the alignment film is to be formed include glass substrates and substrates formed of synthetic resin films. Examples of synthetic resins include thermoplastic resins such as acrylic resins, polycarbonate resins, polyethersulfone resins, polyethylene terephthlate resins, polyimide resins, polymethyl methacrylate resins, polysulfone resins, polyarylate resins, polyethylene resins, polystyrene resins, polyvinyl chloride resins, cellulose diacetate, cellulose triacetate, and alicyclic olefin polymers.

Examples of the alicyclic olefin polymers include: cyclic olefin random multi-component copolymers described in JP H05-310845 A and US 5179171 A; hydrogenated polymers described in JP H05-97978 A and US 5202388 A; and thermoplastic dicyclopentadiene open-ring polymers and hydrogenated products thereof described in JP H11-124429 A (WO 99/20676 A1).

In the present disclosure, examples of methods of forming a liquid crystal layer made of the presently disclosed polymer on the alignment film are the same as those described in the above chapter for the presently disclosed polymer (the methods (α) and (β)).

The resulting liquid crystal layer may be of any thickness, and typically has a thickness of 1 μm to 10 μm.

The presently disclosed optically anisotropic product can be used as any product, e.g. as a retardation film, a viewing-angle enhancing film, or the like.

The presently disclosed optically anisotropic product preferably has α and β values that fall within predetermined ranges, which can be calculated as follows based on phase differences at 449.9 nm, 548.5 nm, and 650.2 nm in wavelength measured with an ellipsometer. Specifically, α value is preferably 0.70 to 0.99, and more preferably 0.75 to 0.90. β value is preferably 1.00 to 1.25, and more preferably 1.01 to 1.20.

$$\alpha = (\text{phase difference at 449.9 nm})/(\text{phase difference at 548.5 nm}).$$

$$\beta = (\text{phase difference at 650.2 nm})/(\text{phase difference at 548.5 nm}).$$

(7) Polarizing plate, etc.

The presently disclosed polarizing plate includes the presently disclosed optically anisotropic product and a polarizing film.

A specific example of the presently disclosed polarizing plate is a polarizing plate obtained by laminating the presently disclosed optically anisotropic product on a polarizing film either directly or with other layer(s) (e.g. glass plate) disposed between the optically anisotropic product and the polarizing film.

Any method can be used for the manufacture of the polarizing film. Examples of methods of manufacturing a PVA polarizing film include: a method wherein iodine ions are adsorbed onto a PVA film followed by uniaxial stretching of the PVA film; a method wherein a PVA film is uniaxially stretched followed by adsorption of iodine ions; a method wherein adsorption of iodine ions to a PVA film and uniaxial stretching are simultaneously performed; a method wherein a PVA film is dyed with dichroic dye followed by uniaxial stretching; a method wherein a PVA film is uniaxially stretched followed by dying with dichroic dye; and a method wherein dying of a PVA film with dichroic dye and uniaxial stretching

are simultaneously performed. Examples of methods of manufacturing a polyene polarizing film include known methods in the art, e.g., a method wherein a PVA film is uniaxially stretched followed by heating and dehydration in the presence of a dehydration catalyst, and a method wherein a polyvinyl chloride film is uniaxially stretched followed by heating and dechlorination in the presence of a dechlorination catalyst.

In the presently disclosed polarizing plate, the polarizing film and the presently disclosed optically anisotropic product may be bonded with an adhesive layer made of an adhesive (including tackifier). The average thickness of the adhesive layer is typically 0.01 μm to 30 μm, and preferably 0.1 μm to 15 μm. The adhesive layer preferably has a tensile fracture strength of 40 MPa or less as measured in accordance with JIS K 7113.

Examples of adhesives for the adhesive layer include acrylic adhesives, urethane adhesives, polyester adhesives, polyvinyl alcohol adhesives, polyolefin adhesives, modified polyolefin adhesives, polyvinyl alkyl ether adhesives, rubber adhesives, vinyl chloride-vinyl acetate adhesives, styrene-butadiene-styrene copolymer (SBS copolymer) adhesives and their hydrogenated product (SEBS copolymer) adhesives, ethylene adhesives such as ethylene-vinyl acetate copolymers and ethylene-styrene copolymers, and acrylate adhesives such as ethylene-methyl methacrylate copolymer, ethylene-methyl acrylate copolymer, ethylene-ethyl methacrylate copolymer, and ethylene-ethyl acrylate copolymer.

The presently disclosed polarizing plate includes the presently disclosed optically anisotropic product, and therefore can be manufactured at low cost as well as having such superior performance as low reflected luminance and capability of uniform polarized light conversion over a wide wavelength range.

By using the presently disclosed polarizing plate, it is possible to suitably manufacture display devices that include a panel and a polarizing plate and antireflection films. Examples of such display devices include a flat panel display device using a liquid crystal panel as a panel, and an organic electroluminescent display device using an organic electroluminescent panel as a panel.

EXAMPLES

The presently disclosed techniques will be described in more detail below by way of examples, which however shall not be construed as limiting the scope of the present disclosure in any way.

(Synthesis Example 1) synthesis of compound 1

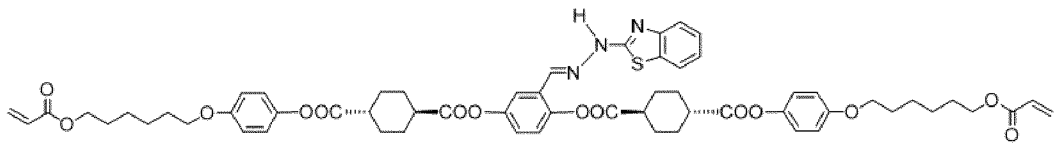

Compound 1

Step 1: synthesis of intermediate A

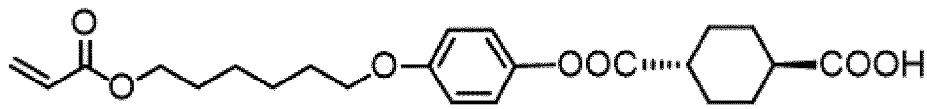

Intermediate A

A three-necked reactor equipped with a thermometer was charged with 17.98 g (104.42 mmol) of trans-1,4-cyclohexanedicarboxylic acid and 180 ml of tetrahydrofuran (THF) under a nitrogen stream. 6.58 g (57.43 mmol) of methanesulfonyl chloride was then added, and the reactor was immersed in a water bath to adjust the reaction solution temperature to 20 °C. Next, 6.34 g (62.65 mmol) of triethylamine was added dropwise over 10 min while retaining the reaction solution temperature to 20 °C to 30 °C. After the dropwise addition, the entire mass was further stirred at 25 °C for 2 hr.

To the resulting reaction solution were added 0.64 g (5.22 mmol) of 4-(dimethylamino)pyridine and 13.80 g (52.21 mmol) of 4-(6-acryloyloxy-hex-1-yloxy)phenol (produced by DKSH Japan K.K.), and the reactor was again immersed in the water bath to adjust the reaction solution temperature to 15 °C. 6.34 g (62.65 mmol) of triethylamine was added dropwise over 10 min while retaining the reaction solution temperature to 20 °C to 30 °C. After the dropwise addition, the entire mass was further stirred at 25 °C for 2 hr. After the completion of the reaction, 1,000 ml of distilled water and 100 ml of saturated brine were added to the reaction solution, and extracted twice with 400 ml of ethyl acetate. The organic layer was collected and dried with anhydrous sodium sulfate, and sodium sulfate was filtered. The solvent was evaporated from the filtrate using a rotary evaporator, and the residue was purified by silica gel column chromatography (THF:toluene = 1:9 (volume ratio), hereafter the same). Analysis was performed by high-performance liquid chromatography, and purification by silica gel column chromatography was repeated until the purity reached 99.5 % or more. As a consequence, 14.11 g of intermediate A was obtained as a white solid (yield: 65 mol%). The structure of the target compound was identified by $^1$H-NMR. The results are as follows.

$^1$H-NMR (500 MHz, DMSO-$d_6$, TMS, $\delta$ ppm): 12.12 (s, 1H), 6.99 (d, 2H, J=9.0Hz), 6.92 (d, 2H, J=9.0Hz), 6.32 (dd, 1H, J=1.5Hz, 17.5Hz), 6.17 (dd, 1H, J=10.0Hz, 17.5Hz), 5.93 (dd, 1H, J=1.5Hz, 10.0Hz), 4.11 (t, 2H, J=6.5Hz), 3.94 (t, 2H, J=6.5Hz), 2.48-2.56 (m, 1H), 2.18-2.26 (m, 1H), 2.04-2.10 (m, 2H), 1.93-2.00 (m, 2H), 1.59-1.75 (m, 4H), 1.35-1.52 (m, 8H).

Step 2: synthesis of intermediate B

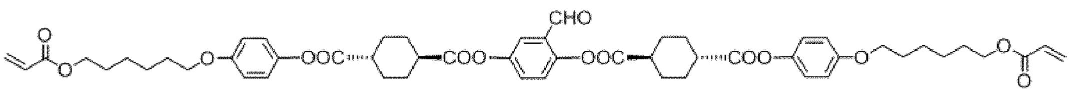

Intermediate B

A three-necked reactor equipped with a thermometer was charged with 4.00 g (9.56 mmol) of intermediate A synthesized in step 1 and 60 ml of THF under a nitrogen stream, to yield a uniform solution. 1.12 g (9.78 mmol) of methanesulfonyl chloride was added, and the reactor was immersed in a water bath to adjust the reaction solution temperature to 20 °C. 1.01 g (9.99 mmol) of triethylamine was added dropwise over 5 min while retaining the reaction solution temperature to 20 °C to 30 °C. After the dropwise addition, the entire mass was further stirred at 25 °C for 2 hr. To the resulting reaction solution were added 0.11 g (0.87 mmol) of 4-(dimethylamino)pyridine and 0.60 g (4.35 mmol) of 2,5-dihydroxybenzaldehyde, and the reactor was again immersed in the water bath to adjust the reaction solution temperature to 15 °C. 1.10 g (10.87 mmol) of triethylamine was added dropwise over 5 min while retaining the reaction solution temperature to 20 °C to 30 °C. After the dropwise addition, the entire mass was further stirred at 25 °C for 2 hr. After the completion of the reaction, 400 ml of distilled water and 50 ml of saturated brine were added to the reaction solution, and extracted twice with 750 ml of ethyl acetate. The organic layer was collected and dried with anhydrous sodium sulfate, and sodium sulfate was filtered. The solvent was evaporated from the filtrate using a rotary evaporator. The resulting residue was dissolved in 100 ml of THF. 500 ml of methanol was added to the solution to precipitate crystals, and the precipitated crystals were filtered. The resulting crystals were washed with methanol and then vacuum dried, thus obtaining 2.51 g of intermediate B as a white solid (yield: 62 mol%).

The structure of the target compound was identified by $^1$H-NMR. The results are as follows.

$^1$H-NMR (500 MHz, DMSO-$d_6$, TMS, $\delta$ ppm): 10.02 (s, 1H), 7.67 (d, 1H, J=3.0Hz), 7.55 (dd, 1H, J=3.0Hz, 8.5Hz), 7.38 (d, 1H, J=8.5Hz), 6.99-7.04 (m, 4H), 6.91-6.96 (m, 4H), 6.32 (dd, 2H, J=1.5Hz, 17.5Hz), 6.17 (dd, 2H, J=10.0Hz, 17.5Hz), 5.93 (dd, 2H, J=1.5Hz, 10.0Hz), 4.11 (t, 4H, J=6.5Hz), 3.95 (t, 4H, J=6.5Hz), 2.56-2.81 (m, 4H), 2.10-2.26 (m, 8H), 1.50-1.76 (m, 16H), 1.33-1.49 (m, 8H).

Step 3: synthesis of compound 1

A three-necked reactor equipped with a thermometer was charged with 2.30 g (2.45 mmol) of intermediate B synthesized in step 2 and 25 ml of THF under a nitrogen stream, to yield a uniform solution. 0.49 ml (0.25 mmol) of concentrated hydrochloric acid was then added. A THF 5 ml solution of 0.40 g (2.45 mmol) of 2-hydrazinobenzothiazole was added dropwise over 15 min to this solution. After the dropwise addition, the entire mass was further stirred at 25 °C for 1 hr. After the completion of the reaction, the reaction solution was added to 400 ml of methanol, and the precipitated solid was filtered. The filtered solid was dried in a vacuum drier, thus obtaining 2.4 g of compound 1 as a pale yellow solid (yield: 90 mol%).

The structure of the target compound was identified by $^1$H-NMR. The results are as follows.

$^1$H-NMR (500MHz, DMSO-$d_6$, TMS, δppm): 12.63 (s, 1H), 8.10 (s, 1H), 7.80 (d, 1H, J=5.0Hz), 7.60 (d, 1H, J=3.0Hz), 7.48 (s, 1H), 7.21-7.35 (m, 3H), 7.14 (t, 1H, J=7.5Hz), 6.98-7.05 (m, 4H), 6.91-6.97 (m, 4H), 6.32 (dd, 2H, J=1.5Hz, 17.5Hz), 6.18 (dd, 2H, J=10.0Hz, 17.5Hz), 5.93 (dd, 2H, J=1.5Hz, 10.0Hz), 4.12 (t, 4H, J=6.5Hz), 3.95 (t, 4H, J=6.5Hz), 2.56-2.83 (m, 4H), 2.11-2.30 (m, 8H), 1.52-1.80 (m, 16H), 1.33-1.49 (m, 8H).

(Synthesis Example 2) synthesis of compound 2

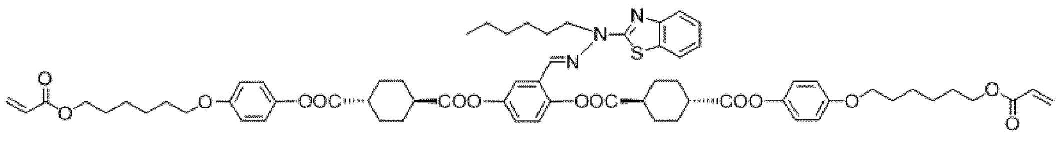

Compound 2

Step 1: synthesis of intermediate C

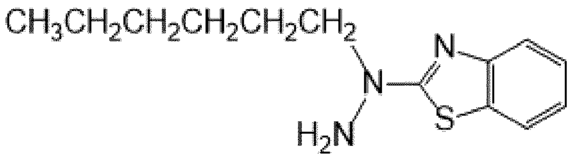

Intermediate C

In a four-necked reactor equipped with a thermometer, 2.00 g (12.1 mmol) of 2-hydrazinobenzothiazole was dissolved in 20 ml of N,N-dimethylformamide (DMF) under a nitrogen stream. 8.36 g (60.5 mmol) of potassium carbonate and 3.08 g (14.5 mmol) of 1-iodohexane were added to this solution, and stirred at 50 °C for 7 hr. After the completion of the reaction, the reaction solution was cooled to 20 °C, and the reaction solution was added to 200 ml of water and extracted with 300 ml of ethyl acetate. The ethyl acetate layer was then dried with anhydrous sodium sulfate. After filtering the sodium sulfate, the ethyl acetate was distilled under reduced pressure using a rotary evaporator, to obtain a yellow solid. The yellow solid was purified by silica gel column chromatography (hexane:ethyl acetate = 75:25), thus obtaining 2.10 g of intermediate C as a white solid (yield: 69.6 mol%).

The structure of the target compound was identified by $^1$H-NMR. The results are as follows.

$^1$H-NMR (500 MHz, $CDCl_3$, TMS, δ ppm): 7.60 (dd, 1H, J=1.0Hz, 8.0Hz), 7.53 (dd, 1H, J=1.0Hz, 8.0Hz), 7.27 (ddd, 1H, J=1.0Hz, 8.0Hz, 8.0Hz), 7.06 (ddd, 1H, J=1.0Hz, 8.0Hz, 8.0Hz), 4.22 (s, 2H), 3.74 (t, 2H, J=7.5Hz), 1.69-1.76 (m, 2H), 1.29-1.42 (m,6H), 0.89 (t, 3H, J=7.0Hz)

Step 2: synthesis of compound 2

In a four-necked reactor equipped with a thermometer, 697 mg (2.37 mmol) of intermediate C synthesized in step 1 and 2.00 g (2.13 mmol) of intermediate B synthesized in step 2 of Synthesis Example 1 were dissolved in a mixed solvent of 3 ml of ethanol and 20 ml of THF under a nitrogen stream. 55.1 mg (0.237 mmol) of (±)-10-camphorsulfonic acid was added to this solution, and stirred at 40 °C for 5 hr. After the completion of the reaction, the reaction solution was added to 150 ml of water and extracted with 300 ml of ethyl acetate. The ethyl acetate layer was then dried with anhydrous sodium sulfate. After filtering the sodium sulfate, the ethyl acetate was distilled under reduced pressure using a rotary evaporator, to obtain a white solid. The white solid was purified by silica gel column chromatography (toluene:ethyl acetate = 90:10), thus obtaining 2.24 g of compound 2 as a white solid (yield: 86.4 mol%).

The structure of the target compound was identified by $^1$H-NMR. The results are as follows.

$^1$H-NMR (400MHz, $CDCl_3$, TMS, δppm): 7.75 (d, 1H, J=2.5Hz), 7.67-7.70 (m, 3H), 7.34 (ddd, 1H, J=1.0Hz, 7.0Hz, 7.5Hz), 7.17 (ddd, 1H, J=1.0Hz, 7.5Hz, 7.5Hz), 7.12 (d, 1H, J=9.0Hz), 7.10 (dd, 1H, J=2.5Hz, 9.0Hz), 6.99 (d,

2H, J=9.0Hz), 6.98 (d, 2H, J=9.0Hz), 6.88 (d, 4H, J=9.0Hz), 6.40 (dd, 2H, J=1.5Hz, 17.0Hz), 6.13 (dd, 2H, J=10.5Hz, 17.5Hz), 5.82 (dd, 2H, J=1.5Hz, 10.5Hz), 4.30 (t, 2H, J=8.0Hz), 4.18 (t, 4H, J=6.5Hz), 3.95 (t, 4H, J=6.5Hz), 2.58-2.70 (m, 4H), 2.31-2.35 (m, 8H), 1.66-1.82 (m, 18H), 1.31-1.54 (m, 14H), 0.90 (t, 3H, J=7.0Hz).

(Synthesis Example 3) synthesis of compound 3

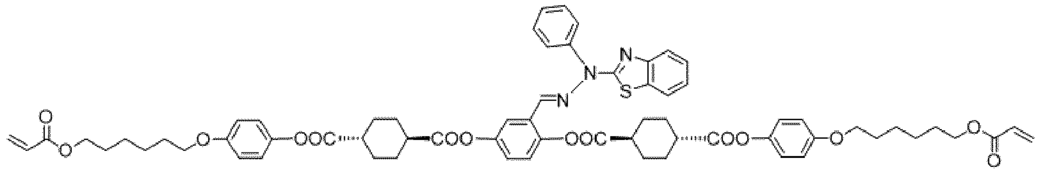

Compound 3

Step 1: synthesis of intermediate D

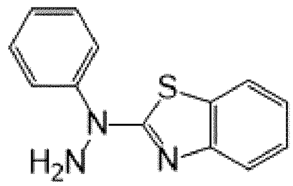

Intermediate D

In a three-necked reactor equipped with a thermometer, 3.00 g (17.69 mmol) of 2-chlorobenzothiazole and 7.65 g (70.74 mmol) of phenylhydrazine were dissolved in 30 ml of ethylene glycol under a nitrogen stream. The solution was heated to 140 °C, and reacted for 5 hr. Subsequently, 300 ml of distilled water was added to the reaction solution, and extracted twice with 100 ml of ethyl acetate. The organic layer was dried with sodium sulfate, and concentrated using a rotary evaporator. After this, 15 ml of THF was added for dissolution, and the solution was added to 300 ml of distilled water. The precipitated solid was filtered, washed with distilled water, and then vacuum dried to obtain a yellow solid. The obtained yellow solid was put into a flask. 50 ml of toluene was then added, and stirred for 30 min, after which filtering was performed to remove solid components insoluble in toluene. The filtrate was concentrated using a rotary evaporator, and then purified by silica gel column chromatography (THF:toluene = 2:50), thus obtaining 0.94 g of intermediate D as a yellow oil (yield: 22 mol%).

The structure of the target compound was identified by $^1$H-NMR. The results are as follows.

$^1$H-NMR (500MHz, DMSO-$d_6$, TMS, δppm): 8.01 (dd, 2H, J=1.0Hz, 9.0Hz), 7.78 (dd, 1H, J=1.0Hz, 8.0Hz), 7.51 (dd, 1H, J=1.0Hz, 8.0Hz), 7.43 (dd, 2H, J=7.5Hz, 8.5Hz), 7.28(dt, 1H, J=1.0Hz, 7.5Hz), 7.08-7.16 (m, 2H), 6.26 (s, 2H).

Step 2: synthesis of compound 3

In a three-necked reactor equipped with a thermometer, 1.00 g (1.06 mmol) of intermediate B synthesized in step 2 of Synthesis Example 1 was dissolved in 30 ml of THF under a nitrogen stream. 0.22 ml (0.22 mmol) of IN hydrochloric acid and 0.38 g (1.60 mmol) of intermediate D synthesized in step 1 were added to this solution, and reacted at 40 °C for 2 hr. Subsequently, the reaction solution was concentrated using a rotary evaporator, and then purified by silica gel column chromatography (chloroform:THF = 40:1), thus obtaining 1.14 g of compound 3 as a pale yellow solid (yield: 95 mol%).

The structure of the target compound was identified by $^1$H-NMR. The results are as follows.

$^1$H-NMR (500MHz, $CDCl_3$, TMS, δppm): 7.82 (d, 1H, J=2.5Hz), 7.73 (dd, 1H, J=1.0Hz, 8.0Hz), 7.64-7.70 (m, 2H), 7.60 (d, 2H, J=7.5Hz), 7.35-7.42 (m, 3H), 7.30 (dt, 1H, J=1.0Hz, 7.5Hz), 7.18 (dt, 1H, J=1.0Hz, 7.5Hz), 7.03-7.12 (m, 2H), 7.00 (d, 2H, J=9.0Hz), 6.99 (d, 2H, J=9.0Hz), 6.90 (d, 2H, J=9.0Hz), 6.89 (d, 2H, J=9.0Hz), 6.41 (dd, 1H, J=1.5Hz, 17.5Hz), 6.41 (dd, 1H, J=1.5Hz, 17.5Hz), 6.13 (dd, 1H, J=10.5Hz, 17.5Hz), 6.13 (dd, 1H, J=10.5Hz, 17.5Hz),

5.82 (dd, 1H, J=1.5Hz, 10.5Hz), 5.82 (dd, 1H, J=1.5Hz, 10.5Hz), 4.18 (t, 2H, J=6.5Hz), 4.18 (t, 2H, J=6.5Hz), 3.92-3.98 (m, 4H), 2.56-2.71 (m, 2H), 2.41-2.50 (m, 1H), 2.27-2.40 (m, 5H), 2.12-2.22 (m, 2H), 1.64-1.91 (m, 14H), 1.41-1.56 (m, 10H), 1.19-1.31 (m, 2H).

(Synthesis Example 4) synthesis of compound 4

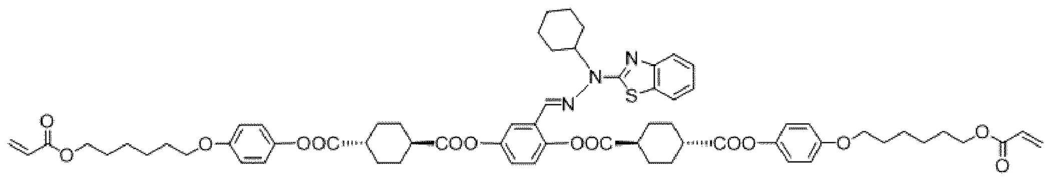

Compound 4

Step 1: synthesis of intermediate E

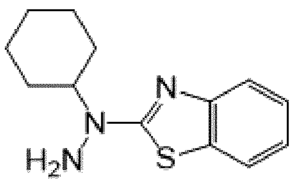

Intermediate E

In a four-necked reactor equipped with a thermometer, 2.50 g (16.6 mmol) of cyclohexylhydrazine hydrochloride was dissolved in 8 ml of triethylamine under a nitrogen stream. 5.63 g (33.2 mmol) of 2-chlorobenzothiazole was added to this solution, and stirred at 80 °C for 5 hr. After the completion of the reaction, the reaction solution was cooled to 20 °C, and the reaction solution was added to 150 ml of a saturated sodium bicarbonate aqueous solution and extracted with 300 ml of ethyl acetate. The ethyl acetate layer was then dried with anhydrous sodium sulfate. After filtering the sodium sulfate, the ethyl acetate was distilled under reduced pressure using a rotary evaporator, to obtain a yellow solid. The yellow solid was purified by silica gel column chromatography (hexane:ethyl acetate = 75:25), thus obtaining 1.02 g of intermediate E as a white solid (yield: 22.3 mol%).

The structure of the target compound was identified by $^1$H-NMR. The results are as follows.

$^1$H-NMR (400MHz, $CDCl_3$, TMS, δppm): 7.58 (d, 1H, J=7.8Hz), 7.52 (d, 1H, J=8.2Hz), 7.26 (dd, 1H, J=7.4Hz, 8.2Hz), 7.05 (dd, 1H, J=7.4Hz, 7.8Hz), 4.25-4.32 (m, 1H), 4.04 (s, 2H), 1.84-1.88 (m, 4H), 1.68-1.73 (m, 1H), 1.43-1.59 (m, 4H), 1.08-1.19 (m, 1H).

Step 2: synthesis of compound 4

A three-necked reactor equipped with a thermometer was charged with 1.40 g (1.49 mmol) of intermediate B synthesized in step 2 of Synthesis Example 1, 456 mg (1.84 mmol) of intermediate E synthesized in step 1, 38.6 mg (0.166 mmol) of (±)-10-camphorsulfonic acid, 16 ml of THF, and 4 ml of ethanol under a nitrogen stream, to yield a uniform solution. The solution was then reacted at 40 °C for 5 hr. After the completion of the reaction, the reaction solution was added to 100 ml of water and extracted with 200 ml of ethyl acetate. The obtained ethyl acetate layer was then dried with anhydrous sodium sulfate. After filtering the sodium sulfate, the ethyl acetate was distilled under reduced pressure from the filtrate using a rotary evaporator, to obtain a yellow solid. The yellow solid was purified by silica gel column chromatography (chloroform:THF = 97:3), thus obtaining 1.24 g of compound 4 as a pale yellow solid (yield: 71.4 mol%).

The structure of the target compound was identified by $^1$H-NMR. The results are as follows.

$^1$H-NMR (500MHz, $CDCl_3$, TMS, δppm): 8.15 (s, 1H), 7.72 (d, 1H, J=1.5Hz), 7.68 (dd, 1H, J=1.5Hz, 8.0Hz), 7.66 (dd, 1H, J=1.5Hz, 8.0Hz), 7.31-7.35 (m, 1H), 7.14-7.18 (m, 1H), 7.13 (d, 1H, J=9.0Hz), 7.10 (dd, 1H, J=1.5Hz, 9.0Hz), 6.96-7.00 (m, 4H), 6.86-6.90 (m, 4H), 6.40 (dd, 2H, J=1.5Hz, 17.0Hz), 6.13 (dd, 2H, J=10.0Hz, 17.0Hz), 5.82

(dd, 2H, J=1.5Hz, 10.0Hz), 4.62-4.70 (m, 1H), 4.17 (t, 4H, J=6.5Hz), 3.94 (t, 4H, J=6.5Hz), 2.55-2.74 (m, 4H), 2.27-2.47 (m, 10H), 1.90-2.00 (m, 4H), 1.65-1.85 (m, 16H), 1.42-1.55 (m, 10H), 1.24-1.33 (m, 2H).

(Synthesis Example 5) synthesis of compound 5

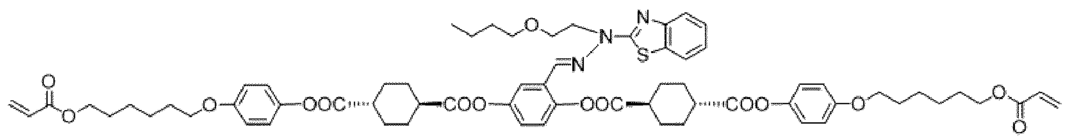

Compound 5

Step 1: synthesis of intermediate F

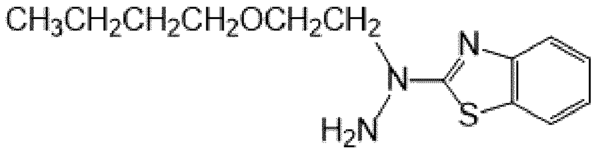

Intermediate F

In a three-necked reactor equipped with a thermometer, 2.00 g (12.1 mmol) of 2-hydrazinobenzothiazole was dissolved in 30 ml of DMF under a nitrogen stream. 7.88 g (24.2mol) of cesium carbonate was added to this solution, which was then cooled to 0 °C. 1.98 g (14.5 mmol) of butyl2-chloroethylether was added dropwise over 5 min, and subsequently the reaction solution was returned to room temperature (23 °C, hereafter the same) and stirred for 3 hr. After the completion of the reaction, 200 ml of water was added to the reaction solution, and extracted twice with 100 ml of ethyl acetate. The obtained organic layer was dried with anhydrous sodium sulfate, and sodium sulfate was filtered. The filtrate was concentrated using a rotary evaporator, and purified by silica gel column chromatography (n-hexane:ethyl acetate = 75:25), thus obtaining 1.70 g of intermediate F as a white solid (yield: 53.0 mol%).

The structure of the target compound was identified by $^1$H-NMR. The results are as follows.

$^1$H-NMR (500MHz, $CDCl_3$, TMS, δppm): 7.61 (dd, 1H, J=1.0Hz, 8.0Hz), 7.50 (dd, 1H, J=1.0Hz, 8.0Hz), 7.27-7.29 (m, 1H), 7.04-7.08 (m, 1H), 4.70 (s, 2H), 4.01 (t, 2H, J=5.0Hz), 3.82 (t, 2H, J=5.0Hz), 3.44 (t, 2H, J=7.0Hz), 1.52-1.57 (m, 2H), 1.31-1.39 (m, 2H), 0.90 (t, 3H, J=7.0Hz).

Step 2: synthesis of compound 5

A three-necked reactor equipped with a thermometer was charged with 1.50 g (1.60 mmol) of intermediate B synthesized in step 2 of Synthesis Example 1, 396 mg (1.78 mmol) of intermediate F synthesized in step 1, 41.4 mg (0.178 mmol) of (±)-10-camphorsulfonic acid, 16 ml of THF, and 4 ml of ethanol under a nitrogen stream, to yield a uniform solution. The solution was then reacted at 40 °C for 5 hr. After the completion of the reaction, the reaction solution was added to 100 ml of water and extracted with 200 ml of ethyl acetate. The obtained ethyl acetate layer was then dried with anhydrous sodium sulfate. After filtering the sodium sulfate, the ethyl acetate was distilled under reduced pressure from the filtrate using a rotary evaporator, to obtain a yellow solid. The yellow solid was purified by silica gel column chromatography (toluene:ethyl acetate = 9:1), thus obtaining 1.31 g of compound 5 as a pale yellow solid (yield: 69.4 mol%).

The structure of the target compound was identified by $^1$H-NMR. The results are as follows.

$^1$H-NMR (500MHz, $CDCl_3$, TMS, δppm): 8.03 (s, 1H), 7.76 (d, 1H, J=1.5Hz), 7.65-7.71 (m, 2H), 7.34 (ddd, 1H, J=1.5Hz, 8.0Hz, 8.0Hz), 7.17 (ddd, 1H, J=1.5Hz, 8.0Hz, 8.0Hz), 7.09-7.12 (m, 2H), 6.96-7.00 (m, 4H), 6.87-6.90 (m, 4H), 6.40 (dd, 2H, J=1.5Hz, 17.5Hz), 6.13 (dd, 2H, J=10.5Hz, 17.5Hz), 5.82 (dd, 2H, J=1.5Hz, 10.5Hz), 4.45 (t, 2H,

J=5.5Hz), 4.18 (t, 4H, J=7.0Hz), 3.95 (t, 4H, J=7.0Hz), 3.79 (t, 2H, J=5.5Hz), 3.44 (t, 2H, J=7.0Hz), 2.55-2.74 (m, 4H), 2.28-2.40 (m, 8H), 1.65-1.83 (m, 16H), 1.42-1.55 (m, 10H), 1.25-1.34 (m, 2H), 0.85 (t, 3H, J=7.0Hz).

(Synthesis Example 6) synthesis of compound 6

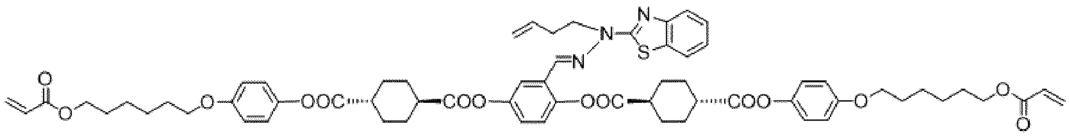

Compound 6

Step 1: synthesis of intermediate G

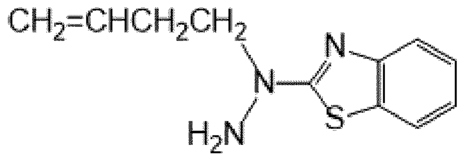

Intermediate G

In a four-necked reactor equipped with a thermometer, 5.04 g (30.5 mmol) of 2-hydrazinobenzothiazole was dissolved in 50 ml of DMF under a nitrogen stream. 14.9 g (45.8 mmol) of cesium carbonate and 4.94 g (36.6 mmol) of 4-bromo-1-butene were added to this solution, and stirred at room temperature for 7 hr. After the completion of the reaction, the reaction solution was added to 200 ml of water, and extracted with 300 ml of ethyl acetate. The ethyl acetate layer was dried with anhydrous sodium sulfate. After filtering the sodium sulfate, the ethyl acetate was distilled under reduced pressure using a rotary evaporator, to obtain a yellow solid. The yellow solid was purified by silica gel column chromatography (n-hexane:ethyl acetate = 70:30), thus obtaining 4.40 g of intermediate G as a white solid (yield: 49.5 mol%).

The structure of the target compound was identified by $^1$H-NMR. The results are as follows.

$^1$H-NMR (500MHz, $CDCl_3$, TMS, δppm): 7.60 (dd, 1H, J=1.0Hz, 8.0Hz), 7.54 (dd, 1H, J=1.0Hz, 8.0Hz), 7.28 (ddd, 1H, J=1.0Hz, 7.5Hz, 8.0Hz), 7.06 (ddd, 1H, J=1.0Hz, 7.5Hz, 8.0Hz), 5.89 (ddt, 1H, J=7.0Hz, 10.5Hz, 17.0Hz), 5.17 (ddt, 1H, J=1.5Hz, 3.0Hz, 17.0Hz), 5.09 (ddt, 1H, J=1.0Hz, 3.0Hz, 10.5Hz), 4.26 (s, 2H), 3.85 (t, 2H, J=7.0Hz), 2.52 (dddt, 2H, J=1.0Hz, 1.5Hz, 7.0Hz, 7.0Hz).

Step 2: synthesis of compound 6

In a four-necked reactor equipped with a thermometer, 195 mg (1.77 mmol) of intermediate G synthesized in step 1 and 1.50 g (1.60 mmol) of intermediate B synthesized in step 2 of Synthesis Example 1 were dissolved in a mixed solvent of 3 ml of ethanol and 15 ml of THF under a nitrogen stream. 41.2 mg (0.177 mmol) of (±)-10-camphorsulfonic acid was added to this solution, and stirred at 40 °C for 8 hr. After the completion of the reaction, the reaction solution was added to 150 ml of water and extracted with 300 ml of ethyl acetate. The ethyl acetate layer was then dried with anhydrous sodium sulfate. After filtering the sodium sulfate, the ethyl acetate was distilled under reduced pressure using a rotary evaporator, to obtain a yellow solid. The yellow solid was purified by silica gel column chromatography (toluene:ethyl acetate = 90:10), thus obtaining 1.26 g of compound 6 as a white solid (yield: 69.3 mol%).

The structure of the target compound was identified by $^1$H-NMR. The results are as follows.

$^1$H-NMR (500MHz, $CDCl_3$, TMS, δppm): 7.76 (d, 1H, J=2.5Hz), 7.67-7.70 (m, 3H), 7.35 (ddd, 1H, J=1.5Hz, 7.5Hz, 8.0Hz), 7.18 (ddd, 1H, J=1.5Hz, 7.5Hz, 8.0Hz), 7.10-7.14 (m, 2H), 6.99 (d, 2H, J=9.5Hz), 6.98 (d, 2H, J=9.5Hz), 6.88 (d, 4H, J=9.5Hz), 6.40 (dd, 2H, J=1.5Hz, 17.5Hz), 6.13 (dd, 2H, J=10.5Hz, 17.5Hz), 5.89 (ddt, 1H, J=6.5Hz, 10.5Hz, 17.0Hz), 5.82 (dd, 2H, J=1.5Hz, 10.5Hz), 5.18 (dd, 1H, J=1.5Hz, 17.0Hz), 5.15 (dd, 1H, J=1.5Hz, 10.5Hz), 4.38 (t, 2H,

J=7.0Hz), 4.18 (t, 4H, J=6.5Hz), 3.95 (t, 4H, J=6.5Hz), 2.58-2.68 (m, 4H), 2.51 (dt, 2H, J=6.5Hz, 7.0Hz), 2.31-2.35 (m, 8H), 1.76-1.85 (m, 4H), 1.65-1.74 (m, 12H), 1.41-1.54 (m, 8H).

(Synthesis Example 7) synthesis of compound 7

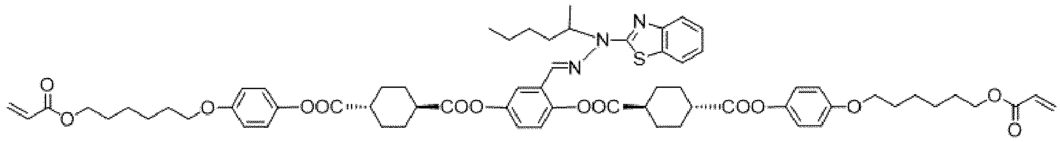

Compound 7

Step 1: synthesis of intermediate H

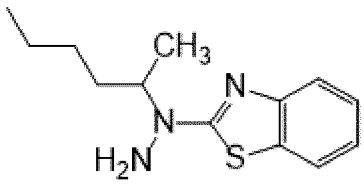

Intermediate H

In a three-necked reactor equipped with a thermometer, 2.00 g (12.1 mmol) of 2-hydrazinobenzothiazole was dissolved in 30 ml of DMF under a nitrogen stream. 7.88 g (24.2mol) of cesium carbonate was added to this solution, which was then cooled to 0 °C. 2.39 g (14.5 mmol) of 2-bromohexane was added dropwise over 5 min, and subsequently the reaction solution was returned to room temperature and stirred for 3 hr. After the completion of the reaction, 200 ml of water was added to the reaction solution, and extracted twice with 100 ml of ethyl acetate. The obtained organic layer was dried with anhydrous sodium sulfate, and sodium sulfate was filtered. The filtrate was concentrated using a rotary evaporator, and purified by silica gel column chromatography (n-hexane:ethyl acetate = 93:7), thus obtaining 1.61 g of intermediate H as a white solid (yield: 53.4 mol%).

The structure of the target compound was identified by $^1$H-NMR. The results are as follows.

$^1$H-NMR (400MHz, $CDCl_3$, TMS, δppm): 7.59 (dd, 1H, J=1.0Hz, 8.0Hz), 7.52 (dd, 1H, J=1.0Hz, 8.0Hz), 7.24-7.30 (m, 1H), 7.05 (ddd, 1H, J=1.0Hz, 8.0Hz, 8.0Hz), 3.97 (s, 2H), 1.47-1.74 (m, 3H), 1.20-1.41 (m, 7H), 0.89 (t, 3H, J=5.5Hz).

Step 2: synthesis of compound 7

A three-necked reactor equipped with a thermometer was charged with 1.50 g (1.60 mmol) of intermediate B synthesized in step 2 of Synthesis Example 1, 444 mg (1.78 mmol) of intermediate H synthesized in step 1, 41.4 mg (0.178 mmol) of (±)-10-camphorsulfonic acid, 16 ml of THF, and 4 ml of ethanol under a nitrogen stream, to yield a uniform solution. The solution was then reacted at 40 °C for 5 hr. After the completion of the reaction, the reaction solution was added to 100 ml of water and extracted with 200 ml of chloroform. The obtained organic layer was then dried with anhydrous sodium sulfate. After filtering the sodium sulfate, a rotary evaporator was used for concentration. The solid was purified by silica gel column chromatography (toluene:ethyl acetate = 92:8), thus obtaining 1.35 g of compound 7 as a pale yellow solid (yield: 72.4 mol%).

The structure of the target compound was identified by $^1$H-NMR. The results are as follows.

$^1$H-NMR (500MHz, $CDCl_3$, TMS, δppm): 8.04 (s, 1H), 7.73 (d, 1H, J=1.5Hz), 7.69 (dd, 1H, J=1.5Hz, 7.8Hz), 7.65 (dd, 1H, J=1.5Hz, 7.8Hz), 7.33 (ddd, 1H, J=1.5Hz, 7.8Hz, 7.8Hz), 7.07-7.19 (m, 3H), 6.95-7.01 (m, 4H), 6.85-6.91 (m, 4H), 6.40 (dd, 2H, J=1.5Hz, 17.5Hz), 6.13 (dd, 2H, J=10.5Hz, 17.5Hz), 5.82 (dd, 2H, J=1.5Hz, 10.5Hz), 4.18 (t, 4H, J=6.5Hz), 3.95 (t, 4H, J=6.5Hz), 2.54-2.73 (m, 4H), 2.25-2.40 (m, 8H), 1.65-1.83 (m, 16H), 1.60-1.62 (m, 2H), 1.57 (d, 3H, J=7.5Hz), 1.24-1.55 (m, 13H), 0.87 (t, 3H, J=7.5Hz).

(Synthesis Example 8) synthesis of compound 8

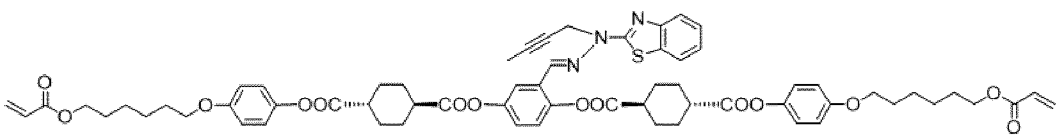

Compound 8

Step 1: synthesis of intermediate I

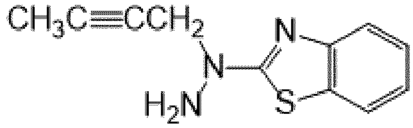

Intermediate I

In a four-necked reactor equipped with a thermometer, 2.00 g (12.1 mmol) of 2-hydrazinobenzothiazole was dissolved in 30 ml of DMF under a nitrogen stream. 7.88 g (24.2 mmol) of cesium carbonate and 1.93 g (14.5 mmol) of 1-bromo-2-butyne were added to this solution, and stirred at room temperature for 20 hr. After the completion of the reaction, the reaction solution was added to 200 ml of water, and extracted with 300 ml of ethyl acetate. The ethyl acetate layer was dried with anhydrous sodium sulfate. After filtering the sodium sulfate, the ethyl acetate was distilled under reduced pressure using a rotary evaporator, to obtain a brown solid. The brown solid was purified by silica gel column chromatography (n-hexane:ethyl acetate = 85:15), thus obtaining 1.25 g of intermediate I as a white solid (yield: 47.5 mol%).

The structure of the target compound was identified by $^1H$-NMR. The results are as follows.

$^1H$-NMR (500MHz, $CDCl_3$, TMS, δppm): 7.63 (dd, 1H, J=1.3Hz, 7.8Hz), 7.58 (dd, 1H, J=1.3Hz, 7.8Hz), 7.29 (ddd, 1H, J=1.3Hz, 7.8Hz, 7.8Hz), 7.10 (ddd, 1H, J=1.3Hz, 7.8Hz, 7.8Hz), 4.56(q, 2H, J=2.5Hz), 4.36 (s, 2H), 1.84 (t, 3H, J=2.5Hz).

Step 2: synthesis of compound 8

A three-necked reactor equipped with a thermometer was charged with 1.50 g (1.60 mmol) of intermediate B synthesized in step 2 of Synthesis Example 1, 387 mg (1.78 mmol) of intermediate I synthesized in step 1, 41.4 mg (0.178 mmol) of (±)-10-camphorsulfonic acid, 16 ml of THF, and 4 ml of ethanol under a nitrogen stream, to yield a uniform solution. The solution was then reacted at 40 °C for 5 hr. After the completion of the reaction, the reaction solution was added to 100 ml of water and extracted with 200 ml of chloroform. The obtained organic layer was then dried with anhydrous sodium sulfate. After filtering the sodium sulfate, a rotary evaporator was used for concentration. The solid was purified by silica gel column chromatography (toluene:ethyl acetate = 9:1), thus obtaining 1.54 g of compound 8 as a pale yellow solid (yield: 84.9 mol%).

The structure of the target compound was identified by $^1H$-NMR. The results are as follows.

$^1H$-NMR (500MHz, $CDCl_3$, TMS, δppm): 7.90 (s, 1H), 7.78 (d, 1H, J=1.3Hz), 7.67-7.73 (m, 2H), 7.35 (ddd, 1H, J=1.3Hz, 7.5Hz, 7.5Hz), 7.18 (ddd, 1H, J=1.3Hz, 7.5Hz, 7.5Hz), 7.09-7.15 (m, 2H), 6.95-7.01 (m, 4H), 6.85-6.91 (m, 4H), 6.40 (dd, 2H, J=1.5Hz, 17.0Hz), 6.13 (dd, 2H, J=10.5Hz, 17.0Hz), 5.82 (dd, 2H, J=1.5Hz, 10.5Hz), 5.06 (d, 2H, J=2.0Hz), 4.18 (t, 4H, J=6.0Hz), 3.95 (t, 4H, J=6.0Hz), 2.55-2.76 (m, 4H), 2.26-2.43 (m, 8H), 1.64-1.83 (m, 19H), 1.41-1.55 (m, 8H).

(Synthesis Example 9) synthesis of compound 9

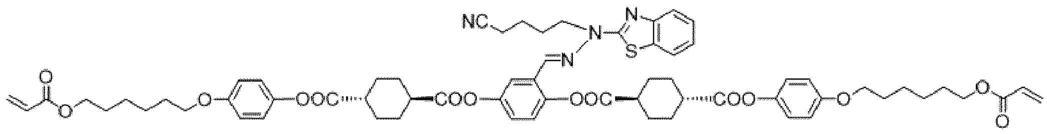

Compound 9

Step 1: synthesis of intermediate J

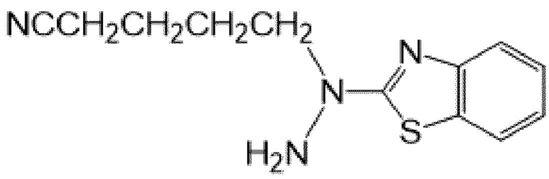

Intermediate J

In a four-necked reactor equipped with a thermometer, 5.00 g (30.3 mmol) of 2-hydrazinobenzothiazole was dissolved in 100 ml of DMF under a nitrogen stream. 20.9 g (152 mmol) of potassium carbonate and 5.17 g (30.3 mmol) of 5-bromovaleronitrile were added to this solution, and stirred at 60 °C for 8 hr. After the completion of the reaction, the reaction solution was cooled to 20 °C, added to 500 ml of water, and extracted with 500 ml of ethyl acetate. The ethyl acetate layer was dried with anhydrous sodium sulfate. After filtering the sodium sulfate, the ethyl acetate was distilled under reduced pressure using a rotary evaporator, to obtain a yellow solid. The yellow solid was purified by silica gel column chromatography (n-hexane:ethyl acetate = 60:40), thus obtaining 3.41 g of intermediate J as a white solid (yield: 45.7 mol%).

The structure of the target compound was identified by $^1$H-NMR. The results are as follows.

$^1$H-NMR (400MHz, $CDCl_3$, TMS, δppm): 7.60 (d, 1H, J=7.8Hz), 7.51 (d, 1H, J=8.1Hz), 7.28 (dd, 1H, J=7.3, 8.1Hz), 7.07 (dd, 1H, J=7.3Hz, 7.8Hz), 4.23 (s, 2H), 3.81 (t, 2H, J=6.9Hz), 2.46 (t, 2H, J=7.1Hz), 1.88-1.95 (m, 2H), 1.71-1.79 (m, 2H).

Step 2: synthesis of compound 9

A three-necked reactor equipped with a thermometer was charged with 1.50 g (1.60 mmol) of intermediate B synthesized in step 2 of Synthesis Example 1, 438 mg (1.78 mmol) of intermediate J synthesized in step 1, 41.4 mg (0.178 mmol) of (±)-10-camphorsulfonic acid, 16 ml of THF, and 4 ml of ethanol under a nitrogen stream, to yield a uniform solution. The solution was then reacted at 40 °C for 5 hr. After the completion of the reaction, the reaction solution was added to 100 ml of water and extracted with 200 ml of ethyl acetate. The obtained ethyl acetate layer was then dried with anhydrous sodium sulfate. After filtering the sodium sulfate, the ethyl acetate was distilled under reduced pressure from the filtrate using a rotary evaporator, to obtain a yellow solid. The yellow solid was purified by silica gel column chromatography (toluene:ethyl acetate = 85:15), thus obtaining 1.31 g of compound 9 as a pale yellow solid (yield: 70.2 mol%).

The structure of the target compound was identified by $^1$H-NMR. The results are as follows.

$^1$H-NMR (500MHz, $CDCl_3$, TMS, δppm): 7.74 (d, 1H, J=1.5Hz), 7.64-7.72 (m, 3H), 7.35 (ddd, 1H, J=1.5Hz, 8.0Hz, 8.0Hz), 7.19 (ddd, 1H, J=1.5Hz, 8.0Hz, 8.0Hz), 7.10-7.14 (m, 2H), 6.96-7.01 (m, 4H), 6.86-6.91 (m, 4H), 6.40 (dd, 2H, J=1.5Hz, 17.0Hz), 6.12 (dd, 2H, J=10.5Hz, 17.0Hz), 5.82 (dd, 2H, J=1.5Hz, 10.5Hz), 4.22 (t, 2H, J=6.5Hz), 4.18 (t, 4H, J=6.5Hz), 3.95 (t, 4H, J=6.5Hz), 2.58-2.75 (m, 4H), 2.55 (t, 2H, J=6.5Hz), 2.26-2.40 (m, 8H), 1.96 (tt, 2H, J=6.5Hz, 6.5Hz), 1.66-1.83 (m, 18H), 1.42-1.55 (m, 8H).

(Synthesis Example 10) synthesis of compound 10

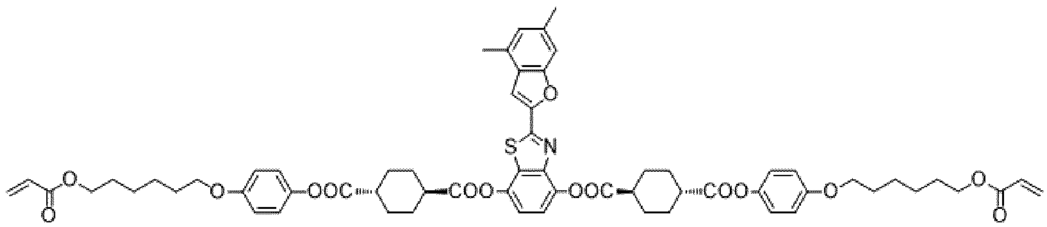

Compound 10

Step 1: synthesis of intermediate 1

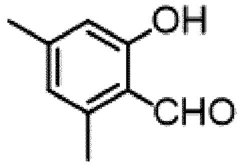

Intermediate 1

In a four-necked reactor equipped with a thermometer, 20.0 g (164 mmol) of 3,5-dimethylphenol and 500 ml of acetonitrile were dissolved under a nitrogen stream. 23.4 g (246 mmol) of magnesium chloride and 58.1 g (574 mmol) of triethylamine were added to this solution, and stirred at 25 °C for 30 min. After this, 14.8 g (492 mmol) of paraformaldehyde was added, and stirred at 75 °C for 3 hr. After the completion of the reaction, the reaction solution was cooled to 30 °C, and then 600 ml of 1M hydrochloric acid was added and extracted with 800 ml of diethylether. The diethylether layer was washed with 300 ml of a saturated aqueous solution of sodium hydrogen carbonate and 300 ml of saturated brine, and then dried with anhydrous magnesium sulfate. After filtering the magnesium sulfate, the diethylether was distilled under reduced pressure using a rotary evaporator, to obtain a white solid. The white solid was purified by silica gel column chromatography (hexane:ethyl acetate = 90:10 (volume ratio)), thus obtaining 17.7 g of intermediate 1 as a white solid (yield: 71.9 mol%).

The structure was identified by $^1$H-NMR. $^1$H-NMR spectral data is as follows.

$^1$H-NMR (500MHz, $CDCl_3$, TMS, $\delta$ppm): 11.95 (s, 1H), 10.22 (s, 1H), 6.61 (s, 1H), 6.53 (s, 1H), 2.54 (s, 3H), 2.30 (s, 3H).

Step 2: synthesis of intermediate 2

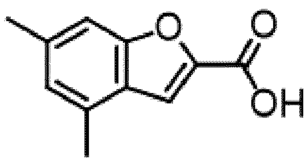

Intermediate 2

In a four-necked reactor equipped with a thermometer, 12.0 g (79.9 mmol) of intermediate 1 synthesized in step 1 and 105 ml of dimethylacetoamide were dissolved under a nitrogen stream. 11.0 g (79.9 mmol) of potassium carbonate was added to this solution and heated to 80 °C, and then 13.3 g (79.9 mmol) of bromoethyl acetate was added over 30 min. The solution was stirred at 80 °C for 1 hr, and then heated to 130 °C and further stirred for 1 hr. After this, the reaction solution was cooled to 30 °C, and then 300 ml of 1M hydrochloric acid was added and extracted with 120 ml of methylisobutylketone. The methylisobutylketone layer was dried with sodium sulfate, the sodium sulfate was filtered,

and then the methylisobutylketone was distilled under reduced pressure using a rotary evaporator to obtain a pale yellow solid. The pale yellow solid was dissolved in 500 ml of ethanol. 12.0 g (214 mmol) of potassium hydroxide was added to the solution, and stirred at 80 °C for 1 hr. After the completion of the reaction, ethanol was distilled under reduced pressure using a rotary evaporator, thus obtaining a pale yellow solid. The pale yellow solid was dissolved in 300 ml of water, and the resulting solution was washed with 300 ml of toluene and 300 ml of heptane. A 2M sulfuric acid aqueous solution was added to the solution to adjust pH to 3, and then the precipitated solid was filtered, and the filtered solid was vacuum dried to obtain 12.3 g of intermediate 2 as a white solid (yield: 80.9 mol%).

The structure was identified by $^1$H-NMR. $^1$H-NMR spectral data is as follows.

$^1$H-NMR (500MHz, $CDCl_3$, TMS, δppm): 13.42(brs, 1H), 7.69 (d, 1H, J=1.0Hz), 7.30 (s, 1H), 6.98 (s, 1H), 2.48 (s, 3H), 2.41 (s, 3H).

Step 3: synthesis of intermediate 3

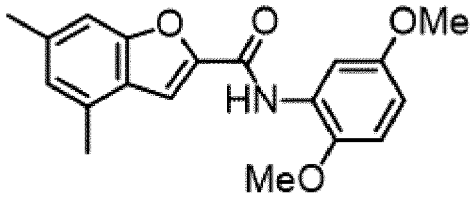

Intermediate 3

In a four-necked reactor equipped with a thermometer, 12.0 g (63.1 mmol) of intermediate 2 synthesized in step 2, 14.5 g (94.6 mmol) of 2,5-dimethoxyaniline, and 120 g of chloroform were dissolved under a nitrogen stream. A mixed solution of 13.3 g (69.4 mmol) of 1-(3-dimethylaminopropyl)-3-ethylcarbodiimide hydrochloride and 120 g of chloroform was added to the solution, and stirred at 25 °C for 3 hr. After the completion of the reaction, chloroform was distilled under reduced pressure using a rotary evaporator, thus obtaining a pale yellow oil. A mixed solution of 200 ml of 1M hydrochloric acid, 200 ml of water, and 100 ml of methanol was added to the pale yellow oil, and stirred at 25 °C. The precipitated white solid was filtered, and the filtered solid was vacuum dried to obtain 16.7 g of intermediate 1-3 as a white solid (yield: 81.2 mol%).

The structure was identified by $^1$H-NMR. $^1$H-NMR spectral data is as follows.

$^1$H-NMR (500 MHz, $CDCl_3$, TMS, δ ppm): 8.28 (d, 1H, J=3.0Hz), 7.56 (d, 1H, J=1.0Hz), 7.26 (s, 1H), 7.22 (s, 1H), 6.94 (s, 1H), 6.86 (d, 1H, J=9.0Hz), 6.64 (dd, 1H, J=3.0Hz, 9.0Hz), 3.97 (s, 3H), 3.81 (s, 3H), 2.51 (s, 3H), 2.49 (s, 3H).

Step 4: synthesis of intermediate 4

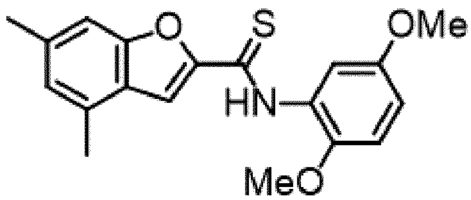

Intermediate 4

In a four-necked reactor equipped with a thermometer, 16.0 g (49.2 mmol) of intermediate 3 synthesized in step 3 and 200 ml of toluene were dissolved under a nitrogen stream. 12.1 g (23.0 mmol) of 2,4-bis(4-methoxyphenyl)-1,3-dithia-2,4-diphosphetane-2,4-disulfide was added to this solution, and heated under reflux for 4 hr. After the completion of the reaction, the reaction solution was cooled to 30 °C, and then 400 ml of 1M sodium hydroxide aqueous solution was added and extracted with 500 ml of toluene. 500 ml of toluene was distilled under reduced pressure from the resulting toluene layer using a rotary evaporator, and then 500 ml of heptane was added. The precipitated yellow solid was filtered, and the filtered solid was vacuum dried, thus obtaining 14.7 g of intermediate 4 as a yellow solid (yield:

87.5 mol%).

The structure was identified by $^1$H-NMR. $^1$H-NMR spectral data is as follows.

$^1$H-NMR (500 MHz, $CDCl_3$, TMS, δ ppm): 10.45 (s, 1H), 9.13 (d, 1H, J=3.0Hz), 7.82 (d, 1H, J=1.0Hz), 7.18 (s, 1H), 6.93 (s, 1H), 6.91 (d, 1H, J=9.0Hz), 6.77 (dd, 1H, J=3.0Hz, 9.0Hz), 3.97 (s, 3H), 3.83 (s, 3H), 2.51 (s, 3H), 2.46 (s, 3H).

Step 5: synthesis of intermediate 5

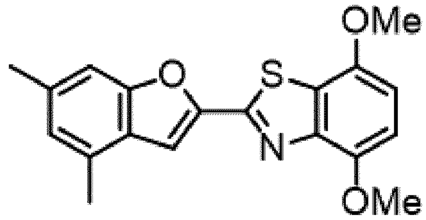

Intermediate 5

A four-necked reactor equipped with a thermometer was charged with 13.2 g (38.6 mmol) of intermediate 4 synthesized in step 4, 220 g of water, and 11.9 g (212 mmol) of potassium hydroxide under a nitrogen stream, and stirred under ice cooling. 29.2 g (88.8 mmol) of potassium ferricyanide and 12 g of methanol were added to the resulting mixed solution, and then heated to 60 °C and stirred for 6 hr. After the completion of the reaction, the reaction solution was cooled to 30 °C, the precipitated yellow solid was filtered, and the filtered solid was vacuum dried, thus obtaining 10.2 g of intermediate 5 as a yellow solid (yield: 76.8 mol%).

The structure was identified by $^1$H-NMR. $^1$H-NMR spectral data is as follows.

$^1$H-NMR (500MHz, $CDCl_3$, TMS, δppm): 7.65 (d, 1H, J=1.0Hz), 7.21 (s, 1H), 6.91 (s, 1H), 6.84 (d, 1H, J=8.5Hz), 6.76 (d, 1H, J=8.5Hz), 4.04 (s, 3H), 3.97 (s, 3H), 2.51 (s, 3H), 2.46 (s, 3H).

Step 6: synthesis of intermediate 6

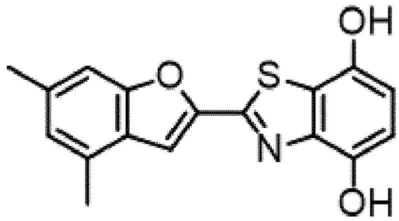

Intermediate 6

A four-necked reactor equipped with a thermometer was charged with 7.2 g (21.2 mmol) of intermediate 5 synthesized in step 5 and 72 g of pyridine hydrochloride under a nitrogen stream, and stirred at 180 °C for 4 hr. After the completion of the reaction, the reaction solution was cooled to 30 °C, and 300 g of water was added. The precipitated solid was filtered, and washed with 30 g of water, 30 g of toluene, and 30 g of hexane. The resulting solid was vacuum dried, thus obtaining 6.38 g of intermediate 6 as a yellow solid (yield: 96.6 mol%).

The structure was identified by $^1$H-NMR. $^1$H-NMR spectral data is as follows.

$^1$H-NMR (500MHz, DMSO-$d_6$, TMS, δppm): 9.91 (s, 1H), 9.59(brs, 1H), 7.76 (d, 1H, J=1.0Hz), 7.36 (s, 1H), 6.99 (s, 1H), 6.79 (d, 1H, J=8.5Hz), 6.74 (d, 1H, J=8.5Hz), 2.53 (s, 3H), 2.43 (s, 3H).

Step 7: synthesis of compound 10

A four-necked reactor equipped with a thermometer was charged with 1.00 g (3.21 mmol) of intermediate 6 synthesized in step 6 and 50 ml of chloroform under a nitrogen stream. 2.96 g (7.07 mmol) of intermediate A synthesized

in step 1 of Synthesis Example 1 and 39.2 mg (0.321 mmol) of 4-dimethylaminopyridine were added to this solution, and cooled to 0 °C. After this, 972 mg (7.70 mmol) of N,N'-diisopropylcarbodiimide was added to the solution, and stirred at room temperature for 1.5 hr. After the completion of the reaction, the reaction solution was filtered using a filter medium precoated with a silica gel, and then concentrated under reduced pressure. The resulting residue was purified by silica gel column chromatography (chloroform:ethyl acetate = 90:10 (volume ratio)), thus obtaining 2.84 g of compound 10 as a white solid (yield: 79.5 %).

The structure was identified by $^1$H-NMR. $^1$H-NMR spectral data is as follows.

$^1$H-NMR (500MHz, $CDCl_3$, TMS, δppm): 7.53 (d, 1H, J=1.0Hz), 7.23 (s, 2H), 7.21 (s, 1H), 6.999 (d, 2H, J=9.0Hz), 6.995 (d, 2H, J=9.0Hz), 6.94 (s, 1H), 6.89 (d, 4H, J=9.0Hz), 6.40 (dd, 2H, J=1.5Hz, 17.5Hz), 6.12 (dd, 2H, J=10.5Hz, 17.5Hz), 5.82 (dd, 2H, J=1.5Hz, 10.5Hz), 4.18 (t, 4H, J=7.0Hz), 3.95 (t, 4H, J=6.5Hz), 2.84 (tt, 1H, J=3.5Hz, 12.0Hz), 2.59-2.75 (m, 3H), 2.54 (s, 3H), 2.47 (s, 3H), 2.42-2.46 (m, 2H), 2.31-2.41 (m, 6H), 1.69-1.87 (m, 16H), 1.41-1.57 (m, 8H).

(Synthesis Example 11) synthesis of compound 11

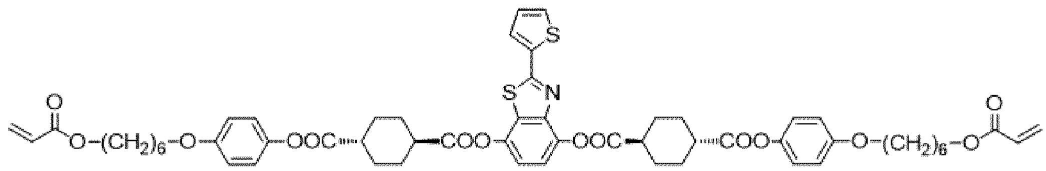

Compound 11

Step 1: synthesis of intermediate 7

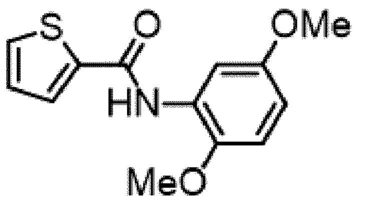

Intermediate 7

In a four-necked reactor equipped with a thermometer, 5.00 g (34.1 mmol) of 2-thenoylchloride, 5.22 g (34.1 mmol) of 2,5-dimethoxyaniline, and 50 g of chloroform were dissolved under a nitrogen stream. 6.90 g (68.2 mmol) of triethylamine was added to this solution, and stirred at 60 °C for 2 hr. After the completion of the reaction, 50 g of water was added, and extracted with 100 ml of chloroform. 100 ml of chloroform was distilled under reduced pressure from the resulting chloroform layer using a rotary evaporator, and then 100 ml of heptane was added. The precipitated pale yellow solid was filtered, and the filtered solid was vacuum dried, thus obtaining 7.79 g of intermediate 7 as a pale yellow solid (yield: 86.7 %).

The structure was identified by $^1$H-NMR. $^1$H-NMR spectral data is as follows.

$^1$H-NMR (500MHz, $CDCl_3$, TMS, δppm): 8.45 (s, 1H), 8.20 (d, 1H, J=3.0Hz), 7.61 (dd, 1H, J=1.0Hz, 3.5Hz), 7.54 (dd, 1H, J=1.0Hz, 5.0Hz), 7.13 (dd, 1H, J=3.5Hz, 5.0Hz), 6.83 (d, 1H, J=9.0Hz), 6.61 (dd, 1H, J=3.0Hz, 9.0Hz), 3.89 (s, 3H), 3.81 (s, 3H).

Step 2: synthesis of intermediate 8

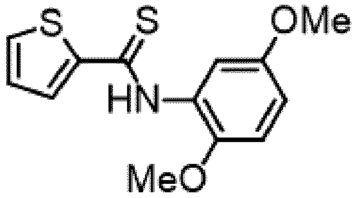

Intermediate 8

In a four-necked reactor equipped with a thermometer, 7.00 g (26.6 mmol) of intermediate 7 synthesized in step 1 and 100 ml of toluene were dissolved under a nitrogen stream. 6.45 g (15.9 mmol) of 2,4-bis(4-methoxyphenyl)-1,3-dithia-2,4-diphosphetane-2,4-disulfide was added to this solution, and heated under reflux for 4 hr. After the completion of the reaction, the reaction solution was cooled to 30 °C, and then 400 ml of 1M sodium hydroxide aqueous solution was added and extracted with 500 ml of toluene. Toluene was distilled under reduced pressure from the resulting toluene layer using a rotary evaporator, thus obtaining an oil. The obtained oil was purified by silica gel column chromatography (toluene:ethyl acetate = 90:10 (volume ratio)), thus obtaining 7.07 g of intermediate 8 as an orange oil (yield: 95.2 %).

The structure was identified by $^1$H-NMR. $^1$H-NMR spectral data is as follows.

$^1$H-NMR (500MHz, $CDCl_3$, TMS, δppm): 9.71 (s, 1H), 8.88 (s, 1H), 7.52 (dd, 1H, J=1.0Hz, 5.0Hz), 7.47 (dd, 1H, J=1.0Hz, 4.0Hz), 7.09 (dd, 1H, J=4.0Hz, 5.0Hz), 6.86 (d, 1H, J=9.0Hz), 6.70 (dd, 1H, J=3.0Hz, 9.0Hz), 3.89 (s, 3H), 3.78 (s, 3H).

Step 3: synthesis of intermediate 9

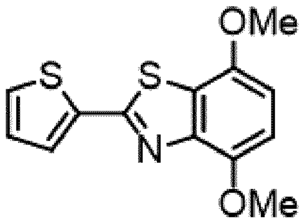

Intermediate 9

A four-necked reactor equipped with a thermometer was charged with 7.00 g (25.1 mmol) of intermediate 8 synthesized in step 2, 120 g of water, and 8.20 g (146 mmol) of potassium hydroxide under a nitrogen stream, and stirred under ice cooling. 21.9 g (66.5 mmol) of potassium ferricyanide and 6 g of methanol were added to the resulting mixed solution, and then heated to 25 °C and stirred for 15 hr. After the completion of the reaction, the precipitated yellow solid was filtered, and the filtered solid was vacuum dried, thus obtaining 3.40 g of intermediate 9 as a yellow solid (yield: 46.1 %).

The structure was identified by $^1$H-NMR. $^1$H-NMR spectral data is as follows.

$^1$H-NMR (400MHz, $CDCl_3$, TMS, δppm): 7.67 (dd, 1H, J=1.2Hz, 3.6Hz), 7.46 (dd, 1H, J=1.2Hz, 5.2Hz), 7.11 (dd, 1H, J=3.6Hz, 5.2Hz), 6.82 (d, 1H, J=8.8Hz), 7.30 (d, 1H, J=8.8Hz), 4.02 (s, 3H), 3.95 (s, 3H).

Step 4: synthesis of intermediate 10

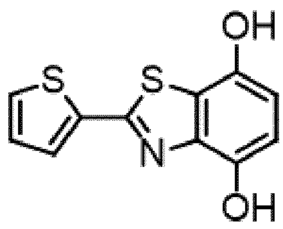

Intermediate 10

In a four-necked reactor equipped with a thermometer, 2.10 g (7.72 mmol) of intermediate 9 synthesized in step 3 and 50 ml of toluene were dissolved under a nitrogen stream, and then cooled to 0 °C. 46.3 ml (46.3 mmol) of 1M boron tribromide dichloromethane solution was added to this solution, and stirred for 1 hr. After the completion of the reaction, the reaction solution was added to 200 ml of water, and the precipitated solid was filtered. The resulting solid was vacuum dried, thus obtaining 1.79 g of intermediate 10 as a yellow solid (yield: 93.2 %).

The structure was identified by $^1$H-NMR. $^1$H-NMR spectral data is as follows.

$^1$H-NMR (500MHz, DMSO-$d_6$, TMS, $\delta$ppm): 9.82 (s, 1H), 9.48 (s, 1H), 7.83 (dd, 1H, J=1.0Hz, 5.0Hz), 7.78 (dd, 1H, J=1.0Hz, 3.5Hz), 7.23 (dd, 1H, J=3.5Hz, 5.0Hz), 6.74 (d, 1H, J=8.5Hz), 6.68 (d, 1H, J=8.5Hz).

Step 5: synthesis of compound 11

A four-necked reactor equipped with a thermometer was charged with 1.50 g (6.02 mmol) of intermediate 10 synthesized in step 4 and 90 ml of chloroform under a nitrogen stream. 5.29 g (12.63 mmol) of intermediate A synthesized in step 1 of Synthesis Example 1 and 147 mg (1.20 mmol) of 4-dimethylaminopyridine were added to this solution, and cooled to 0 °C. After this, 1.82 g (14.5 mmol) of N,N'-diisopropylcarbodiimide was added to the solution, and stirred at room temperature for 1.5 hr. After the completion of the reaction, the reaction solution was filtered using a filter medium precoated with a silica gel, and then concentrated under reduced pressure. 150 ml of methanol was added to the resulting residue, and the precipitated solid was filtered. The resulting solid was vacuum dried, thus obtaining 4.69 g of compound 11 as a white solid (yield: 74.2 %).

The structure was identified by $^1$H-NMR. $^1$H-NMR spectral data is as follows.

$^1$H-NMR (500MHz, $CDCl_3$, TMS, $\delta$ppm): 7.63 (dd, 1H, J=1.0Hz, 3.5Hz), 7.51 (dd, 1H, J=1.0Hz, 5.0Hz), 7.18 (s, 2H), 7.12 (dd, 1H, J=3.5Hz, 5.0Hz), 6.993 (d, 2H, J=9.0Hz), 6.987 (d, 2H, J=9.0Hz), 6.88 (d, 4H, J=9.0Hz), 6.40 (dd, 2H, J=1.5Hz, 17.5Hz), 6.12 (dd, 2H, J=10.0Hz, 17.5Hz), 5.82 (dd, 2H, J=1.5Hz, 10.0Hz), 4.17 (t, 4H, J=6.5Hz), 3.94 (t, 4H, J=6.5Hz), 2.79 (tt, 1H, J=3.5Hz, 11.5Hz), 2.58-2.71 (m, 3H), 2.42-2.45 (m, 2H), 2.31-2.36 (m, 6H), 1.66-1.89 (m, 16H), 1.42-1.54 (m, 8H).

(Synthesis Example 12) synthesis of compound 12

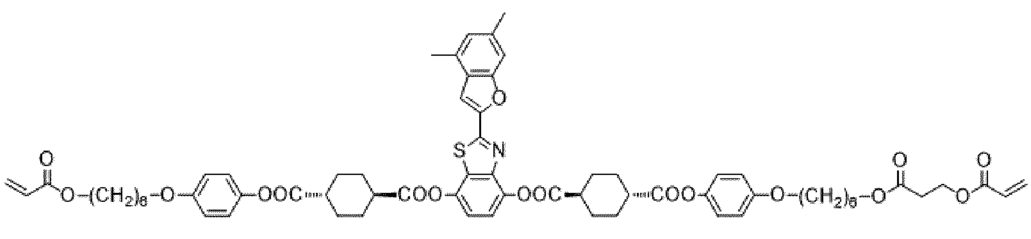

Compound 12

Step 1: synthesis of intermediate 11

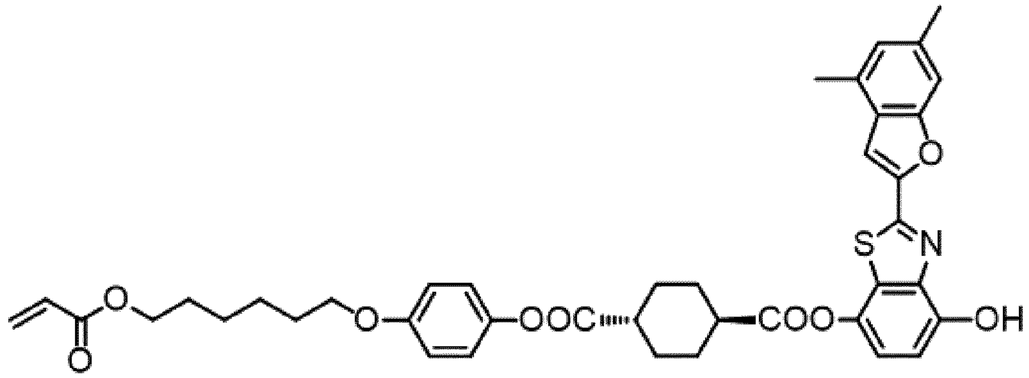

Intermediate 11

A three-necked reactor equipped with a thermometer was charged with 4.0 g (12.8 mmol) of intermediate 6 synthesized in step 6 of Synthesis Example 10 and 160 ml of THF under a nitrogen stream, and the solution was cooled to 0 °C. 6.44 g (15.4 mmol) of intermediate A synthesized in step 1 of Synthesis Example 1, 156 mg (1.28 mmol) of 4-dimethylaminopyridine, and 1.94 g (15.4 mmol) of N,N'-diisopropylcarbodiimide were added to this solution, and stirred at room temperature for 1 hr. After the completion of the reaction, the reaction solution was added to 200 ml of water and extracted with 400 ml of ethyl acetate. The obtained ethyl acetate layer was then dried with anhydrous sodium sulfate. After filtering the sodium sulfate, a rotary evaporator was used for concentration. The resulting residue was purified by silica gel column chromatography (toluene:ethyl acetate = 90:10), thus obtaining 1.29 g of intermediate 11 as a flesh-colored solid (yield: 14.1 mol%).

The structure of the target compound was identified by $^1$H-NMR. The results are as follows.

$^1$H-NMR (500 MHz, $CDCl_3$, TMS, $\delta$ ppm): 7.53 (d, 1H, J=1.0Hz), 7.21 (s, 1H), 7.10 (d, 1H, J=9.0Hz), 6.98-7.01 (m, 4H), 6.94 (s, 1H), 6.88 (d, 2H, J=9.0Hz), 6.41 (dd, 1H, J=1.5Hz, 17.5Hz), 6.13 (dd, 1H, J=10.5Hz, 17.5Hz), 6.13 (dd, 1H, J=1.5Hz, 10.5Hz), 4.18 (t, 2H, J=7.0Hz), 3.95 (t, 2H, J=6.5Hz), 2.53 (s, 3H), 2.47 (s, 3H), 2.32-2.43 (m, 4H), 1.67-1.82 (m, 10H), 1.45-1.56 (m, 4H).

Step 2: synthesis of intermediate 12

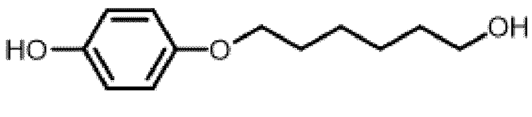

Intermediate 12

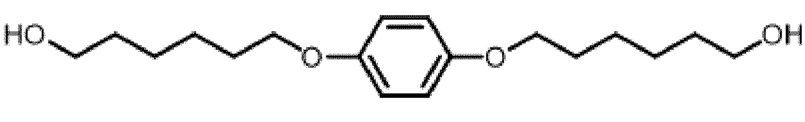

By-product 12

A three-necked reactor equipped with a condenser and a thermometer was charged with 104.77 g (0.9515 mol) of hydroquinone, 100 g (0.7320 mol) of 6-chlorohexanol, 500 g of distilled water, and 100 g of o-xylene under a nitrogen stream. While stirring the entire mass, 35.15 g (0.8784 mol) of sodium hydroxide was added in small portions over 20 min so that the temperature of the contents did not exceed 40 °C. After adding the sodium hydroxide, the contents were heated, and reacted for 12 hr under reflux conditions (96 °C).

After the completion of the reaction, the temperature of the reaction solution was lowered to 80 °C, and 200 g of distilled water was added. The reaction solution was then cooled to 10 °C, as a result of which crystals precipitated. The precipitated crystals were subjected to solid-liquid separation by filtering, and the obtained crystals were washed

with 500 g of distilled water and vacuum dried, to obtain 123.3 g of brown crystals.

As a result of analyzing the brown crystals by high-performance liquid chromatography, the content ratio (molar ratio) of the compounds contained in the brown crystals was (hydroquinone / intermediate 12 / by-product 12 = 1.3/90.1/8.1). This mixture was directly used in step 3, without purification.

Step 3: synthesis of intermediate 13

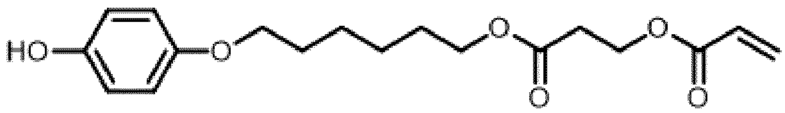

Intermediate 13

A three-necked reactor equipped with a condenser and a thermometer including a Dean-Stark apparatus was charged with 10.00 g of the brown crystals including intermediate 12 synthesized in step 12, 100 g of toluene, and 0.105 g (0.476 mmol) of 2,6-di-t-butyl-p-cresol under a nitrogen stream, and the entire contents were stirred. The solution was then heated to 80 °C, 20.56 g (0.1427 mol) of acrylic acid 2-carboxyethyl and 1.37 g (14.3 mmol) of methanesulfonic acid were added, and dehydration reaction was performed for 2 hr under reflux conditions (110 °C) while removing produced water. The reaction solution was then lowered to 30°C, 500 g of distilled water was added, and the entire mass was stirred and subsequently left at rest. The organic layer was collected, 500 g of 5% brine was added to the obtained organic layer, and liquid separation was carried out. The organic layer was collected and dried with anhydrous sodium sulfate, and sodium sulfate was filtered. The filtrate was concentrated using a rotary evaporator, and then purified by silica gel column chromatography (toluene:ethyl acetate = 8:1), thus obtaining 7.93 g of intermediate 13 as a white solid in steps 2 to 3 in total (yield: 40 mol%).

The structure of the target compound was identified by $^1$H-NMR. The results are as follows.

$^1$H-NMR (500MHz, $CDCl_3$, TMS, δppm): 6.77 (d, 2H, J=9.0Hz), 6.76 (d, 2H, J=9.0Hz), 6.41 (dd, 1H, J=1.5Hz, 17.5Hz), 6.11 (dd, 1H, J=10.5Hz, 17.5Hz), 5.83 (dd, 1H, J=1.5Hz, 10.5Hz), 4.83 (s, 1H), 4.44 (t, 2H, J=6.5Hz), 4.13 (t, 2H, J=6.5Hz), 3.89 (t, 2H, J=6.5Hz), 2.69 (t, 2H, J=6.5Hz), 1.71-1.80 (m, 2H), 1.62-1.70 (m, 2H), 1.36-1.52 (m, 4H).

Step 4: synthesis of intermediate 14

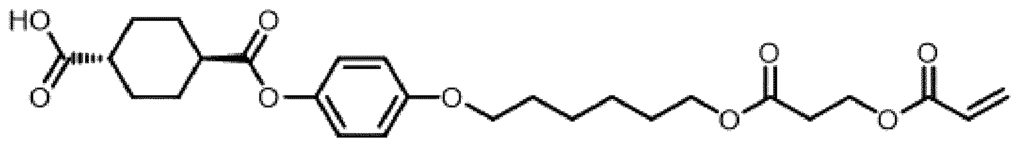

Intermediate 14

A three-necked reactor equipped with a thermometer was charged with 3.58 g (0.0208 mol) of trans-1,4-cyclohexanedicarboxylic acid and 25 ml of THF under a nitrogen stream. 1.25 g (0.0109 mol) of methanesulfonyl chloride was then added, and the reactor was immersed in a water bath to adjust the reaction solution temperature to 5 °C. 1.15 g (0.0114 mol) of triethylamine was added dropwise over 15 min while retaining the reaction solution temperature to 15 °C or less. After stirring the reaction solution at 5 °C for 1 hr, 0.127 g (1.04 mmol) of 4-(dimethylamino)pyridine and 3.51 g (0.0104 mol) of intermediate 13 synthesized in step 3 were added, and 1.15 g (0.0114 mol) of triethylamine was added dropwise over 15 min while retaining the reaction solution temperature to 15 °C or less. Subsequently, the reaction solution was reacted at 25 °C for 2 hr. After the completion of the reaction, 300 ml of distilled water and 30 ml of saturated brine were added to the reaction solution, and extracted twice with 200 ml of chloroform. The obtained organic layer was dried with anhydrous sodium sulfate, and sodium sulfate was filtered. The filtrate was concentrated using a rotary evaporator, and purified by silica gel column chromatography (chloroform:THF = 95:5), thus obtaining 2.41 g of intermediate 14 as a white solid (yield: 47 mol%).

The structure of the target compound was identified by $^1$H-NMR. The results are as follows.

$^1$H-NMR (500MHz, $CDCl_3$, TMS, δppm): 6.96 (d, 2H, J=9.0Hz), 6.86 (d, 2H, J=9.0Hz), 6.41 (dd, 1H, J=1.5Hz,

17.5Hz), 6.11 (dd, 1H, J=10.5Hz, 17.5Hz), 5.83 (dd, 1H, J=1.5Hz, 10.5Hz), 4.44 (t, 2H, J=6.5Hz), 4.13 (t, 2H, J=6.5Hz), 3.93 (t, 2H, J=6.5Hz), 2.69 (t, 2H, J=6.5Hz), 2.47-2.57 (m, 1H), 2.34-2.43 (m, 1H), 2.12-2.28 (m, 4H), 1.73-1.82 (m, 2H), 1.36-1.71 (m, 10H).

Step 5: synthesis of compound 12

A four-necked reactor equipped with a thermometer was charged with 975 mg (1.37 mmol) of intermediate 11 synthesized in step 1 and 20 ml of chloroform under a nitrogen stream. 810 mg (1.65 mmol) of intermediate 14 synthesized in step 4 and 16.5 mg (0.135 mmol) of 4-dimethylaminopyridine were added to this solution, and cooled to 0 °C. After this, 207 mg (1.65 mmol) of N,N'-diisopropylcarbodiimide was added to the solution, and stirred at room temperature for 1.5 hr. After the completion of the reaction, the reaction solution was filtered using a filter medium precoated with a silica gel, and then concentrated under reduced pressure. 80 ml of methanol was added to the resulting residue, and the precipitated white solid was filtered. The filtered solid was vacuum dried, thus obtaining 1.35 g of compound 12 as a white solid (yield: 82.8 mol%).

The structure was identified by $^1$H-NMR. The results are as follows.

$^1$H-NMR (400MHz, $CDCl_3$, TMS, δppm): 7.53 (s, 1H), 7.22 (s, 2H), 7.20 (s, 1H), 6.99 (d, 4H, J=9.0Hz), 6.94 (s, 1H), 6.88 (d, 4H, J=9.0Hz), 6.37-6.43 (m, 2H), 6.12 (dd, 1H, J=11.0Hz, 17.6Hz), 6.11 (dd, 1H, J=10.8Hz, 17.6Hz), 5.83 (dd, 1H, J=1.6Hz, 11.0Hz), 5.81 (dd, 1H, J=1.6Hz, 10.8Hz), 4.43 (t, 2H, J=6.4Hz), 4.17 (t, 2H, J=6.8Hz), 4.13 (t, 2H, J=6.4Hz), 3.94 (t, 4H, J=6.4Hz), 2.84 (tt, 1H, J=4.0Hz, 11.6Hz), 2.59-2.75 (m, 5H), 2.54 (s, 3H), 2.41-2.48 (m, 5H), 2.29-2.39 (m, 6H), 1.64-1.87 (m, 16H), 1.38-1.55 (m, 8H).

(Synthesis Example 13) synthesis of compound 13

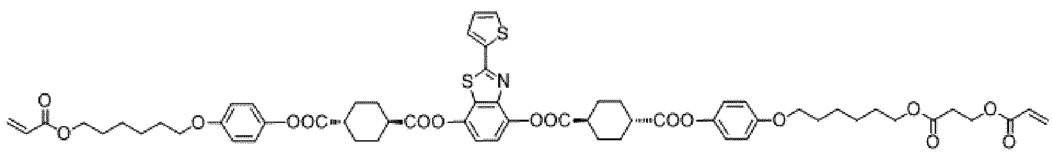

Compound 13

Step 1: synthesis of intermediate 15

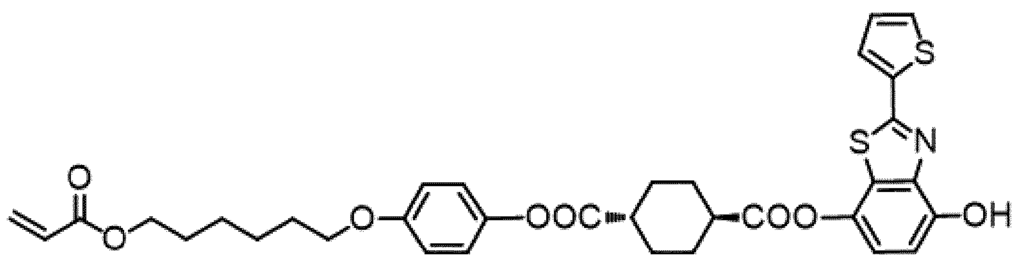

Intermediate 15

A three-necked reactor equipped with a thermometer was charged with 4.0 g (16.04 mmol) of intermediate 10 synthesized in step 4 of Synthesis Example 11 and 160 ml of THF under a nitrogen stream, and the solution was cooled to 0 °C. 8.05 g (19.25 mmol) of intermediate A synthesized in step 1 of Synthesis Example 1, 196 mg (1.60 mmol) of 4-dimethylaminopyridine, and 2.43 g (19.25 mmol) of N,N'-diisopropylcarbodiimide were added to this solution, and stirred at room temperature for 1 hr. After the completion of the reaction, the reaction solution was added to 200 ml of water and extracted with 400 ml of ethyl acetate. The obtained ethyl acetate layer was then dried with anhydrous sodium sulfate. After filtering the sodium sulfate, a rotary evaporator was used for concentration. The resulting residue was

purified by silica gel column chromatography (toluene:ethyl acetate = 90:10), thus obtaining 1.55 g of intermediate 15 as a pale ocher solid (yield: 14.9 mol%).

Step 2: synthesis of compound 13

A four-necked reactor equipped with a thermometer was charged with 1.5 g (2.31 mmol) of intermediate 15 synthesized in step 1 and 30 ml of chloroform under a nitrogen stream. 1.36 g (2.77 mmol) of intermediate 14 synthesized in step 4 of Synthesis Example 12 and 33.8 mg (0.277 mmol) of 4-dimethylaminopyridine were added to this solution, and cooled to 0 °C. After this, 350 mg (2.77 mmol) of N,N'-diisopropylcarbodiimide was added to the solution, and stirred at room temperature for 2 hr. After the completion of the reaction, the reaction solution was filtered using a filter medium precoated with a silica gel, and then concentrated under reduced pressure. 100 ml of methanol was added to the resulting residue, and the precipitated white solid was filtered. The filtered solid was vacuum dried, thus obtaining 1.88 g of compound 13 as a white solid (yield: 72.5 mol%).

The structure was identified by $^1$H-NMR. The results are as follows.

$^1$H-NMR (500MHz, $CDCl_3$, TMS, δppm): 7.63 (dd, 1H, J=1.0Hz, 3.5Hz), 7.50 (dd, 1H, J=1.0Hz, 5.0Hz), 7.17 (s, 2H), 7.11 (dd, 1H, J=3.5Hz, 5.0Hz), 6.99 (d, 4H, J=9.0Hz), 6.88 (d, 4H, J=9.0Hz), 6.40 (dd, 2H, J=1.5Hz, 17.5Hz), 6.12 (dd, 2H, J=10.0Hz, 17.5Hz), 5.82 (dd, 2H, J=1.5Hz, 10.0Hz), 4.43 (t, 2H, J=6.4Hz), 4.17 (t, 4H, J=6.5Hz), 3.93 (t, 4H, J=6.5Hz), 2.79 (tt, 1H, J=3.5Hz, 11.5Hz), 2.58-2.71 (m, 5H), 2.41-2.46 (m, 2H), 2.29-2.34 (m, 6H), 1.62-1.89 (m, 16H), 1.40-1.52 (m, 8H).

(Synthesis Example 14) synthesis of compound 14

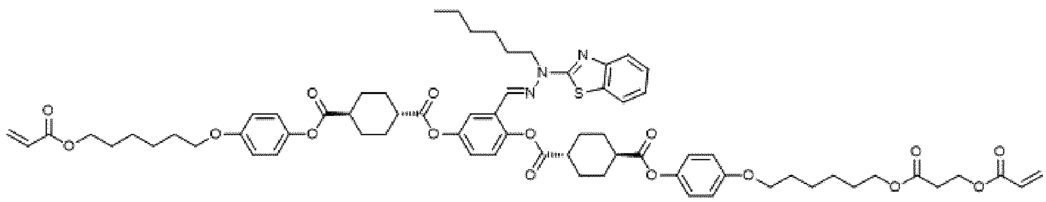

Compound 14

Step 1: synthesis of intermediate K

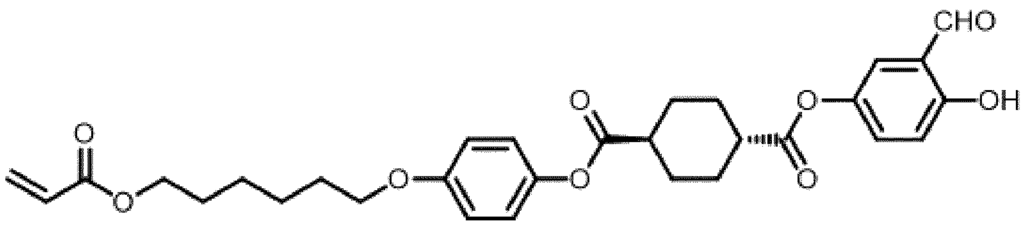

Intermediate K

A three-necked reactor equipped with a thermometer was charged with 3.90 g (8.85 mmol) of intermediate A synthesized in step 1 of Synthesis Example 1, 0.52 g (7.1 mmol) of DMF, and 39 g of toluene under a nitrogen stream. The solution was cooled to 5 °C, 1.10 g (9.3 mmol) of thionyl chloride was added dropwise over 10 min, and then reacted at 5 °C for 1 hr. Subsequently, the reaction solution was concentrated using a rotary evaporator and vacuum dried, to obtain a white solid.

In a three-necked reactor equipped with a thermometer, 6.10 g (0.0443 mol) of 2,5-dihydroxybenzaldehyde, 0.985 g (9.7 mmol) of triethylamine, and 35 g of THF were dissolved under a nitrogen stream. The solution was cooled to 5 °C, and the white solid obtained above was added. The solution was then reacted for 30 min. Subsequently, 200

ml of distilled water and 10 ml of saturated brine were added to the reaction solution, and extracted twice with 100 ml of ethyl acetate. The obtained organic layer was dried with anhydrous sodium sulfate, and sodium sulfate was filtered. The filtrate was concentrated using a rotary evaporator, and then purified by silica gel column chromatography (toluene:THF = 95:5), thus obtaining 1.53 g of intermediate K as a white solid (yield: 32 mol%).

The structure of the target compound was identified by $^1$H-NMR. The results are as follows.

$^1$H-NMR (500MHz, $CDCl_3$, TMS, δppm): 10.91 (s, 1H), 9.86 (s, 1H), 7.32 (d, 1H, J=3.0Hz), 7.24 (dd, 1H, J=3.0Hz, 9.0Hz), 7.01 (d, 1H, J=9.0Hz), 6.97 (d, 2H, J=9.0Hz), 6.87 (d, 2H, J=9.0Hz), 6.40 (dd, 1H, J=1.5Hz, 17.5Hz), 6.12 (dd, 1H, J=10.5Hz, 17.5Hz), 5.82 (dd, 1H, J=1.5Hz, 10.5Hz), 4.17 (t, 2H, J=6.5Hz), 3.94 (t, 2H, J=6.5Hz), 2.51-2.65 (m, 2H), 2.20-2.35 (m, 4H), 1.75-1.83 (m, 2H), 1.63-1.75 (m, 6H), 1.36-1.55 (m, 4H).

Step 2: synthesis of intermediate L

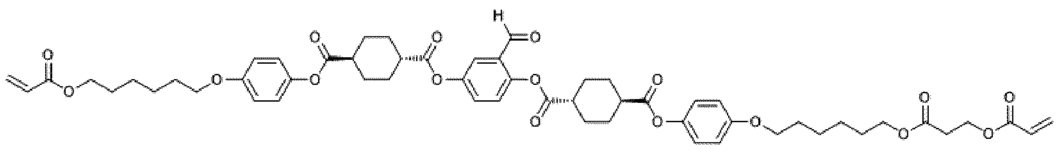

Intermediate L

In a three-necked reactor equipped with a thermometer, 1.00 g (2.04 mmol) of intermediate 14 synthesized in step 4 of Synthesis Example 12 and 15 ml of THF were dissolved under a nitrogen stream. 0.234 g (2.04 mmol) of methanesulfonyl chloride was then added, the reaction solution was cooled to 5 °C, and 0.236 g (2.33 mmol) of triethylamine was added dropwise over 10 min. After reacting the reaction solution at 5 °C for 1 hr, 0.018 g (0.15 mmol) of 4-dimethylaminopyridine and 0.786 g (1.46 mmol) of intermediate K synthesized in step 1 were added, and 0.177 g (1.75 mmol) of triethylamine was added dropwise over 10 min. After reacting the reaction solution at 25 °C for 2 hr, 200 ml of distilled water and 20 ml of saturated brine were added to the reaction solution, and extracted twice with 100 ml of chloroform. The obtained ethyl acetate layer was dried with anhydrous sodium sulfate, and sodium sulfate was filtered. The filtrate was concentrated using a rotary evaporator, and then purified by silica gel column chromatography (chloroform:THF = 99:1), thus obtaining 1.15 g of intermediate L as a white solid (yield: 78 mol%).

The structure of the target compound was identified by $^1$H-NMR. The results are as follows.

$^1$H-NMR (500MHz, DMSO-$d_6$, TMS, δppm): 10.08 (s, 1H), 7.61 (d, 1H, J=3.0Hz), 7.37 (dd, 1H, J=3.0Hz, 9.0Hz), 7.20 (d, 1H, J=9.0Hz), 6.98 (d, 2H, J=9.0Hz), 6.97 (d, 2H, J=9.0Hz), 6.88 (d, 2H, J=9.0Hz), 6.88 (d, 2H, J=9.0Hz), 6.41 (dd, 1H, J=1.5Hz, 17.5Hz), 6.40 (dd, 1H, J=1.5Hz, 17.5Hz), 6.13 (dd, 1H, J=10.5Hz, 17.5Hz), 6.11 (dd, 1H, J=10.5Hz, 17.5Hz), 5.83 (dd, 1H, J=1.5Hz, 10.5Hz), 5.82 (dd, 1H, J=1.5Hz, 10.5Hz), 4.44 (t, 2H, J=6.5Hz), 4.17 (t, 2H, J=6.5Hz), 4.13 (t, 2H, J=6.5Hz), 3.94 (t, 2H, J=6.5Hz), 3.94 (t, 2H, J=6.5Hz), 2.53-2.74 (m, 6H), 2.20-2.39 (m, 8H), 1.60-1.83 (m, 16H), 1.34-1.56 (m, 8H).

Step 3: synthesis of compound 14

In a three-necked reactor equipped with a thermometer, 0.944 g (0.934 mmol) of intermediate L synthesized in step 2, 0.279 g (1.12 mmol) of intermediate C synthesized in step 1 of Synthesis Example 2, 0.02 g of 2,6-di-t-butyl-p-cresol, and 15 ml of THF were dissolved under a nitrogen stream. 44 mg (0.189 mmol) of (+)-10-camphorsulfonic acid and 2 ml of ethanol were added to this solution, and the solution was heated to 40 °C and reacted for 5 hr. After the completion of the reaction, 100 ml of distilled water and 15 ml of saturated brine were added to the reaction solution, and extracted twice with 100 ml of ethyl acetate. The obtained organic layer was dried with anhydrous sodium sulfate, and sodium sulfate was filtered. The filtrate was concentrated using a rotary evaporator, and then the obtained solid was dissolved in 10 ml of chloroform. 150 ml of methanol was added to the solution to precipitate and filter crystals. The filtered crystals were washed with methanol and then vacuum dried, thus obtaining 0.986 g of compound 14 as a pale yellow solid (yield: 80 mol%).

The structure of the target compound was identified by $^1$H-NMR. The results are as follows.

$^1$H-NMR (500MHz, DMSO-$d_6$, TMS, δppm): 7.75 (d, 1H, J=2.5Hz), 7.65-7.71 (m, 3H), 7.34 (dd, 1H, J=1.0Hz, 7.5Hz), 7.17 (dd, 1H, J=1.0Hz, 7.5Hz), 7.07-7.14 (m, 2H), 6.99 (d, 2H, J=9.0Hz), 6.98 (d, 2H, J=9.0Hz), 6.88 (d, 2H, J=9.0Hz), 6.88 (d, 2H, J=9.0Hz), 6.41 (dd, 1H, J=1.5Hz, 17.5Hz), 6.40 (dd, 1H, J=1.5Hz, 17.5Hz), 6.13 (dd, 1H, J=10.5Hz, 17.5Hz), 6.11 (dd, 1H, J=10.5Hz, 17.5Hz), 5.83 (dd, 1H, J=1.5Hz, 10.5Hz), 5.82 (dd, 1H, J=1.5Hz, 10.5Hz), 4.44 (t, 2H,

J=6.5Hz), 4.30 (t, 2H, J=7.5Hz), 4.18 (t, 2H, J=6.5Hz), 4.13 (t, 2H, J=6.5Hz), 3.95 (t, 2H, J=6.5Hz), 3.94 (t, 2H, J=6.5Hz), 2.54-2.74 (m, 6H), 2.25-2.40 (m, 8H), 1.62-1.84 (m, 18H), 1.28-1.56 (m, 14H), 0.90 (t, 3H, J=7.0Hz).

(Synthesis Example 15) synthesis of compound 15

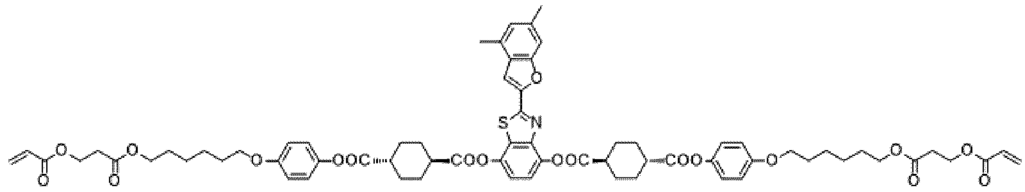

Compound 15

A four-necked reactor equipped with a thermometer was charged with 0.5 g (1.61 mmol) of intermediate 6 synthesized in step 6 of Synthesis Example 10 and 30 ml of chloroform under a nitrogen stream. 1.65 g (3.37 mmol) of intermediate 14 synthesized in step 4 of Synthesis Example 12 and 39.3 mg (0.32 mmol) of 4-dimethylaminopyridine were added to this solution, and cooled to 0 °C. After this, 486 mg (3.85 mmol) of N,N'-diisopropylcarbodiimide was added to the solution, and stirred at room temperature for 1 hr. After the completion of the reaction, the reaction solution was filtered using a filter medium precoated with a silica gel, and then concentrated under reduced pressure. 50 ml of methanol was added to the resulting residue, and the precipitated white solid was filtered. The filtered solid was vacuum dried, thus obtaining 1.20 g of compound 15 as a white solid (yield: 59.3 mol%).

The structure was identified by $^1$H-NMR. The results are as follows.

$^1$H-NMR (500MHz, $CDCl_3$, TMS, δppm): 7.54 (d, 1H, J=1.0Hz), 7.23 (s, 2H), 7.21 (s, 1H), 7.001 (d, 2H, J=9.0Hz), 6.996 (d, 2H, J=9.0Hz), 6.94 (s, 1H), 6.89 (d, 4H, J=9.0Hz), 6.41 (dd, 2H, J=1.5Hz, 17.5Hz), 6.11 (dd, 2H, J=10.5Hz, 17.5Hz), 5.83 (dd, 2H, J=1.5Hz, 10.5Hz), 4.44 (t, 4H, J=6.5Hz), 4.14 (t, 4H, J=6.5Hz), 3.95 (t, 4H, J=6.5Hz), 2.85 (tt, 1H, J=3.5Hz, 11.5Hz), 2.56-2.77 (m, 7H), 2.55 (s, 3H), 2.42-2.51 (m, 5H), 2.29-2.40 (m, 6H), 1.65-1.87 (m, 16H), 1.39-1.57 (m, 8H).

(Synthesis Example 16) synthesis of compound 16

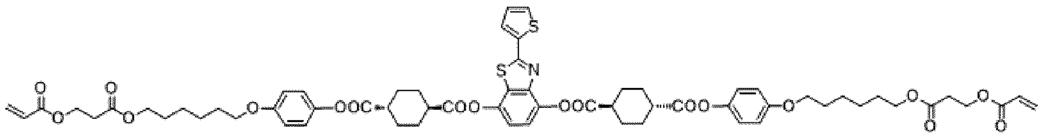

Compound 16

A four-necked reactor equipped with a thermometer was charged with 1.0 g (4.01 mmol) of intermediate 10 synthesized in step 4 of Synthesis Example 11 and 60 ml of chloroform under a nitrogen stream. 4.13 g (8.42 mmol) of intermediate 14 synthesized in step 4 of Synthesis Example 12 and 98 mg (0.80 mmol) of 4-dimethylaminopyridine were added to this solution, and cooled to 0 °C. After this, 1.21 g (9.58 mmol) of N,N'-diisopropylcarbodiimide was added to the solution, and stirred at room temperature for 1 hr. After the completion of the reaction, the reaction solution was filtered using a filter medium precoated with a silica gel, and then concentrated under reduced pressure. 100 ml of methanol was added to the resulting residue, and the precipitated white solid was filtered. The filtered solid was vacuum dried, thus obtaining 3.51 g of compound 16 as a white solid (yield: 73.3 mol%).

The structure was identified by $^1$H-NMR. The results are as follows.

$^1$H-NMR (500MHz, $CDCl_3$, TMS, δppm): 7.64 (dd, 1H, J=1.0Hz, 3.5Hz), 7.52 (dd, 1H, J=1.0Hz, 5.0Hz), 7.18 (s, 2H), 7.13 (dd, 1H, J=3.5Hz, 5.0Hz), 6.994 (d, 2H, J=9.0Hz), 6.988 (d, 2H, J=9.0Hz), 6.88 (d, 4H, J=9.0Hz), 6.41 (dd, 2H, J=1.5Hz, 17.5Hz), 6.11 (dd, 2H, J=10.0Hz, 17.5Hz), 5.83 (dd, 2H, J=1.5Hz, 10.0Hz), 4.44 (t, 4H, J=6.5Hz), 4.13 (t,

4H, J=6.5Hz), 3.94 (t, 4H, J=6.5Hz), 2.80 (tt, 1H, J=3.5Hz, 11.5Hz), 2.55-2.73 (m, 7H), 2.42-2.45 (m, 2H), 2.29-2.35 (m, 6H), 1.63-1.89 (m, 16H), 1.41-1.54 (m, 8H).

(Synthesis Example 17) synthesis of compound 17

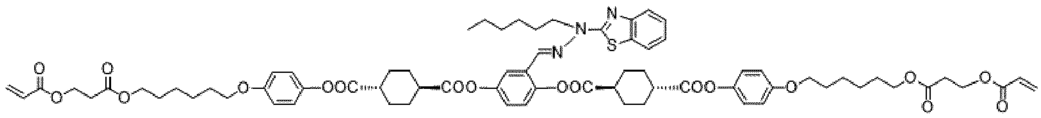

Compound 17

A three-necked reactor equipped with a thermometer was charged with 1.33 g (9.64 mmol) of 2,5-dihydroxybenzaldehyde and 150 ml of chloroform under a nitrogen stream. 11.81 g (24.07 mmol) of intermediate 14 synthesized in step 4 of Synthesis Example 12 and 118 mg (0.964 mmol) of 4-dimethylaminopyridine were added to this solution, and the solution was cooled to 0 °C. Subsequently, 3.65 g (28.88 mmol) of N,N'-diisopropylcarbodiimide was added to the solution, and stirred at room temperature for 2 hr. The reaction solution was cooled in an ice bath, and 2.88 g (11.57 mmol) of intermediate C synthesized in step 1 of Synthesis Example 2 and 19.1ml (19.09 mmol) of IN hydrochloric acid aqueous solution were added. The solution was then stirred at 40 °C for 3 hr. After the completion of the reaction, 500 ml of 10 mass% sodium bicarbonate water was added to the solution, and extracted twice with 500 ml of ethyl acetate. The organic layer was collected and dried with anhydrous sodium sulfate, and sodium sulfate was filtered. The solvent was removed using a rotary evaporator, and the residue was purified by silica gel column chromatography (toluene:ethyl acetate = 90:10 (volume ratio)), thus obtaining 9.11 g of compound 17 as a pale yellow solid (yield: 71.9 mol%).

The structure was identified by $^1$H-NMR. The results are as follows.

$^1$H-NMR (500MHz, DMSO-$d_6$, TMS, δppm): 7.75 (d, 1H, J=2.5Hz), 7.65-7.71 (m, 3H), 7.34 (dd, 1H, J=1.0Hz, 7.5Hz), 7.17 (dd, 1H, J=1.0Hz, 7.5Hz), 7.07-7.14 (m, 2H), 6.99 (d, 2H, J=9.0Hz), 6.98 (d, 2H, J=9.0Hz), 6.88 (d, 2H, J=9.0Hz), 6.88 (d, 2H, J=9.0Hz), 6.41 (dd, 1H, J=1.5Hz, 17.5Hz), 6.40 (dd, 1H, J=1.5Hz, 17.5Hz), 6.13 (dd, 1H, J=10.5Hz, 17.5Hz), 6.11 (dd, 1H, J=10.5Hz, 17.5Hz), 5.83 (dd, 1H, J=1.5Hz, 10.5Hz), 5.82 (dd, 1H, J=1.5Hz, 10.5Hz), 4.44 (t, 4H, J=6.5Hz), 4.30 (t, 2H, J=7.5Hz), 4.18 (t, 2H, J=6.5Hz), 4.13 (t, 2H, J=6.5Hz), 3.95 (t, 2H, J=6.5Hz), 3.94 (t, 2H, J=6.5Hz), 2.53-2.75 (m, 8H), 2.25-2.40 (m, 8H), 1.62-1.84 (m, 18H), 1.28-1.56 (m, 14H), 0.90 (t, 3H, J=7.0Hz).

(Synthesis Example 18) synthesis of mixture 1

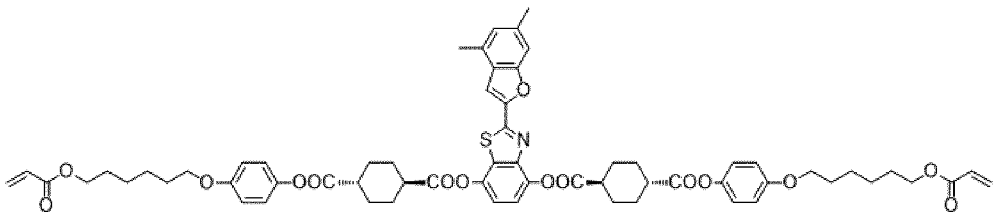

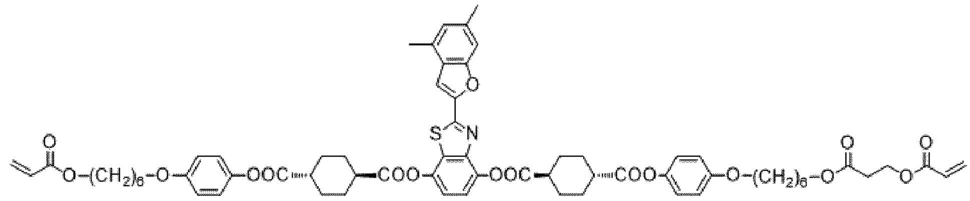

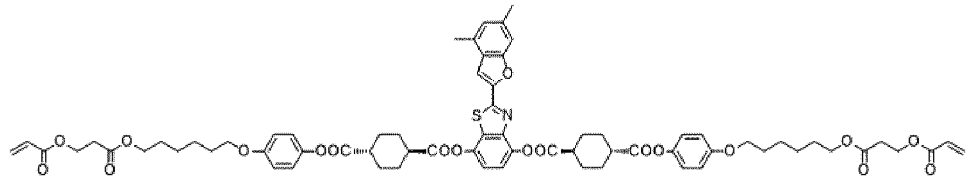

Mixture 1

A four-necked reactor equipped with a thermometer was charged with 3.00 g (9.64 mmol) of intermediate 6 synthesized in step 6 of Synthesis Example 10 and 150 ml of chloroform under a nitrogen stream. 7.63 g (18.24 mmol) of intermediate A synthesized in step 1 of Synthesis Example 1, 2.87 g (5.86 mmol) of intermediate 14 synthesized in step 4 of Synthesis Example 12, and 118 mg (0.964 mmol) of 4-dimethylaminopyridine were added to this solution, and cooled to 0 °C. After this, 2.92 g (23.12 mmol) of N,N'-diisopropylcarbodiimide was added to the solution, and stirred at room temperature for 2 hr. After the completion of the reaction, the reaction solution was filtered using a filter medium precoated with a silica gel, and then concentrated under reduced pressure. The resulting residue was purified by silica gel column chromatography (chloroform:ethyl acetate = 90:10 (volume ratio)), thus obtaining 8.5 g of mixture 1 as a white solid. As a result of analyzing the white solid by high-performance liquid chromatography, the content ratio (molar ratio) of the compounds contained in the white solid was as follows.

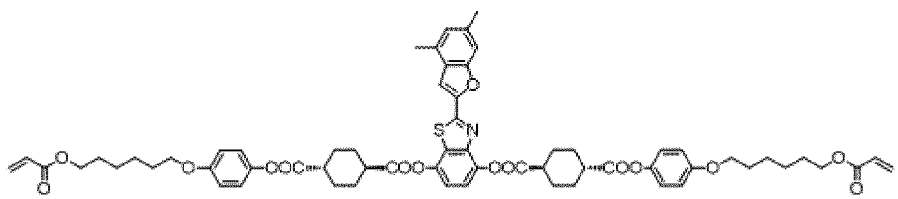

:

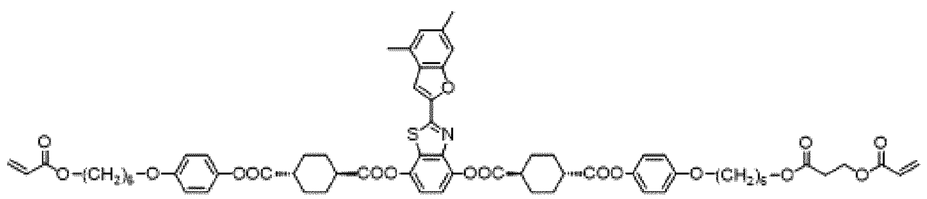

：

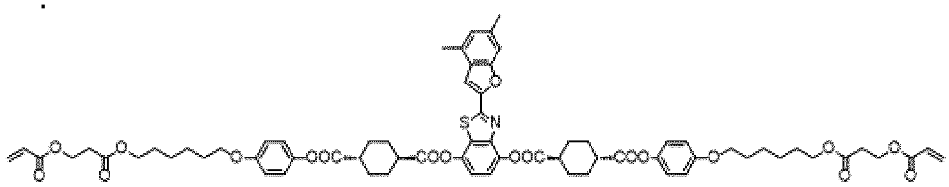

＝75．3：22．5：2．2

(Synthesis Example 19) synthesis of mixture 2

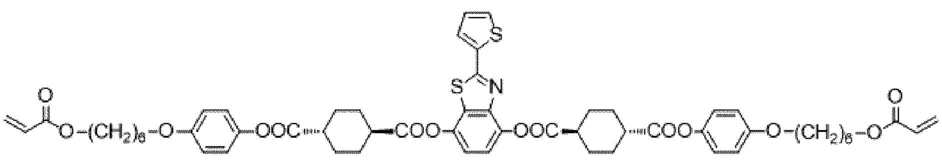

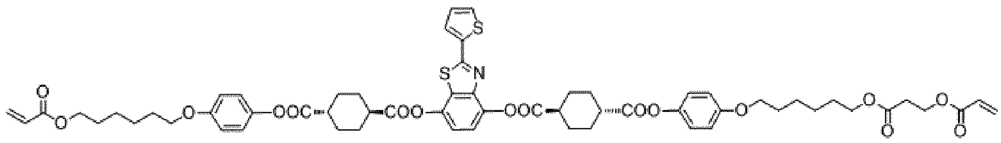

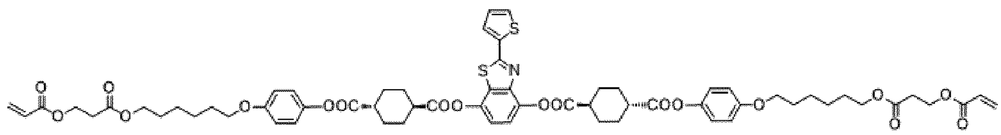

Mixture 2

A four-necked reactor equipped with a thermometer was charged with 2.4 g (9.64 mmol) of intermediate 10 synthesized in step 4 of Synthesis Example 11 and 150 ml of chloroform under a nitrogen stream. 7.63 g (18.24 mmol) of intermediate A synthesized in step 1 of Synthesis Example 1, 2.87 g (5.86 mmol) of intermediate 14 synthesized in step 4 of Synthesis Example 12, and 118 mg (0.964 mmol) of 4-dimethylaminopyridine were added to this solution, and cooled to 0 °C. After this, 1.82 g (14.5 mmol) of N,N'-diisopropylcarbodiimide was added to the solution, and stirred at room temperature for 2 hr. After the completion of the reaction, the reaction solution was filtered using a filter medium precoated with a silica gel, and then concentrated under reduced pressure. 250 ml of methanol was added to the resulting residue, and the precipitated solid was filtered. The resulting solid was vacuum dried, thus obtaining 7.5 g of mixture 2 as a white solid. As a result of analyzing the white solid by high-performance liquid chromatography, the content ratio (molar ratio) of the compounds contained in the white solid was as follows.

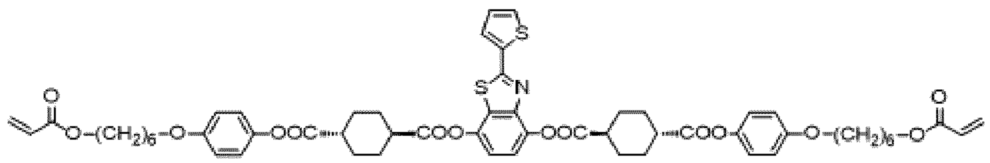

:

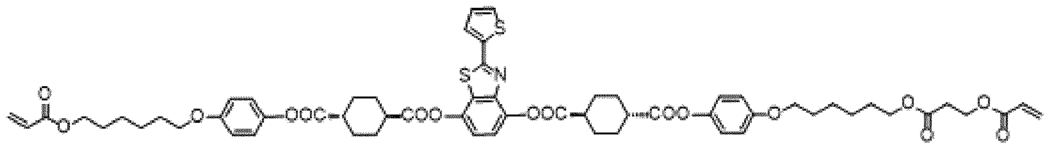

:

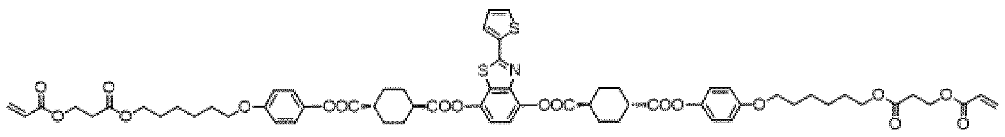

=76.3:21.1:2.6

(Synthesis Example 20) synthesis of mixture 3

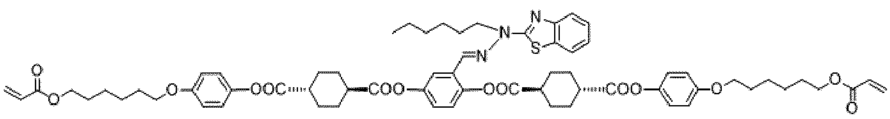

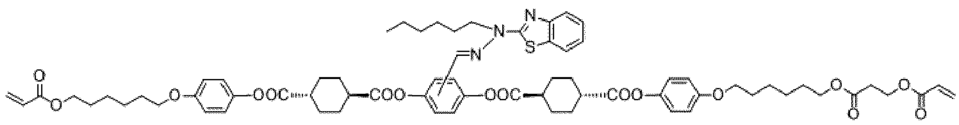

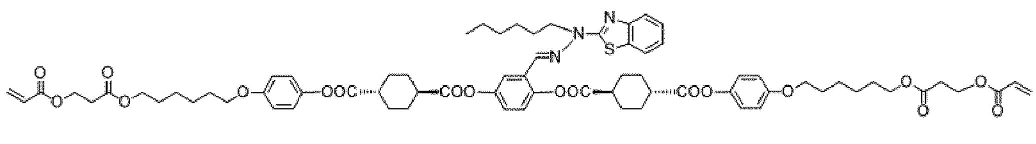

Mixture 3

A three-necked reactor equipped with a thermometer was charged with 1.33 g (9.64 mmol) of 2,5-dihydroxybenzaldehyde and 150 ml of chloroform under a nitrogen stream. 7.63 g (18.24 mmol) of intermediate A synthesized in step 1 of Synthesis Example 1, 2.87 g (5.86 mmol) of intermediate 14 synthesized in step 4 of Synthesis Example 12, and 118 mg (0.964 mmol) of 4-dimethylaminopyridine were added to this solution, and the solution was cooled to 0 °C. Subsequently, 1.82 g (14.5 mmol) of N,N'-diisopropylcarbodiimide was added to the solution, and stirred at room temperature for 2 hr. The reaction solution was cooled in an ice bath, and 2.88 g (11.57 mmol) of intermediate C synthesized in step 1 of Synthesis Example 2 and 19.1ml (19.09 mmol) of IN hydrochloric acid aqueous solution were added. The solution was then stirred at 40 °C for 3 hr. After the completion of the reaction, 500 ml of 10 mass% sodium bicarbonate water was added to the solution, and extracted twice with 500 ml of ethyl acetate. The organic layer was collected and dried with anhydrous sodium sulfate, and sodium sulfate was filtered. The solvent was removed using a rotary evaporator, and the residue was purified by silica gel column chromatography (toluene:ethyl acetate = 85:15 (volume ratio)), thus obtaining 9.88 g of mixture 3 as a pale yellow solid. As a result of analyzing the pale yellow solid by high-performance liquid chromatography, the content ratio (molar ratio) of the compounds contained in the pale yellow solid was as follows.

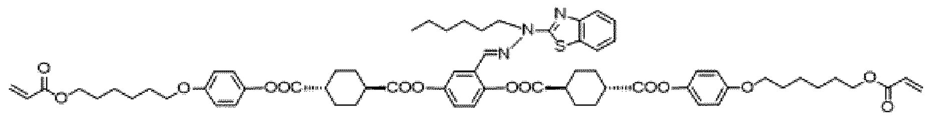

:

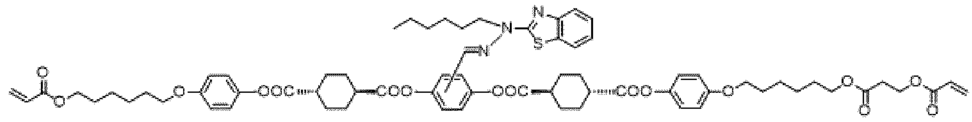

:

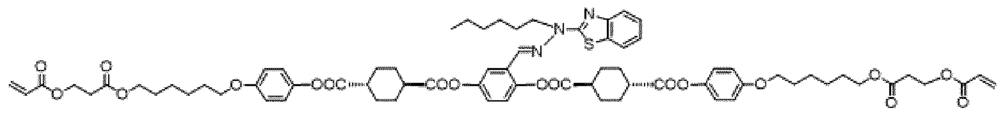

= 7 5 . 0 : 2 2 . 8 : 2 . 2

(Synthesis Example 21) synthesis of mixture 4

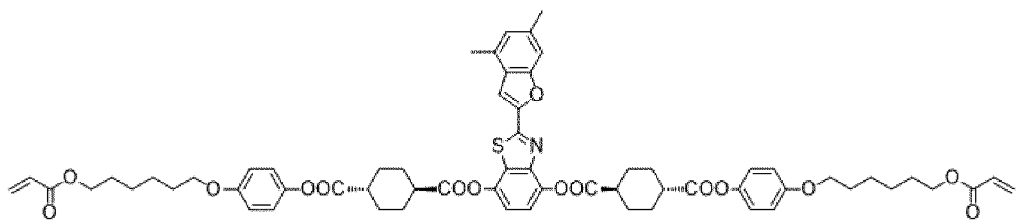

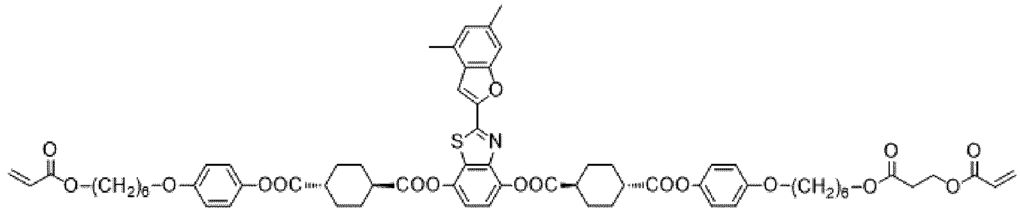

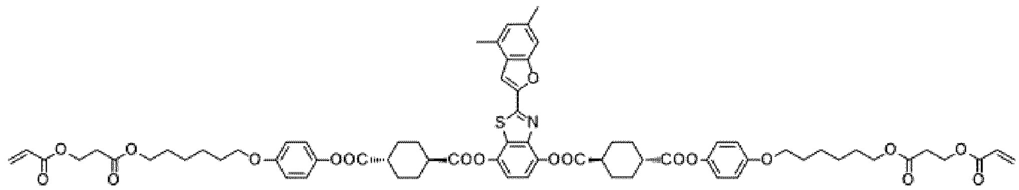

Mixture 4

A four-necked reactor equipped with a thermometer was charged with 3.00 g (9.64 mmol) of intermediate 6 synthesized in step 6 of Synthesis Example 10 and 150 ml of chloroform under a nitrogen stream. 2.87 g (5.86 mmol) of intermediate 14 synthesized in step 4 of Synthesis Example 12 and 29 mg (0.237 mmol) of 4-dimethylaminopyridine were added to this solution. After cooling the solution to 0 °C, 887 mg (7.03 mmol) of N,N'-diisopropylcarbodiimide was slowly added, and stirred at room temperature for 2 hr. 7.63 g (18.24 mmol) of intermediate A synthesized in step 1 of Synthesis Example 1 and 89 mg (0.73 mmol) of 4-dimethylaminopyridine were added to the obtained reaction solution, and the reaction solution was cooled to 0 °C. After this, 2.76 g (21.89 mmol) of N,N'-diisopropylcarbodiimide was added to the solution, and stirred at room temperature for 2 hr. After the completion of the reaction, the reaction solution was filtered using a filter medium precoated with a silica gel, and then concentrated under reduced pressure. The resulting residue was purified by silica gel column chromatography (chloroform:ethyl acetate = 90:10 (volume ratio)), thus obtaining

8.2 g of mixture 4 as a white solid. As a result of analyzing the white solid by high-performance liquid chromatography, the content ratio (molar ratio) of the compounds contained in the white solid was as follows.

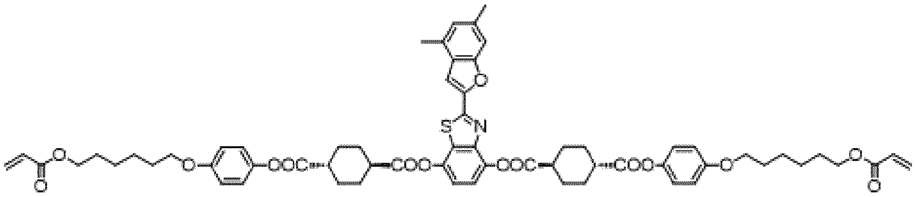

:

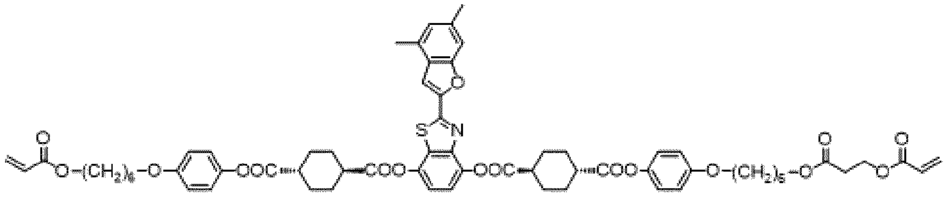

:

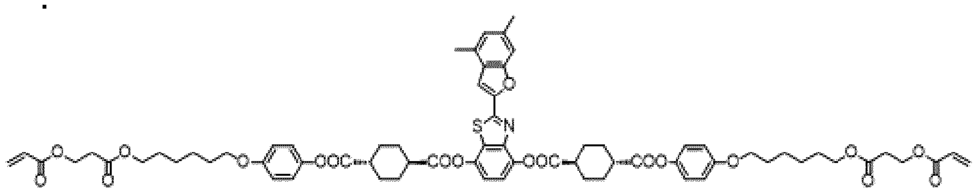

＝３１．２：６８．０：０．８

(Synthesis Example 22) synthesis of mixture 5

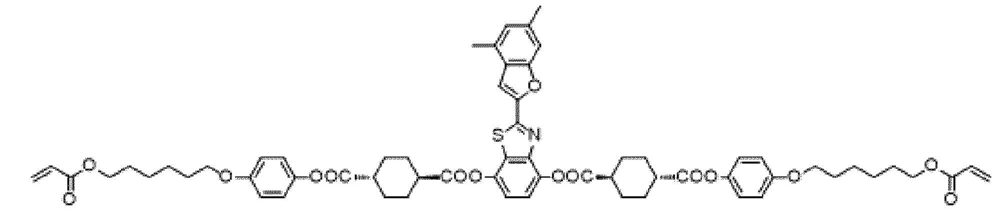

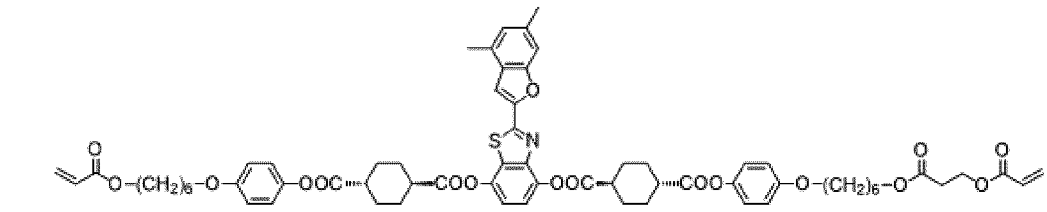

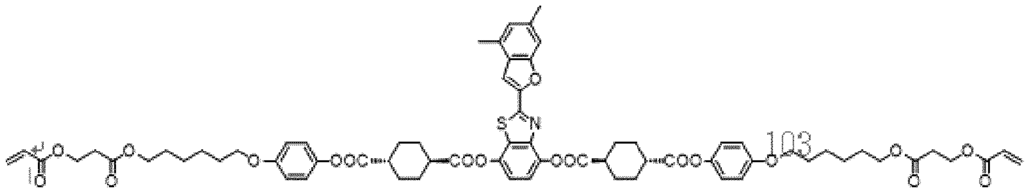

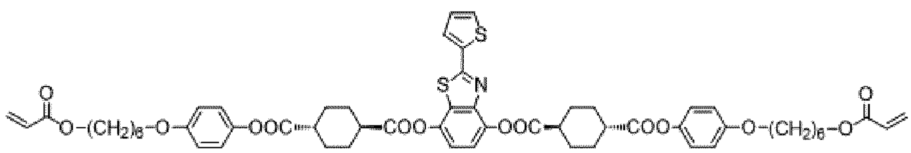

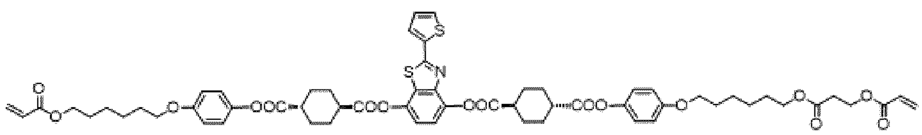

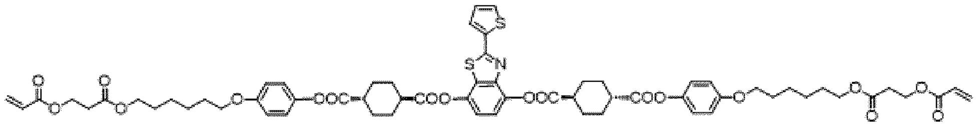

Mixture 5

A four-necked reactor equipped with a thermometer was charged with 2.22 g (7.13 mmol) of intermediate 6 synthesized in step 6 of Synthesis Example 10, 0.626 g (2.51 mmol) of intermediate 10 synthesized in step 4 of Synthesis Example 11, and 150 ml of chloroform under a nitrogen stream. 2.87 g (5.86 mmol) of intermediate 14 synthesized in step 4 of Synthesis Example 12 and 29 mg (0.237 mmol) of 4-dimethylaminopyridine were added to this solution. After cooling the solution to 0 °C, 887 mg (7.03 mmol) of N,N'-diisopropylcarbodiimide was slowly added, and stirred at room temperature for 2 hr. 7.63 g (18.24 mmol) of intermediate A synthesized in step 1 of Synthesis Example 1 and 89 mg (0.73 mmol) of 4-dimethylaminopyridine were added to the obtained reaction solution, and the reaction solution was cooled to 0 °C. After this, 2.76 g (21.89 mmol) of N,N'-diisopropylcarbodiimide was added to the solution, and stirred at room temperature for 2 hr. After the completion of the reaction, the reaction solution was filtered using a filter medium precoated with a silica gel, and then concentrated under reduced pressure. The resulting residue was purified by silica gel column chromatography (chloroform:ethyl acetate = 90:10 (volume ratio)), thus obtaining 8.8 g of mixture 5 as a white solid. As a result of analyzing the white solid by high-performance liquid chromatography, the content ratio (molar ratio) of the compounds contained in the white solid was as follows.

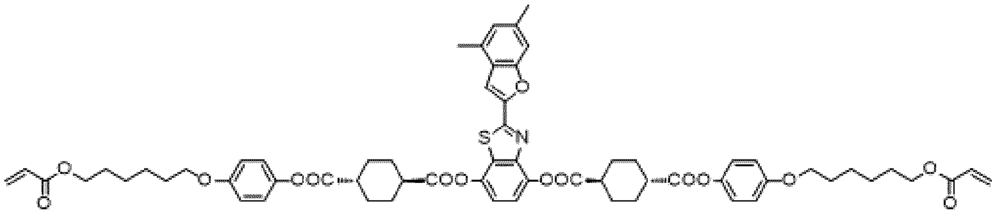

:

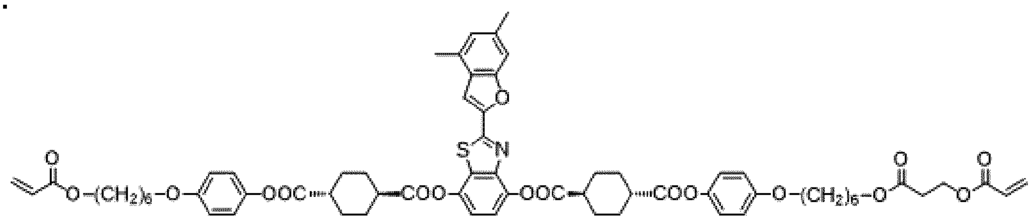

:

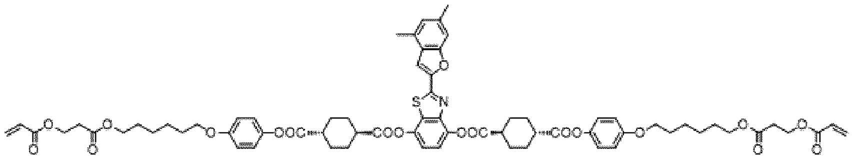

:

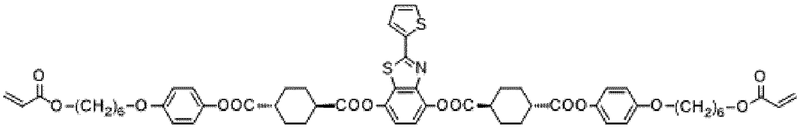

:

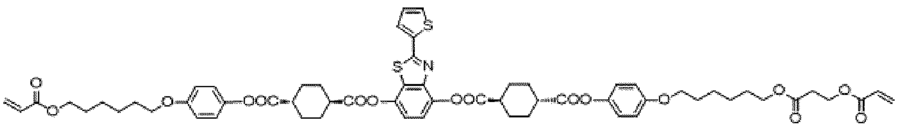

:

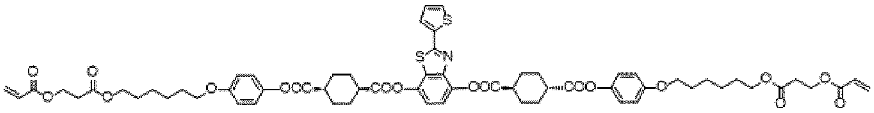

＝２３．４：５０．６：０．４：８．０：１７．２：０．４

(Examples 1 to 66, Comparative Examples 1 to 15)

Compounds 1 to 17 and mixtures 1 to 5 obtained in Synthesis Examples 1 to 22 were each dissolved in 79.49 mass% of cyclopentanone together with 0.61 mass% of BYK316N as a polymerization initiator and 0.02 mass% of Irgacure #819 as a leveling agent in the proportions shown in Tables 1 to 5. The resulting solution was filtered through a disposable filter with a pore size of 0.45 μm, to obtain polymerizable liquid crystal compositions 1 to 66 and 1r to 15r.

<Evaluation of stability of liquid crystal phase>

(i) Formation of liquid crystal layer using polymerizable liquid crystal composition

Using a #4 wire bar coater, each of polymerizable liquid crystal compositions 1 to 66 and 1r to 15r was applied to a transparent glass substrate with a rubbed polyimide alignment film (product name: alignment treated glass substrate

(produced by E.H.C Co., Ltd.)). The resulting coating film was dried for 1 min at the temperature shown in Tables 1 to 5 and subjected to alignment treatment for 1 min at the temperature shown in Tables 1 to 5 to form a liquid crystal layer (thickness: about 2 μm).

(ii) Formation of optically anisotropic product and measurement of photopolymerization sensitivity

Each liquid crystal layer produced in section (i) above was irradiated with (exposed to) UV light at 500 mJ/cm$^2$ per irradiation at the temperature shown in Tables 1 to 5 from the coated surface side to effect polymerization. Tackiness (surface tackiness) was checked by touching with fingertips. In the case where there was tackiness, the liquid crystal layer was again irradiated with UV light at 500 mJ/cm$^2$ to effect polymerization, and tackiness was checked by the same method. UV light irradiation was repeated until there was no tackiness. The results are summarized in Tables 1 to 5. Thus, each optically anisotropic product with a transparent glass substrate was yielded.

<Measurement of optical properties>

For each optically anisotropic product with a transparent glass substrate obtained in section (ii) above, the phase differences between 245.9 nm and 998.4 nm were measured using an ellipsometer (M2000U produced by J.A. Woollam). Moreover, wavelength dispersibility was evaluated based on α and β values calculated as described below using the measured phase differences. The results are shown in Tables 1 to 5.

$$\alpha = (\text{phase difference at 449.9 nm})/(\text{phase difference at 548.5 nm})$$

$$\beta = (\text{phase difference at 650.2 nm})/(\text{phase difference at 548.5 nm}).$$

In the case where the optically anisotropic product exhibits ideal wavelength dispersibility showing a broad band property, i.e. reverse wavelength dispersibility, α value is less than 1 and β value is greater than 1. In the case where the optically anisotropic product exhibits flat wavelength dispersibility, α value and β value are approximately equal. In the case where the optically anisotropic product exhibits typical (normal) wavelength dispersibility, α value is greater than 1 and β value is less than 1. That is, flat wavelength dispersibility with approximately equal α value and β value is preferable, and reverse wavelength dispersibility with α value of less than 1 and β value of greater than 1 is particularly preferable.

The thickness of the optically anisotropic product was measured as follows: an optically anisotropic product equipped with a transparent glass substrate was scratched with a needle, and the difference in level was measured by surface profiler DEKTAK150 (produced by ULVAC, Inc.).

[Table 1]

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure (mJ/cm$^2$) | Thickness (μm) | Re (548.5nm) | α | β |
|---|---|---|---|---|---|---|---|---|---|---|---|---|
| 1 | 1 | compound 1: compound 14 15.896:3.974 | 0.25 | 180 | 23 | 23 | 3 | 1500 | 1.57 | 98.07 | 0.862 | 1.044 |
| 2 | 2 | compound 1: compound 14 9.935:9.935 | 1 | | | | 2 | 1000 | 1.57 | 104.80 | 0.851 | 1.040 |
| 3 | 3 | compound 1: compound 14 3.974:15.896 | 4 | | | | 1 | 500 | 1.57 | 111.53 | 0.840 | 1.037 |
| 4 | 4 | compound 2: compound 14 15.896:3.974 | 0.25 | 120 | 23 | 23 | 3 | 1500 | 1.60 | 118.23 | 0.833 | 1.034 |
| 5 | 5 | compound 2: compound 14 9.935:9.935 | 1 | | | | 2 | 1000 | 1.60 | 118.30 | 0.833 | 1.034 |
| 6 | 6 | compound 2: compound 14 3.974:15.896 | 4 | | | | 1 | 500 | 1.60 | 118.23 | 0.833 | 1.034 |
| 7 | 7 | compound 3: compound 14 15.896:3.974 | 0.25 | 120 | 23 | 23 | 3 | 1500 | 1.50 | 116.06 | 0.884 | 1.036 |
| 8 | 8 | compound 3: compound 14 9.935:9.935 | 1 | | | | 2 | 1000 | 1.50 | 114.10 | 0.864 | 1.040 |
| 9 | 9 | compound 3: compound 14 3.974:15.896 | 4 | | | | 1 | 500 | 1.50 | 112.14 | 0.845 | 1.043 |

(continued)

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure ($mJ/cm^2$) | Thickness ($\mu m$) | Re (548.5nm) | α | β |
|---|---|---|---|---|---|---|---|---|---|---|---|---|
| 10 | 10 | compound 4: compound 14 15.896:3.974 | 0.25 | 120 | 23 | 23 | 3 | 1500 | 1.59 | 121.45 | 0.835 | 1.028 |
| 11 | 11 | compound 4: compound 14 9.935:9.935 | 1 | | | | 2 | 1000 | 1.59 | 119.41 | 0.834 | 1.030 |
| 12 | 12 | compound 4: compound 14 3.974:15.896 | 4 | | | | 1 | 500 | 1.59 | 117.37 | 0.833 | 1.032 |
| 13 | 13 | compound 5: compound 14 15.896:3.974 | 0.25 | 120 | 23 | 23 | 3 | 1500 | 1.67 | 123.28 | 0.839 | 1.028 |
| 14 | 14 | compound 5: compound 14 9.935:9.935 | 1 | | | | 2 | 1000 | 1.67 | 123.11 | 0.837 | 1.030 |
| 15 | 15 | compound 5: compound 14 3.974:15.896 | 4 | | | | 1 | 500 | 1.67 | 122.93 | 0.835 | 1.033 |

(continued)

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure (mJ/cm$^2$) | Thickness (μm) | Re (548.5nm) | α | β |
|---|---|---|---|---|---|---|---|---|---|---|---|---|
| 16 | 16 | compound 6: compound 14 15.896:3.974 | 0.25 | 130 | 70 | 65 | 3 | 1500 | 1.52 | 120.29 | 0.844 | 1.025 |
| 17 | 17 | compound 6: compound 14 9.935:9.935 | 1 | | | | 2 | 1000 | 1.52 | 117.30 | 0.840 | 1.028 |
| 18 | 18 | compound 6: compound 14 3.974:15.896 | 4 | | | | 1 | 500 | 1.52 | 114.31 | 0.836 | 1.032 |
| 19 | 19 | compound 7: compound 14 15.896:3.974 | 0.25 | 130 | 23 | 23 | 3 | 1500 | 1.49 | 112.48 | 0.837 | 1.024 |
| 20 | 20 | compound 7: compound 14 9.935:9.935 | 1 | | | | 2 | 1000 | 1.49 | 111.59 | 0.835 | 1.028 |
| 21 | 21 | compound 7: compound 14 3.974:15.896 | 4 | | | | 1 | 500 | 1.49 | 110.70 | 0.834 | 1.032 |

[Table 2]

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure ($mJ/cm^2$) | Thickness ($\mu m$) | Re (548.5nm) | $\alpha$ | $\beta$ |
|---|---|---|---|---|---|---|---|---|---|---|---|---|
| 22 | 22 | compound 8: compound 14 15.896:3.974 | 0.25 | 130 | 23 | 23 | 3 | 1500 | 1.51 | 126.11 | 0.889 | 1.016 |
| 23 | 23 | compound 8: compound 14 9.935:9.935 | 1 | | | | 2 | 1000 | 1.51 | 120.66 | 0.868 | 1.023 |
| 24 | 24 | compound 8: compound 14 3.974:15.896 | 4 | | | | 1 | 500 | 1.51 | 115.21 | 0.847 | 1.029 |
| 25 | 25 | compound 9: compound 14 15.896:3.974 | 0.25 | 130 | 23 | 23 | 3 | 1500 | 1.62 | 120.49 | 0.836 | 1.052 |
| 26 | 26 | compound 9: compound 14 9.935:9.935 | 1 | | | | 2 | 1000 | 1.62 | 121.99 | 0.840 | 1.045 |
| 27 | 27 | compound 9: compound 14 3.974:15.896 | 4 | | | | 1 | 500 | 1.62 | 123.37 | 0.845 | 1.038 |
| 28 | 28 | compound 2: compound 17 15.896:3.974 | 0.25 | 120 | 23 | 23 | 3 | 1500 | 1.60 | 118.23 | 0.833 | 1.034 |
| 29 | 29 | compound 2: compound 17 9.935:9.935 | 1 | | | | 2 | 1000 | 1.60 | 118.22 | 0.833 | 1.034 |
| 30 | 30 | compound 2: compound 17 3.974:15.896 | 4 | | | | 1 | 500 | 1.60 | 118.25 | 0.833 | 1.034 |

(continued)

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure (mJ/cm$^2$) | Thickness (μm) | Re (548.5nm) | α | β |
|---|---|---|---|---|---|---|---|---|---|---|---|---|
| 31 | 31 | compound 2: compound 12 15.896:3.974 | 0.25 | 120 | 100 | 100 | 4 | 2000 | 1.35 | 93.753 | 0.826 | 1.038 |
| 32 | 32 | compound 2: compound 12 9.935:9.935 | 1 | 140 | 140 | 140 | 3 | 1500 | 1.35 | 84.748 | 0.815 | 1.045 |
| 33 | 33 | compound 2: compound 12 3.974:15.896 | 4 | 140 | 140 | 140 | 2 | 1000 | 1.35 | 75.743 | 0.804 | 1.052 |
| 34 | 34 | compound 2: compound 13 14.9:4.97 | 0.334 | 120 | 100 | 100 | 3 | 1500 | 1.35 | 78.644 | 0.868 | 1.025 |
| 35 | 35 | compound 2: compound 16 14.9:4.97 | 0.334 | 120 | 100 | 100 | 3 | 1500 | 1.35 | 78.644 | 0.868 | 1.025 |
| 36 | 36 | compound 2: compound 15 15.896:3.974 | 0.25 | 120 | 100 | 100 | 4 | 2000 | 1.35 | 93.753 | 0.826 | 1.038 |
| 37 | 37 | compound 2: compound 15 9.935:9.935 | 1 | 140 | 140 | 140 | 3 | 1500 | 1.35 | 84.748 | 0.815 | 1.045 |
| 38 | 38 | compound 2: compound 15 3.974:15.896 | 4 | | | | 2 | 1000 | 1.35 | 75.743 | 0.804 | 1.052 |
| 39 | 39 | compound 10: compound 12 15.896:3.974 | 0.25 | 160 | 160 | 160 | 4 | 2000 | 1.35 | 69.74 | 0.797 | 1.056 |

(continued)

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure ($mJ/cm^2$) | Thickness (μm) | Re (548.5nm) | α | β |
|---|---|---|---|---|---|---|---|---|---|---|---|---|
| 40 | 40 | compound 10: compound 12 9.935:9.935 | 1 | 160 | 160 | 160 | 3 | 1500 | 1.35 | 69.74 | 0.797 | 1.056 |
| 41 | 41 | compound 10: compound 12 3.974:15.896 | 4 | 160 | 160 | 160 | 2 | 1000 | 1.35 | 69.74 | 0.797 | 1.056 |
| 42 | 42 | compound 10: compound 15 15.896:3.974 | 0.25 | 160 | 160 | 160 | 4 | 2000 | 1.35 | 69.74 | 0.797 | 1.056 |
| 43 | 43 | compound 10: compound 15 9.935:9.935 | 1 | 160 | 160 | 160 | 3 | 1500 | 1.35 | 69.74 | 0.797 | 1.056 |

[Table 3]

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure ($mJ/cm^2$) | Thickness (μm) | Re (548.5nm) | α | β |
|---|---|---|---|---|---|---|---|---|---|---|---|---|
| 44 | 44 | compound 10: compound 15 3.974:15.896 | 4 | 160 | 160 | 160 | 2 | 1000 | 1.35 | 69.74 | 0.797 | 1.056 |
| 45 | 45 | compound 10: compound 13 14.9:4.97 | 0.334 | 140 | 140 | 140 | 3 | 1500 | 1.35 | 73.55 | 0.839 | 1.029 |
| 46 | 46 | compound 10: compound 16 14.9:4.97 | 0.334 | 140 | 140 | 140 | 3 | 1500 | 1.35 | 73.55 | 0.839 | 1.029 |
| 47 | 47 | compound 10: compound 13: compound 16 14.9:2.485: 2.485 | 0.334 | 140 | 140 | 140 | 3 | 1500 | 1.35 | 73.55 | 0.839 | 1.029 |
| 48 | 48 | compound 11: compound 12 4.97:14.9 | 2.998 | 140 | 140 | 140 | 2 | 1000 | 1.35 | 73.55 | 0.839 | 1.029 |
| 49 | 49 | compound 11: compound 15 4.97:14.9 | 2.998 | 140 | 140 | 140 | 2 | 1000 | 1.35 | 73.55 | 0.839 | 1.029 |
| 50 | 50 | compound 10: compound 14 15.896:3.974 | 0.25 | 160 | 160 | 150 | 4 | 2000 | 1.35 | 75.74 | 0.804 | 1.052 |
| 51 | 51 | compound 10: compound 14 9.935:9.935 | 1 | 160 | 160 | 150 | 2 | 1000 | 1.35 | 84.75 | 0.815 | 1.045 |

(continued)

| Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure (mJ/cm$^2$) | Thickness (μm) | Re (548.5nm) | α | β |
|---|---|---|---|---|---|---|---|---|---|---|---|---|
| 52 | 52 | compound 10: compound 14 3.974:15.896 | 4 | 160 | 160 | 150 | 2 | 1000 | 1.35 | 93.75 | 0.826 | 1.038 |
| 53 | 53 | compound 10: compound 17 15.896:3.974 | 0.25 | 160 | 160 | 150 | 4 | 2000 | 1.35 | 75.74 | 0.804 | 1.052 |
| 54 | 54 | compound 10: compound 17 9.935:9.935 | 1 | 160 | 160 | 150 | 2 | 1000 | 1.35 | 84.75 | 0.815 | 1.045 |
| 55 | 55 | compound 10: compound 17 3.974:15.896 | 4 | 160 | 160 | 150 | 2 | 1000 | 1.35 | 93.75 | 0.826 | 1.038 |
| 56 | 56 | mixture 1 19.87 | 0.328 | 160 | 160 | 150 | 4 | 2000 | 1.35 | 69.74 | 0.797 | 1.056 |
| 57 | 57 | compound 10mixture 2: compound 13 14.9:1.988: 2.982 | 0.210 | 140 | 140 | 140 | 4 | 2000 | 1.35 | 73.55 | 0.839 | 1.029 |
| 58 | 58 | mixture 3 19.87 | 0.333 | 120 | 23 | 23 | 3 | 1500 | 1.60 | 118.23 | 0.833 | 1.034 |
| 59 | 59 | mixture 4 19.87 | 2.205 | 160 | 160 | 150 | 2 | 1000 | 1.35 | 69.74 | 0.797 | 1.056 |
| 60 | 60 | mixture 5 19.87 | 2.185 | 140 | 140 | 140 | 2 | 1000 | 1.35 | 73.55 | 0.839 | 1.029 |

[Table 4]

| Example No. | Polymerizable composition | Polymerizable compound or polymerizable mixture (mass%) | Structure of mixture | Drying temperature (°C) | Alignment treatment temperature (°C) | Temperature at exposure (°C) | Exposure (times) | Cumulative exposure ($mJ/cm^2$) | Thickness ($\mu m$) | Re (548.5nm) | $\alpha$ | $\beta$ |
|---|---|---|---|---|---|---|---|---|---|---|---|---|
| 61 | 61 | compound 12: compound 13 14.9:4.97 | mixture of two types of polymerizable compound (I) | 140 | 140 | 140 | 2 | 1000 | 1.35 | 73.55 | 0.839 | 1.029 |
| 62 | 62 | compound 12: compound 16 14.9:4.97 | mixture of two types of polymerizable compound (I) | 140 | 140 | 140 | 2 | 1000 | 1.35 | 73.55 | 0.839 | 1.029 |
| 63 | 63 | compound 13: compound 15 4.97:14.9 | mixture of two types of polymerizable compound (I) | 140 | 140 | 140 | 2 | 1000 | 1.35 | 73.55 | 0.839 | 1.029 |
| 64 | 64 | compound 15: compound 16 14.9:4.97 | mixture of two types of polymerizable compound (I) | 140 | 140 | 140 | 2 | 1000 | 1.35 | 73.55 | 0.839 | 1.029 |
| 65 | 65 | compound 13: compound 14 4.97:14.9 | mixture of two types of polymerizable compound (I) | 120 | 100 | 100 | 1 | 500 | 1.35 | 78.64 | 0.868 | 1.025 |
| 66 | 66 | compound 16: compound 17 14.9:14.9 | mixture of two types of polymerizable compound (I) | 120 | 100 | 100 | 1 | 500 | 1.35 | 78.64 | 0.868 | 1.025 |

[Table 5]

| Comparative Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure (mJ/cm$^2$) | Thickness (μm) | Re (548.5nm) | α | β |
|---|---|---|---|---|---|---|---|---|---|---|---|---|
| 1 | 1r | compound 2 19.87 | 0 | 120 | 23 | 23 | 5 | 2500 | 1.60 | 118.23 | 0.833 | 1.034 |
| 2 | 2r | compound 2: compound 14 19.042:0.828 | 0.0435 | | | | 5 | 2500 | 1.60 | 118.23 | 0.833 | 1.034 |
| 3 | 3r | compound 2: compound 17 19.042:0.828 | 0.0435 | | | | 5 | 2500 | 1.60 | 118.23 | 0.833 | 1.034 |
| 4 | 4r | compound 2: compound 12 19.042:0.828 | 0.0435 | 140 | 140 | 140 | 5 | 2500 | 1.35 | 98.51 | 0.831 | 1.035 |
| 5 | 5r | compound 2: compound 13 19.042:0.828 | 0.0435 | 120 | 100 | 100 | 5 | 2500 | 1.35 | 98.51 | 0.831 | 1.035 |
| 6 | 6r | compound 2: compound 15 19.042:0.828 | 0.0435 | 140 | 140 | 140 | 5 | 2500 | 1.35 | 98.51 | 0.831 | 1.035 |
| 7 | 7r | compound 2: compound 16 19.042:0.828 | 0.0435 | 120 | 100 | 100 | 5 | 2500 | 1.35 | 76.88 | 0.839 | 1.032 |
| 8 | 8r | compound 10 19.87 | 0 | 160 | 160 | 150 | 5 | 2500 | 1.35 | 69.74 | 0.797 | 1.056 |
| 9 | 9r | compound 10: compound 11 14.9:4.97 | 0 | 140 | 140 | 140 | 5 | 2500 | 1.35 | 73.55 | 0.841 | 1.029 |

(continued)

| Comparative Example No. | Polymerizable composition | Polymerizable compound or polymerizable mixture (mass%) | Content ratio (polymerizable compound (I)/ polymerizable compound (II)) | Drying temperature (°C) | Alignment treatment temperature (°C) | Temperature at exposure (°C) | Exposure (times) | Cumulative exposure ($mJ/cm^2$) | Thickness ($\mu m$) | Re (548.5nm) | $\alpha$ | $\beta$ |
|---|---|---|---|---|---|---|---|---|---|---|---|---|
| 10 | 10r | compound 10: compound 11: compound 13 14.9:4.142: 0.828 | 0.0435 | 140 | 140 | 140 | 5 | 2500 | 1.35 | 73.55 | 0.841 | 1.029 |
| 11 | 11r | compound 10: compound 11: compound 12 14.072:4.97: 0.828 | 0.0435 | | | | 5 | 2500 | 1.35 | 73.55 | 0.841 | 1.029 |
| 12 | 12r | compound 10: compound 11: compound 16 14.9:4.142: 0.828 | 0.0435 | | | | 5 | 2500 | 1.35 | 73.55 | 0.841 | 1.029 |
| 13 | 13r | compound 10: compound 11: compound 15 14.9:4.142: 0.828 | 0.0435 | | | | 5 | 2500 | 1.35 | 73.55 | 0.841 | 1.029 |
| 14 | 14r | compound 10: compound 14 19.042:0.828 | 0.0435 | 160 | 160 | 150 | 5 | 2500 | 1.35 | 70.99 | 0.798 | 1.055 |
| 15 | 15r | compound 10: compound 17 19.042:0.828 | 0.0435 | | | | 5 | 2500 | 1.35 | 70.99 | 0.798 | 1.055 |

As can be seen from Tables 1 to 5, with the polymerizable liquid crystal compositions containing compounds 12 to 17 in predetermined proportions, there was no tackiness even when the cumulative exposure was low. Such polymerizable liquid crystal compositions have higher sensitivity, with it being possible to improve productivity.

Moreover, the obtained optically anisotropic products all had $\alpha$ of less than 1 and $\beta$ of greater than 1. The optically anisotropic products thus maintain ideal wavelength dispersibility showing a broad band property, i.e. reverse wavelength dispersibility, even with the addition of compounds 12 to 17.

## Claims

**1.** A mixture of two or more types of polymerizable compounds, wherein the mixture:

contains a polymerizable compound (I) represented by the following Formula (I) and a polymerizable compound (II) represented by the following Formula (II), a content of the polymerizable compound (I) being more than 0.2 times a content of the polymerizable compound (II) by mass; or
contains two or more types of the polymerizable compound (I) represented by the following Formula (I) and does not substantially contain the polymerizable compound (II) represented by the following Formula (II),

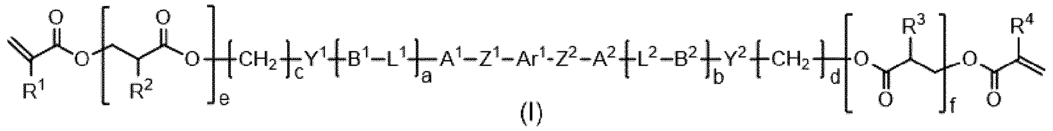
(I)

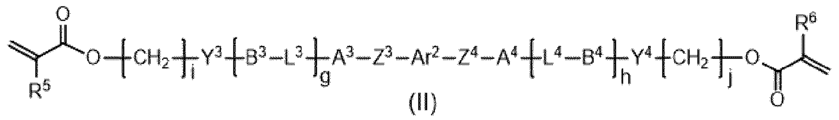
(II)

where $Ar^1$ and $Ar^2$ each independently represent a divalent aromatic hydrocarbon ring group having at least $D^1$ as a substituent or a divalent aromatic heterocyclic group having at least $D^1$ as a substituent,
$D^1$ represents an organic group with a carbon number of 1 to 67 having at least one aromatic ring selected from the group consisting of an aromatic hydrocarbon ring and an aromatic heterocyclic ring,
$Z^1$ to $Z^4$ each independently represent a single bond, -O-, -O-$CH_2$-, -$CH_2$-O-, -C(=O)-O-, -O-C(=O)-, -C(=O)-S-, -S-C(=O)-, -$NR^{21}$-C(=O)-, -C(=O)-$NR^{21}$-, -$CF_2$-O-, -O-$CF_2$-, -$CH_2$-$CH_2$-, -$CF_2$-$CF_2$-, -O-$CH_2$-$CH_2$-O-, -CH=CH-C(=O)-O-, -O-C(=O)-CH=CH-, -$CH_2$-$CH_2$-C(=O)-O-, -O-C(=O)-$CH_2$-$CH_2$-, -$CH_2$-$CH_2$-O-C(=O)-, -C(=O)-O-$CH_2$-$CH_2$-, -CH=CH-, -N=CH-, -CH=N-, -N=C($CH_3$)-, -C($CH_3$)=N-, -N=N-, or -C≡C-, and $R^{21}$ each independently represent a hydrogen atom or an alkyl group with a carbon number of 1 to 6,
$A^1$ to $A^4$ and $B^1$ to $B^4$ each independently represent a cyclic aliphatic group that may have a substituent or an aromatic group that may have a substituent,
$Y^1$ to $Y^4$ and $L^1$ to $L^4$ each independently represent a single bond, -O-, -C(=O)-, -C(=O)-O-, -O-C(=O)-, -$NR^{22}$-C(=O)-, -C(=O)-$NR^{22}$-, -O-C(=O)-O-, -$NR^{22}$-C(=O)-O-, -O-C(=O)-$NR^{22}$-, or -$NR^{22}$-C(=O)-$NR^{23}$-, and $R^{22}$ and $R^{23}$ each independently represent a hydrogen atom or an alkyl group with a carbon number of 1 to 6,
$R^1$ to $R^6$ each independently represent a hydrogen atom, a methyl group, or a chlorine atom,
a, b, g, and h each independently represent 0 or 1,
c, d, i, and j each independently represent an integer of 1 to 20,
one of e and f represents an integer of 1 to 3, and an other one of e and f represents an integer of 0 to 3, and in the case where a plurality of $R^2$ and $R^3$ are present, the plurality of $R^2$ and $R^3$ may be same or different.

**2.** The mixture according to claim 1, wherein $Ar^1$ and $Ar^2$ are each independently a group represented by any of the following Formulas (III-1) to (III-3):

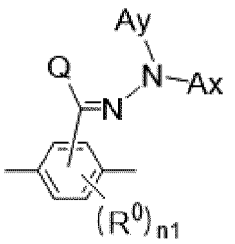

(III-1)

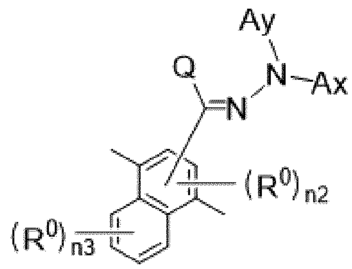

(III-2)

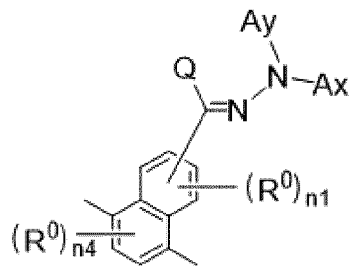

(III-3)

where Ax represents an organic group having at least one aromatic ring selected from the group consisting of an aromatic hydrocarbon ring with a carbon number of 6 to 30 and an aromatic heterocyclic ring with a carbon number of 2 to 30, and the aromatic ring of Ax may have a substituent,
Ay represents a hydrogen atom or an organic group with a carbon number of 1 to 30 that may have a substituent,
Q represents a hydrogen atom or an alkyl group with a carbon number of 1 to 6,
$R^0$ represents a halogen atom, a cyano group, an alkyl group with a carbon number of 1 to 6, an alkenyl group with a carbon number of 2 to 6, an alkyl halide group with a carbon number of 1 to 6, an N,N-dialkylamino group with a carbon number of 2 to 12, an alkoxy group with a carbon number of 1 to 6, a nitro group, -C(=O)-$R^a$, -C(=O)-O-$R^a$, or $SO_2R^a$, and $R^a$ represents an alkyl group with a carbon number of 1 to 6, or an aromatic hydrocarbon ring group with a carbon number of 6 to 20 that may have an alkyl group with a carbon number of 1 to 6 or an alkoxy group with a carbon number of 1 to 6 as a substituent,
n1 represents an integer of 0 to 3, n2 represents 0 or 1, n3 represents an integer of 0 to 4, and n4 represents an integer of 0 to 2, and
in the case where a plurality of $R^0$ are present, the plurality of $R^0$ may be same or different.

3. The mixture according to claim 2, wherein $Ar^1$ and $Ar^2$ are each independently a group represented by any of the following Formulas (IV-1) to (IV-3) :

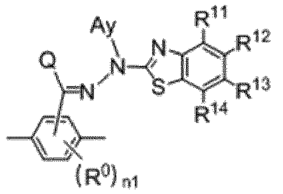

(IV-1)

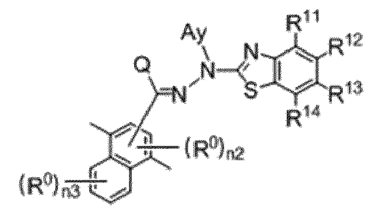

(IV-2)

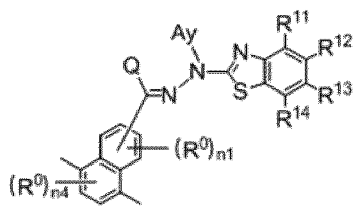

(IV-3)

where Ay, Q, $R^0$, n1, n2, n3, and n4 are as defined above, and
$R^{11}$ to $R^{14}$ each independently represent a hydrogen atom, a halogen atom, an alkyl group with a carbon number of 1 to 6, a cyano group, a nitro group, a fluoroalkyl group with a carbon number of 1 to 6, an alkoxy group with a carbon number of 1 to 6, or -C(=O)-O-$R^b$, $R^b$ represents an alkyl group with a carbon number of 1 to 20 that may have a substituent, an alkenyl group with a carbon number of 2 to 20 that may have a substituent, a cycloalkyl group with a carbon number of 3 to 12 that may have a substituent, or an aromatic hydrocarbon ring group with a carbon number of 5 to 12 that may have a substituent, and at least one of C-$R^{11}$ to C-$R^{14}$ forming a ring may be substituted by a nitrogen atom.

4. The mixture according to claim 1, wherein $Ar^1$ and $Ar^2$ are each independently a group represented by any of the following Formulas (V-1) to (V-4):

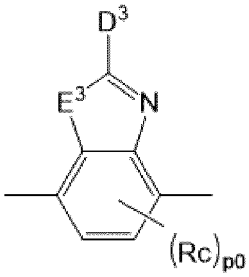

(V-1)

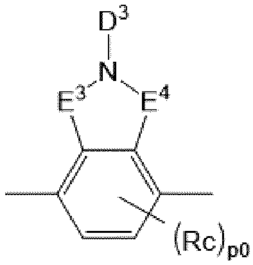

(V-2)

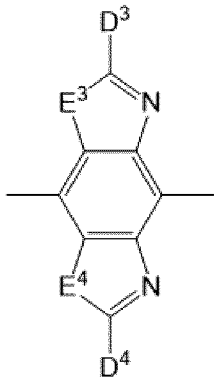

(V-3)

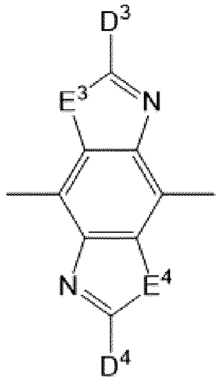

(V-4)

where $E^3$ and $E^4$ each independently represent $-CR^{24}R^{25}-$, -S-, $-NR^{24}-$, -C(=O)-, or -O-, and $R^{24}$ and $R^{25}$ each independently represent a hydrogen atom or an alkyl group with a carbon number of 1 to 4,
Rc represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p0 represents an integer of 0 to 2,
$D^3$ and $D^4$ each independently represent an aromatic hydrocarbon ring group that may have a substituent or an aromatic heterocyclic group that may have a substituent, and
in the case where a plurality of Rc are present, the plurality of Rc may be same or different.

**5.** The mixture according to claim 4, wherein $D^3$ and $D^4$ are each independently a group represented by any of the following Formulas (v-1) to (v-8):

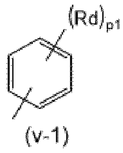

(v-1)

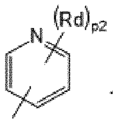

(v-2)

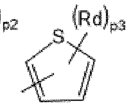

(v-3)

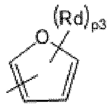

(v-4)

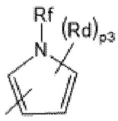

(v-5)

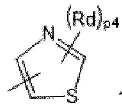

(v-6)

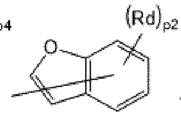

(v-7)

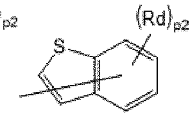

(v-8)

where Rd represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p1 represents an integer of 0 to 5, p2 represents an integer of 0 to 4, p3 represents an integer of 0 to 3, and p4 represents an integer of 0 to 2,
Rf represents a hydrogen atom or a methyl group, and
in the case where a plurality of Rd are present, the plurality of Rd may be same or different.

**6.** The mixture according to claim 4 or 5, wherein $Ar^1$ and $Ar^2$ are each independently a group represented by any of the following Formulas (VI-1) to (VI-5):

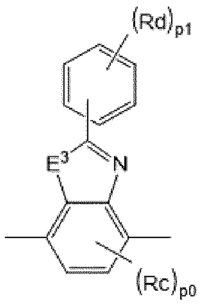
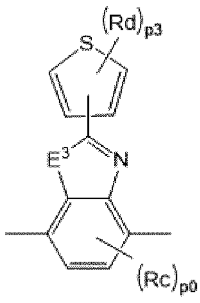
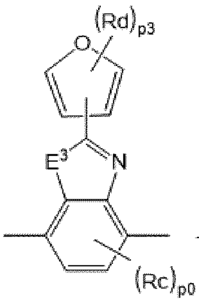
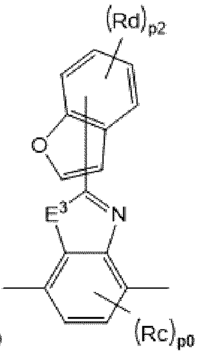
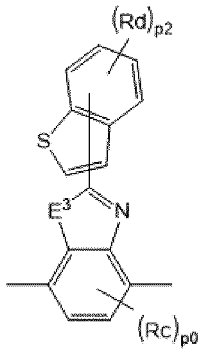

(VI-1) (VI-2) (VI-3) (VI-4) (VI-5)

where $E^3$, Rc, and p0 are as defined above,
Rd represents a halogen atom, an alkyl group with a carbon number of 1 to 6, a cyano group, a nitro group, an alkylsulfinyl group with a carbon number of 1 to 6, an alkylsulfonyl group with a carbon number of 1 to 6, a carboxyl group, a fluoroalkyl group with a carbon number of 1 to 6, an alkoxy group with a carbon number of 1 to 6, a thioalkyl group with a carbon number of 1 to 6, an N-alkylamino group with a carbon number of 1 to 6, an N,N-dialkylamino group with a carbon number of 2 to 12, an N-alkylsulfamoyl group with a carbon number of 1 to 6, or an N,N-dialkylsulfamoyl group with a carbon number of 2 to 12,
p1 represents an integer of 0 to 5, p2 represents an integer of 0 to 4, and p3 represents an integer of 0 to 3, and in the case where a plurality of Rc and Rd are present, the plurality of Rc and Rd may be same or different.

**7.** A mixture containing a compound (Ia) represented by the following Formula (Ia) and a compound (IIa) represented by the following Formula (IIa),
wherein a content of the compound (Ia) is more than 0.2 times a content of the compound (IIa) by mass,

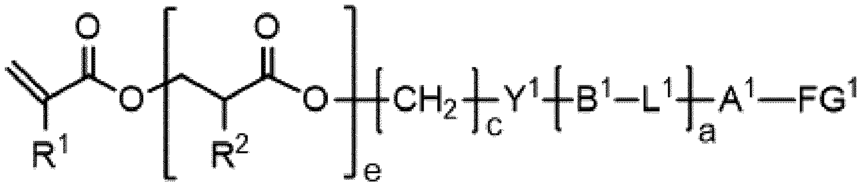

(Ia)

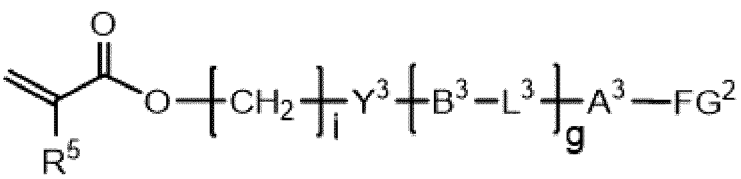

(IIa)

where $A^1$, $A^3$, $B^1$, and $B^3$ each independently represent a cyclic aliphatic group that may have a substituent or an aromatic group that may have a substituent,
$Y^1$, $Y^3$, $L^1$, and $L^3$ each independently represent a single bond, -O-, -C(=O)-, -C(=O)-O-, -O-C(=O)-, $-NR^{22}$-C(=O)-, -C(=O)-$NR^{22}$-, -O-C(=O)-O-, $-NR^{22}$-C(=O)-O-, -O-C(=O)-$NR^{22}$-, or $-NR^{22}$-C(=O)-$NR^{23}$-, and $R^{22}$ and $R^{23}$ each independently represent a hydrogen atom or an alkyl group with a carbon number of 1 to 6,
$R^1$, $R^2$, and $R^5$ each independently represent a hydrogen atom, a methyl group, or a chlorine atom,
$FG^1$ and $FG^2$ each independently represent a hydroxyl group, a carboxyl group, or an amino group,
a and g each independently represent 0 or 1,
c and i each independently represent an integer of 1 to 20,
e represents an integer of 1 to 3, and
in the case where a plurality of $R^2$ are present, the plurality of $R^2$ may be same or different.

**8.** The mixture according to claim 7, wherein $FG^1$ and $FG^2$ are a hydroxyl group, and
a and g are 0.

**9.** The mixture according to claim 7, wherein $FG^1$ and $FG^2$ are a carboxyl group, and a and g are 1.

**10.** A polymer obtainable by polymerization of the mixture according to any of claims 1 to 6.

**11.** An optical film comprising the polymer according to claim 10 as a constituent material.

**12.** An optically anisotropic product comprising a layer having the polymer according to claim 10 as a constituent material.

**13.** A polarizing plate comprising:

the optically anisotropic product according to claim 12; and
a polarizing film.

**14.** A display device comprising the polarizing plate according to claim 13.

**15.** An antireflection film comprising the polarizing plate according to claim 13.

**16.** A production method for a mixture, the production method comprising a step of causing esterification reaction or amidation reaction between the mixture according to any of claims 7 to 9 and a compound represented by the following Formula (VII),

$$FG^a\text{-}Ar\text{-}FG^b \qquad \text{(VII)}$$

where Ar represents a divalent aromatic hydrocarbon ring group having at least D as a substituent or a divalent aromatic heterocyclic group having at least D as a substituent,
D represents an organic group with a carbon number of 1 to 67 having at least one aromatic ring selected from the group consisting of an aromatic hydrocarbon ring and an aromatic heterocyclic ring, or $-C(=O)-R^{26}$, and $R^{26}$ represents a hydrogen atom or an alkyl group with a carbon number of 1 to 6, and
$FG^a$ and $FG^b$ each independently represent a hydroxyl group or a carboxyl group.

**17.** A production method for a mixture, the production method comprising:

a step (A) of causing esterification reaction or amidation reaction between a compound represented by the following Formula (VII) and less than 2.0 equivalents of a compound (Ia) represented by the following Formula (Ia), a compound (IIa) represented by the following Formula (IIa), or the mixture according to any of claims 7 to 9; and
a step (B) of, after the step (A) and without aftertreatment, causing esterification reaction or amidation reaction between a reaction product of the step (A) and a different one of the compound (Ia) represented by the following Formula (Ia), the compound (IIa) represented by the following Formula (IIa), and the mixture according to any of claims 7 to 9 from the step (A),
wherein a total usage of the compound (Ia), the compound (IIa), and the mixture with respect to the compound represented by the following Formula (VII) is 2.0 equivalents or more and 3.0 equivalents or less,

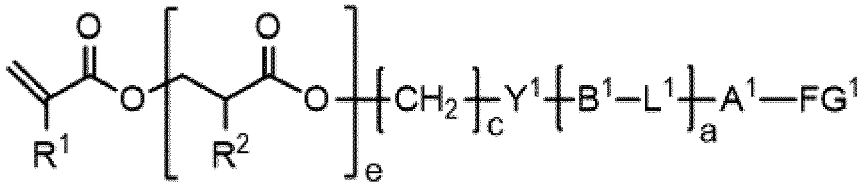

(Ia)

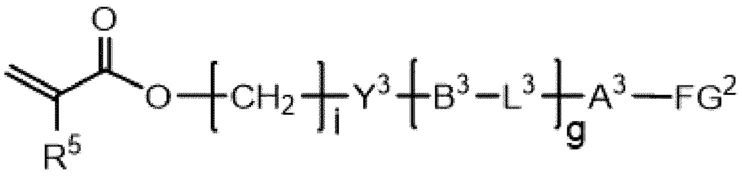

(I I a)

$FG^a$-Ar-$FG^b$ (VII)

where $A^1$, $A^3$, $B^1$, and $B^3$ each independently represent a cyclic aliphatic group that may have a substituent or an aromatic group that may have a substituent,
$Y^1$, $Y^3$, $L^1$, and $L^3$ each independently represent a single bond, -O-, -C(=O)-, -C(=O)-O-, -O-C(=O)-, $-NR^{22}$-C(=O)-, -C(=O)-$NR^{22}$-, -O-C(=O)-O-, $-NR^{22}$-C(=O)-O-, -O-C(=O)-$NR^{22}$-, or $-NR^{22}$-C(=O)-$NR^{23}$-, and $R^{22}$ and $R^{23}$ each independently represent a hydrogen atom or an alkyl group with a carbon number of 1 to 6,
$R^1$, $R^2$, and $R^5$ each independently represent a hydrogen atom, a methyl group, or a chlorine atom,
$FG^1$ and $FG^2$ each independently represent a hydroxyl group, a carboxyl group, or an amino group,
a and g each independently represent 0 or 1,
c and i each independently represent an integer of 1 to 20,
e represents an integer of 1 to 3,
in the case where a plurality of $R^2$ are present, the plurality of $R^2$ may be same or different,
Ar represents a divalent aromatic hydrocarbon ring group having at least D as a substituent or a divalent aromatic heterocyclic group having at least D as a substituent,
D represents an organic group with a carbon number of 1 to 67 having at least one aromatic ring selected from the group consisting of an aromatic hydrocarbon ring and an aromatic heterocyclic ring, or -C(=O)-$R^{26}$, and $R^{26}$ represents a hydrogen atom or an alkyl group with a carbon number of 1 to 6, and
$FG^a$ and $FG^b$ each independently represent a hydroxyl group or a carboxyl group.

**18.** The production method for a mixture according to claim 16 or 17, wherein two or more types of compounds that differ in structure from each other are used as the compound represented by the Formula (VII).

**INTERNATIONAL SEARCH REPORT**

International application No. PCT/JP2017/044935

A. CLASSIFICATION OF SUBJECT MATTER
Int. Cl. C08F220/26(2006.01)i, C08F220/38(2006.01)i, G02B5/30(2006.01)i, G02F1/1335(2006.01)i

According to International Patent Classification (IPC) or to both national classification and IPC

B. FIELDS SEARCHED

Minimum documentation searched (classification system followed by classification symbols)
Int. Cl. C08F220/26, C08F220/38, G02B5/30, G02F1/1335

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 11-080081 A (DAINIPPON INK AND CHEMICALS, INC.) 23 March 1999, claim 1, paragraph [0069] (Family: none) | 1-18 |
| A | JP 2011-162678 A (SUMITOMO CHEMICAL CO., LTD.) 25 August 2011, claim 1 (Family: none) | 1-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| | |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/044935

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-136652 A (ADEKA CORP.) 19 July 2012, claim 1 (Family: none) | 1-18 |
| P, X<br>P, A | JP 6055569 B1 (NIPPON ZEON CO., LTD.) 27 December 2016, claims 1-18 (Family: none) | 1-3, 10-15<br>4-9, 16-18 |
| P, A | JP 6137398 B1 (NIPPON ZEON CO., LTD.) 31 May 2017, claims 1-4 (Family: none) | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014010325 A1
- JP 2015200877 A
- JP 2010031223 A
- JP 2007002208 A
- JP 2009173893 A
- JP 2009274984 A
- JP 2010030979 A
- JP 2011006360 A
- JP 2010024438 A
- JP H05310845 A
- US 5179171 A
- JP H0597978 A
- US 5202388 A
- JP H11124429 A
- WO 9920676 A1


### Non-patent literature cited in the description


- **S.R. SANDLER.** March's Advanced Organic Chemistry. Wiley
- **W. KARO.** Organic Functional Group Preparations. Hirokawa Shoten